(19) **Europäisches Patentamt / European Patent Office / Office européen des brevets**

(11) **EP 4 664 783 A1**

(12) **EUROPEAN PATENT APPLICATION**
published in accordance with Art. 153(4) EPC

(43) Date of publication:
17.12.2025 Bulletin 2025/51

(21) Application number: 24753655.0

(22) Date of filing: 08.02.2024

(51) International Patent Classification (IPC):
$H04B\ 7/06\ ^{(2006.01)}$    $H04W\ 24/08\ ^{(2009.01)}$
$H04W\ 72/231\ ^{(2023.01)}$    $H04W\ 72/232\ ^{(2023.01)}$
$H04B\ 17/345\ ^{(2015.01)}$    $H04B\ 1/401\ ^{(2015.01)}$
$H04W\ 24/10\ ^{(2009.01)}$    $H04W\ 72/04\ ^{(2023.01)}$

(52) Cooperative Patent Classification (CPC):
H04L 5/14; H04B 1/401; H04B 7/06; H04B 7/0626;
H04B 17/345; H04B 17/346; H04L 5/00;
H04L 5/0048; H04L 5/0057; H04L 5/1469;
H04W 24/08; H04W 24/10; H04W 72/04;
H04W 72/231; H04W 72/232

(86) International application number:
PCT/KR2024/001885

(87) International publication number:
WO 2024/167334 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.02.2023 KR 20230017652
07.04.2023 KR 20230046370

(71) Applicant: Electronics and Telecommunications
Research Institute
Daejeon 34129 (KR)

(72) Inventor: NOH, Hoon Dong
Daejeon 34129 (KR)

(74) Representative: Betten & Resch
Patent- und Rechtsanwälte PartGmbB
Maximiliansplatz 14
80333 München (DE)

(54) **METHOD AND DEVICE FOR REPORTING CHANNEL STATE INFORMATION IN WIRELESS COMMUNICATION SYSTEM**

(57) A method of a terminal, according to one embodiment of the present disclosure, may comprise the steps of: receiving, from a base station, operation mode configuration information for a first operation mode and a second operation mode; receiving, from the base station, resource allocation information for reporting CSI measured on the basis of the operation mode configuration information; determining a CSI reference resource on the basis of preset CSI generation criteria; measuring a plurality of first pieces of CSI received from the base station on the basis of the operation mode configuration information; checking validity of the measured plurality of first pieces of CSI; and transmitting, to the base station, a CSI report reflecting a valid CSI measurement value on the basis of the checking.

【FIG. 27】

**Description**

[Technical Field]

The present disclosure relates to a wireless communication technique, and more particularly, to a technique for reporting a channel state in a wireless communication system.

[Background Art]

Radio resources in a mobile communication system can be utilized in various transmission modes to address different scenarios, including integrated access and backhaul (IAB) node operations, multiple transmission and reception point (multi-TRP) operations, and in-band or out-of-band full-duplex communication operations.

On the other hand, in the aforementioned mobile communication system, transceivers (or base stations or terminals) can operate with differences in time/frequency/space/power resources for the respective transmission modes, or according to instructions from the base station considering the respective transmission modes, aiming to improve wireless communication quality. This includes utilizing different numbers of antennas, antenna configurations, and transmission powers for the respective transmission modes. In 5G NR or 6G communication, there is an emerging need to dynamically vary various transmission modes for the purpose of extending wireless communication quality/capacity while ensuring robustness and resilience to various communication environments.

Meanwhile, even in the scenario where terminals are allocated a high proportion of uplink transmission time in the full-duplex communication system, there may be instances where reception of downlink signals, such as downlink control channels, is necessary during at least part of an allocated uplink transmission period. This necessity arises to accomplish various objectives, including cell-specific downlink reception, uplink-based channel estimation, and uplink beam change.

[Disclosure]

[Technical Problem]

The present disclosure for resolving the above-described needs is directed to providing methods of measuring and reporting channel state information to efficiently support dynamically varying transmission modes.

[Technical Solution]

A method of a terminal for achieving the above-described objective may comprise: receiving, from a base station, operation mode configuration information for a first operation mode and a second operation mode; receiving, from the base station, resource allocation information for reporting channel state information (CSI) measured based on the operation mode configuration information; determining a CSI reference resource based on a preconfigured CSI generation criterion; measuring first CSIs received from the base station based on the operation mode configuration information; identifying validity of the measured first CSIs; and transmitting a CSI report reflecting valid CSI measurement value(s) to the base station based on a result of the identifying, wherein the valid CSI may correspond to a case when an operation mode when performing measurement of the first CSIs is equal to an operation mode when reporting CSI based on the CSI reference resource.

The first operation mode may be one of a subband full duplex (SBFD) mode or a full-duplex (FD) mode, and the second operation mode may be one of a time-division duplex (TDD) mode or a frequency-division duplex (FDD).

In the first operation mode, the first CSIs may be measured in each of one or more subbands.

In the transmitting of the CSI report, when only some of the valid CSI measurement value(s) can be reported, valid CSI measurement value(s) to be transmitted may be determined based on predetermined priorities.

The method may further comprise: receiving, from the base station, first configuration information for configuring at least one of a channel measurement resource (CMR) or an interference measurement resource (IMR), wherein when the first configuration information indicates the CMR, each of the first CSIs may be configured as a non-zero-power (NZP) CSI-reference signal (RS), and when the first configuration information indicates the IMR, each of the first CSIs may be configured as a NZP CSI-RS or a zero-power (ZP) CSI-RS.

The method may further comprise: excluding invalid CSI measurement value(s) from the CSI report based on the result of the identifying, wherein the invalid measurement value(s) may correspond to a case where an operation mode when performing measurement of the CMRs or IMRs is different from an operation mode when transmitting the CSI report based on the CSI reference resource.

At least one of the CMRs or IMRs may be received periodically, semi-persistently, or aperiodically, and the CSI reports may be transmitted to the base station periodically, semi-persistently, or aperiodically.

A transport block size (TBS) for the CSI report may be determined based on at least one of a subband frequency resource or a subband time resource of an operation mode applied to the CSI reference resource.

A method of a base station, according to an exemplary embodiment of the present disclosure, may comprise: transmitting, to a terminal, operation mode configuration information for a first operation mode and a second operation mode; transmitting, to the terminal, resource allocation information for receiving a channel state information (CSI) report measured based on the operation mode configuration information; transmitting, to the terminal, first CSIs and a CSI reference resource based on the operation mode configuration information; and receiving a CSI report from the terminal based on the resource allocation information, wherein the first operation mode is one of a subband full duplex (SBFD) mode or a full-duplex (FD) mode, and the second operation mode is one of a time-division duplex (TDD) mode or a frequency-division duplex (FDD).

In the first operation mode, the first CSIs may be transmitted in each of one or more subbands.

The method may further comprise: transmitting, to the terminal, first configuration information for configuring at least one of a channel measurement resource (CMR) or an interference measurement resource (IMR), wherein when the first configuration information indicates the CMR, each of the first CSIs may be configured as a non-zero-power (NZP) CSI-reference signal (RS), and when the first configuration information indicates the IMR, each of the first CSIs may be configured as a NZP CSI-RS or a zero-power (ZP) CSI-RS.

At least one of the CMRs or IMRs may be transmitted to the terminal periodically, semi-persistently, or aperiodically, and the CSI reports may be received from the terminal periodically, semi-persistently, or aperiodically.

A terminal according to an exemplary embodiment of the present disclosure, may comprise: a processor, and the processor may cause the terminal to perform: receiving, from a base station, operation mode configuration information for a first operation mode and a second operation mode; receiving, from the base station, resource allocation information for reporting channel state information (CSI) measured based on the operation mode configuration information; determining a CSI reference resource based on a preconfigured CSI generation criterion; measuring first CSIs received from the base station based on the operation mode configuration information; identifying validity of the measured first CSIs; and transmitting a CSI report reflecting valid CSI measurement value(s) to the base station based on a result of the identifying, wherein the valid CSI may correspond to a case when an operation mode when performing measurement of the first CSIs is equal to an operation mode when reporting CSI based on the CSI reference resource.

The first operation mode may be one of a subband full duplex (SBFD) mode or a full-duplex (FD) mode, and the second operation mode may be one of a time-division duplex (TDD) mode or a frequency-division duplex (FDD).

The processor may further cause the terminal to perform: in the first operation mode, measuring the first CSIs in each of one or more subbands.

The processor may further cause the terminal to perform: in the transmitting of the CSI report, when only some of the valid CSI measurement value(s) can be reported, determining valid CSI measurement value(s) to be transmitted based on predetermined priorities.

The processor may further cause the terminal to perform: receiving, from the base station, first configuration information for configuring at least one of a channel measurement resource (CMR) or an interference measurement resource (IMR), wherein when the first configuration information indicates the CMR, each of the first CSIs may be configured as a non-zero-power (NZP) CSI-reference signal (RS), and when the first configuration information indicates the IMR, each of the first CSIs may be configured as a NZP CSI-RS or a zero-power (ZP) CSI-RS.

The processor may further cause the terminal to perform: excluding invalid CSI measurement value(s) from the CSI report based on the result of the identifying, wherein the invalid measurement value(s) may correspond to a case where an operation mode when performing measurement of the CMRs or IMRs is different from an operation mode when transmitting the CSI report based on the CSI reference resource.

The processor may further cause the terminal to perform: receiving at least one of the CMRs or IMRs periodically, semi-persistently, or aperiodically, and transmitting the CSI reports to the base station periodically, semi-persistently, or aperiodically.

A transport block size (TBS) for the CSI report may be determined based on at least one of a subband frequency resource or a subband time resource of an operation mode applied to the CSI reference resource.

[Advantageous Effects]

According to exemplary embodiments of the present disclosure, in an environment where multiple operation modes exist, resources for each mode can be configured. Furthermore, when resources for each mode are variable, a base station can provide configuration information for valid channel state reporting to a terminal, enabling the terminal to report valid channel state information to the base station. Consequently, the base station can ascertain accurate channel states through the valid channel state reporting. Based on this, wireless communication capacity between the terminal and the base station can be effectively expanded.

[Description of Drawings]

FIG. 1 is a conceptual diagram illustrating an exemplary embodiment of a radio interface protocol structure in a communication system.

FIG. 2 is a conceptual diagram illustrating an exemplary embodiment of time resources in which radio signals are transmitted in a communication system.

FIG. 3 is a conceptual diagram illustrating a time difference between a reception timing of an i-th downlink frame and a transmission timing of an i-th uplink frame in an exemplary embodiment of a communication system.

FIG. 4 is a conceptual diagram illustrating an exemplary embodiment of a time/frequency resource grid of a communication system.

FIG. 5 is a conceptual diagram illustrating an exemplary embodiment of a synchronization signal and physical broadcast channel (SS/PBCH) block of a communication system.

FIG. 6 is a sequence chart illustrating an exemplary embodiment of a random access procedure in a communication system.

FIG. 7 is a conceptual diagram illustrating a first exemplary embodiment of SSB-RO association according to RACH configuration in a communication system.

FIG. 8 is a conceptual diagram illustrating a second exemplary embodiment of SSB-RO association according to RACH configuration in a communication system.

FIG. 9 is a conceptual diagram illustrating an exemplary embodiment of a QCL information transfer process through TCI state configuration and indication in a communication system.

FIG. 10 is a conceptual diagram illustrating an exemplary embodiment of a TCI state activation/deactivation MAC CE in a communication system.

FIG. 11 is a conceptual diagram illustrating an exemplary embodiment of a TCI state indication MAC CE in a communication system.

FIG. 12 is a conceptual diagram illustrating slot configurations according to slot formats in a communication system.

FIG. 13 is a conceptual diagram illustrating an exemplary embodiment of an IAB network in a communication system.

FIG. 14 is a block diagram illustrating an exemplary embodiment of a functional split structure of a central unit (CU) and a distributed unit (DU) in a communication system.

FIG. 15 is a flowchart illustrating a first exemplary embodiment of a method for resource management of an IAB node in a communication system.

FIG. 16 is a sequence chart illustrating an exemplary embodiment of a UE capability reporting procedure in a communication system.

FIG. 17A is a conceptual diagram for describing a user plane protocol stack structure in a communication system.

FIG. 17B is a conceptual diagram for describing a control plane protocol stack structure in a communication system.

FIG. 18A is a conceptual diagram for describing a user plane protocol structure for carrier aggregation (CA) in a base station of a communication system.

FIG. 18B is a conceptual diagram for describing a user plane protocol structure for dual connectivity (DC) in a base station of a communication system.

FIG. 19A is a conceptual diagram for describing a case where both an MT and a DU of an IAB node are in the transmission mode.

FIG. 19B is a conceptual diagram for describing a case where both an MT and a DU of an IAB node are in the reception mode.

FIG. 19C is a conceptual diagram for describing a case where an MT of an IAB node is in the transmission mode and a DU thereof is in the reception mode.

FIG. 19D is a conceptual diagram for describing a case where an MT of an IAB node is the reception mode and a DU thereof is in the transmission mode.

FIG. 20 is a conceptual diagram for describing a method in which a base station allocates one or more operation modes within a resource period to a terminal.

FIG. 21 is a conceptual diagram for describing a method in which a base station allocates resources to a terminal according to an operation mode by using time-frequency resources.

FIG. 22 is a conceptual diagram for describing a method in which a base station allocates resources to a terminal according to an operation mode by using frequency-slots (or symbols).

FIG. 23 is a conceptual diagram for describing CSI reports for respective operation modes according to an exemplary embodiment of the present disclosure.

FIG. 24 is a sequence chart illustrating CSI resource configuration and report configuration, CSI request, operation mode configuration/activation/indication, and CSI reporting according to an exemplary embodiment of the present disclosure.

FIG. 25 is a flowchart of CSI resource configuration and report configuration, operation mode configuration/activation/indication, and CSI reporting depending on whether specific conditions are satisfied, according to an exemplary embodiment of the present disclosure.

FIG. 26 is a conceptual diagram for describing CSI reporting in a first operation mode according to an exemplary embodiment of the present disclosure.

FIG. 27 is a conceptual diagram for describing a case of CSI reporting in an environment where a first operation mode and a second operation mode coexist according to an exemplary embodiment of the present disclosure.

FIG. 28 is a conceptual diagram for describing a subband CSI reporting operation according to an exemplary embodiment of the present disclosure.

FIG. 29 is a block diagram illustrating a base station according to an exemplary embodiment of the present disclosure.

FIG. 30 is a block diagram illustrating a terminal according to an exemplary embodiment of the present disclosure.

[Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e. "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted.

A communication network to which exemplary embodiments according to the present disclosure are applied will be described. The communication network to which the exemplary embodiments according to the present disclosure are applied is not limited to the contents described below, and the exemplary embodiments according to the present disclosure may be applied to various communication networks. Here, the communication network may have the same meaning as a communication system. A communication network may refer to a wireless communication network, and a communication system may refer to a wireless communication system.

In the present disclosure, "configuration of an operation (e.g. transmission operation)" may refer to signaling of "control information (e.g. information element, parameter) for the operation" and/or "information indicating to perform the operation". "An information element (e.g. parameter) is configured" may mean that the corresponding information element is signaled. In the present disclosure, signaling may be at least one of system information (SI) signaling (e.g. transmission of a system information block (SIB) and/or master information block (MIB)), RRC signaling (e.g. transmission of RRC parameters and/or higher layer parameters), MAC control element (CE) signaling, or PHY signaling (e.g. transmission of downlink control information (DCI), uplink control information (UCI), and/or sidelink control information (SCI)).

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, beyond 5G (B5G) mobile communication network (e.g. 6G mobile communication network), or the like.

Throughout the present disclosure, a terminal may refer to a mobile station, mobile terminal, subscriber station, portable subscriber station, user equipment, access terminal, or the like, and may include all or a part of functions of the terminal, mobile station, mobile terminal, subscriber station, mobile subscriber station, user equipment, access terminal, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present disclosure, the base station may refer to an access point, radio access station, node B (NB), evolved node B (eNB), base transceiver station, mobile multi-hop relay (MMR)-BS, or the like, and may include all or part of functions of the base station, access point, radio access station, NB, eNB, base transceiver station, MMR-BS, or the like.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted.

In particular, the present disclosure described below provides methods for determining an uplink and/or downlink transmission direction of a terminal in a full-duplex communication system.

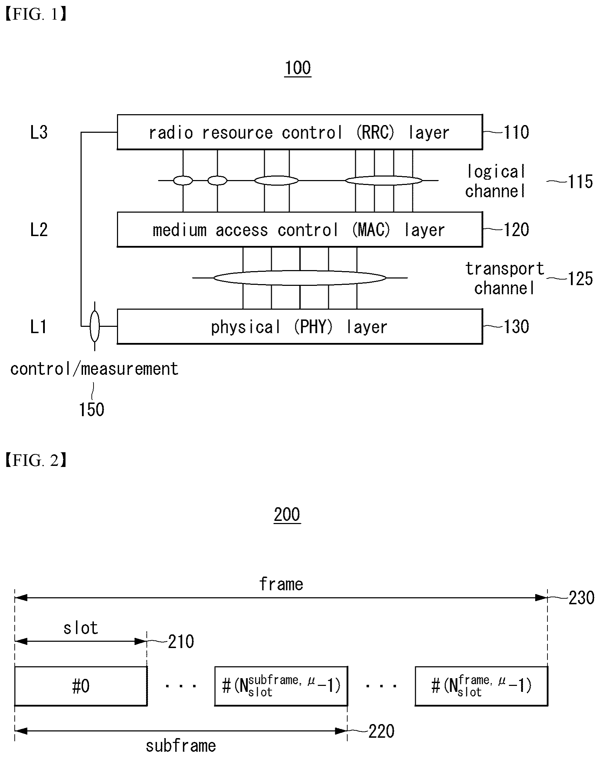

FIG. 1 is a conceptual diagram illustrating an exemplary embodiment of a radio interface protocol structure in a communication system.

Referring to FIG. 1, an exemplary embodiment of a radio interface protocol structure 100 of a communication system may be configured to include a radio resource control (RRC) layer 110, a medium access control (MAC) layer 120, a physical (PHY) layer 130, and the like. An exemplary embodiment of the radio interface protocol structure 100 shown in FIG. 1 may correspond to various exemplary embodiments of interfaces such as an interface between a terminal and a base station, an interface between an IAB-node distributed unit (IAB-DU) and an IAB-node mobile terminal (IAB-MT) of an integrated access backhaul (IAB) network, an interface between an IAB-DU and a lower node, an interface between an IAB-MT and an upper node, an interface between a plurality of terminals, and the like.

In the vicinity of the PHY layer 130, the RRC layer 110, and the MAC layer 120, and the like may be disposed above the PHY layer 130. For example, the MAC layer 120 may be disposed above the PHY layer 130. The RRC layer 110 may be disposed above the MAC layer 120.

The MAC layer 120 may be connected to a higher layer (e.g. RRC layer 110) through logical channels 115. The PHY layer 130 may be connected to the higher MAC layer 120 through transport channels 125. The PHY layer 130 may transmit and receive control information or measurement information 150 to and from the RRC layer 110.

The PHY layer 130 may be referred to as a 'layer 1' or 'L1'. The MAC layer 120 may be referred to as a 'layer 2' or 'L2'. The RRC layer 110 may be referred to as a 'layer 3' or 'L3'. The RRC layer 110 and the MAC layer 120 may be collectively referred to as the 'higher layer'.

In the present disclosure, 'L1 signaling' refers to signaling such as downlink control information (DCI) transmitted on a physical downlink control channel (PDCCH), uplink control information (UCI) transmitted on a physical uplink control channel (PUCCH), and sidelink control information (SCI) transmitted on a physical sidelink control channel (PSCCH), which are channels of the PHY layer 130. Similarly, in the present disclosure, 'higher layer signaling' may include L2 signaling transmitted through a MAC control element (CE), L3 signaling transmitted through RRC signaling, and the like.

In particular, for convenience of description, although omitted in FIG. 1 of the present disclosure, information that may be included in interfaces (e.g. F1, NG interfaces, etc.) between base stations or between base station components such as distributed units (DU) and central units (CU) may also be collectively referred to as higher layer signaling together with L2 signaling or L3 signaling.

In a communication system to which the 5G communication technology, etc. is applied, one or more of numerologies of Table 1 may be used in accordance with various purposes, such as inter-carrier interference (ICI) reduction according to frequency band characteristics, latency reduction according to service characteristics, and the like.

[Table 1]

| $\mu$ | $\Delta f = 2^{\mu} \cdot 15 \; [\mathrm{kHz}]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 1 is merely an example for the convenience of description, and exemplary embodiments of the numerologies used in the communication system may not be limited thereto. Each numerology $\mu$ may correspond to information of a subcarrier spacing (SCS) $\Delta f$ and a cyclic prefix (CP). The terminal may identify a numerology $\mu$ and a CP value applied to a downlink bandwidth part (BWP) or an uplink BWP based on higher layer parameters such as *subcarrierSpacing, cyclicPrefix,* and/or the like.

FIG. 2 is a conceptual diagram illustrating an exemplary embodiment of time resources in which radio signals are transmitted in a communication system.

Referring to FIG. 2, time resources in which radio signals are transmitted in a communication system 200 may be represented with a frame 220 comprising one or more $(N_{\mathrm{slot}}^{\mathrm{frame},\mu} / N_{\mathrm{slot}}^{\mathrm{subframe},\mu})$ subframes, a subframe 220 comprising one or more $(N_{\mathrm{slot}}^{\mathrm{subframe},\mu})$ slots, and a slot 210 comprising 14 $(N_{\mathrm{symb}}^{\mathrm{slot}})$ OFDM symbols. In this case, according to a configured numerology, as the values of $N_{\mathrm{symb}}^{\mathrm{slot}}$, $N_{\mathrm{slot}}^{\mathrm{subframe},\mu}$, and $N_{\mathrm{slot}}^{\mathrm{frame},\mu}$, values according to Table 2 below may be used in case of a normal CP, and values according to Table 3 below may be used in case of an extended CP. The OFDM symbols included within one slot may be classified into 'downlink', 'flexible', or 'uplink' by higher layer signaling or a combination of higher layer signaling and L1 signaling.

[Table 2]

| $\mu$ | $N_{\mathrm{symb}}^{\mathrm{slot}}$ | $N_{\mathrm{slot}}^{\mathrm{frame},\mu}$ | $N_{\mathrm{slot}}^{\mathrm{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3]

| $\mu$ | $N_{\mathrm{symb}}^{\mathrm{slot}}$ | $N_{\mathrm{slot}}^{\mathrm{frame},\mu}$ | $N_{\mathrm{slot}}^{\mathrm{subframe},\mu}$ |
|---|---|---|---|
| 2 | 12 | 40 | 4 |

In the 5G NR communication system, the frame 230 may have a length of 10 ms, and the subframe 220 may have a length of 1 ms. Each frame 230 may be divided into two half-frames having the same length, and the first half-frame (i.e. half-frame 0) may be composed of subframes #0 to #4, and the second half-frame (i.e. half-frame 1) may be composed of subframes #5 to #9. One carrier may include a set of frames for uplink (i.e. uplink frames) and a set of frames for downlink (i.e. downlink frames).

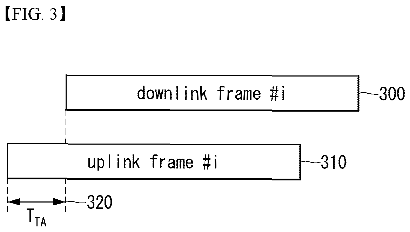

FIG. 3 is a conceptual diagram illustrating a time difference between a reception timing of an i-th downlink frame and a transmission timing of an i-th uplink frame in an exemplary embodiment of a communication system.

Referring to FIG. 3, a time difference between a reception timing of an i-th downlink frame 300 and a transmission timing of an i-th uplink frame 310 may be a TTA 320. Accordingly, the terminal may start transmission of the uplink frame #i 310 at a time earlier by TTA compared to the reception timing of the downlink frame #i 300. TTA may be referred to as a timing advance or timing adjustment TA. The base station may instruct the terminal to change a value of TTA through higher layer signaling or L1 signaling, and may configure the terminal to apply TTA in a manner defined as $T_{TA} = (N_{TA} + N_{TA,offset})$ $T_c$. In the case of 5G NR, $T_c$ may be defined as $T_c = \frac{1}{(\Delta f_{max} \cdot N_f)}$, $\Delta f_{max}$ may be defined as $\Delta f_{max} = 480$ *kHz*, $N_f$ may be defined as $N_f = 4096$, $N_{TA,offset}$ may be a value set by L3 signaling, and $N_{TA}$ may be a value determined by Equation 1 below by a value $T_A$ indicated by L2 signaling.

[Equation 1]

$$N_{TA} = \begin{cases} T_A \cdot 16 \cdot \dfrac{64}{2^\mu} & \text{(for random access response)} \\ N_{TA\_old} + \left((T_A - 31) \cdot 16 \cdot 64/2^\mu\right) & \text{(for other cases)} \end{cases}$$

Here, the description on $N_{TA,offset}$ and $N_{TA}$ may be an example for a specific situation, and various other options may exist, but in order not to obscure the gist of the description, all possible cases may not be listed in the present disclosure.

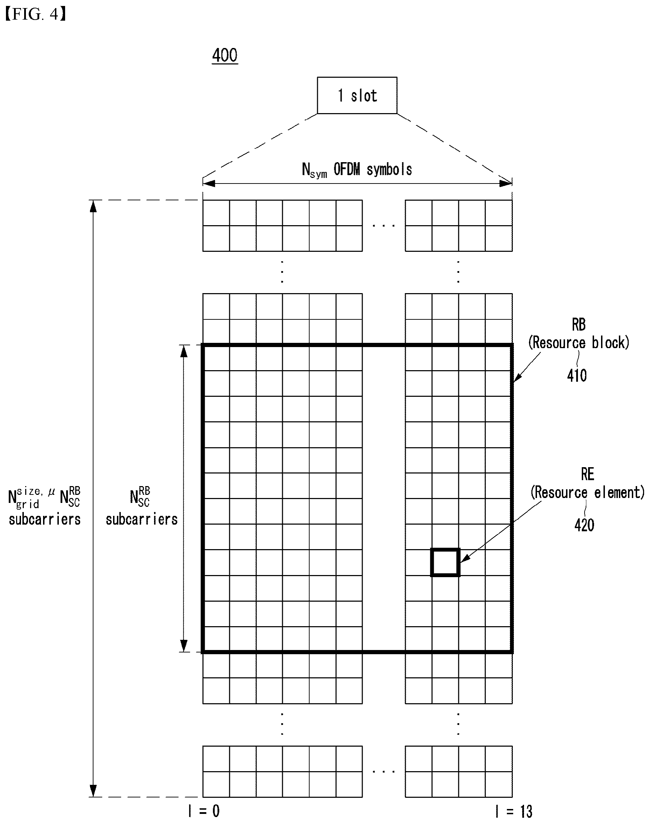

FIG. 4 is a conceptual diagram illustrating an exemplary embodiment of a time/frequency resource grid of a communication system.

Referring to FIG. 4, a time/frequency resource grid 400 of a communication system may have $N_{grid}^{size,\mu} N_{sc}^{RB}$ subcarriers and $N_{slot}^{subframe,\mu}$ OFDMs. The resource grid may be defined for each numerology and each carrier. In this case, $N_{grid}^{start,\mu}$ may mean a position of a common resource block (CRB) indicated by higher layer signaling. $N_{grid}^{size,\mu}$ may mean the number of resource blocks (RBs) starting from the CRB, that is, a carrier bandwidth. $N_{grid}^{start,\mu}$ and/or $N_{grid}^{size,\mu}$ may have different values for each link direction (e.g. uplink, downlink, or sidelink) or for each numerology $\mu$. Here, the numerology $\mu$ may be referred to by other terms, such as a SCS configuration, if necessary.

Each element in the resource grid for an antenna port p and a SCS configuration $\mu$ may be referred to as a resource element (RE) 420, and may be uniquely defined for each position $(k, l)_{p,u}$. In this case, $k$ may be a frequency axis index, and $l$ may indicate a symbol position on the time axis. RE$(k, l)_{p,\mu}$ may correspond to a physical resource used to transmit a physical channel or a signal complex value $a_{k,l}^{(p,\mu)}$. One RB 410 may be defined as consecutive $N_{sc}^{RB} = 12$ subcarriers on the frequency axis.

The 5G NR communication system has introduced the concept of BWPs in order to reduce high implementation complexity and power consumption of terminals due to the widened carrier bandwidth compared to the 3G/4G communication system. One BWP may be composed of contiguous CRBs, a starting RB position $N_{BWP,i}^{start,\mu}$ of the BWP and the number $N_{BWP,i}^{size,\mu}$ of RBs constituting the BWP may satisfy Equations 2 and 3.

[Equation 2]

$$N_{grid,x}^{start,\mu} \le N_{BWP,i}^{start,\mu} < N_{grid,x}^{start,\mu} + N_{grid,x}^{size,\mu}$$

[Equation 3]

$$N_{\mathrm{grid},x}^{\mathrm{start},\mu} < N_{\mathrm{BWP},i}^{\mathrm{start},\mu} + N_{\mathrm{BWP},i}^{\mathrm{size},\mu} \leq N_{\mathrm{grid},x}^{\mathrm{start},\mu} + N_{\mathrm{grid},x}^{\mathrm{size},\mu}$$

Up to four downlink BWPs within one component carrier (CC) may be configured for one terminal, and only one downlink BWP may be activated at a time. The terminal may not receive a physical downlink shared channel (PDSCH), a physical downlink control channel (PDCCH), a channel state information reference signal (CSI-RS), or the like outside the activated BWP.

Up to four uplink BWPs within one CC may be configured for one terminal, and only one uplink BWP may be activated at a time. The terminal may not transmit a physical uplink shared channel (PUSCH), a physical uplink control channel (PUCCH), a sounding reference signal (SRS), or the like outside the activated BWP.

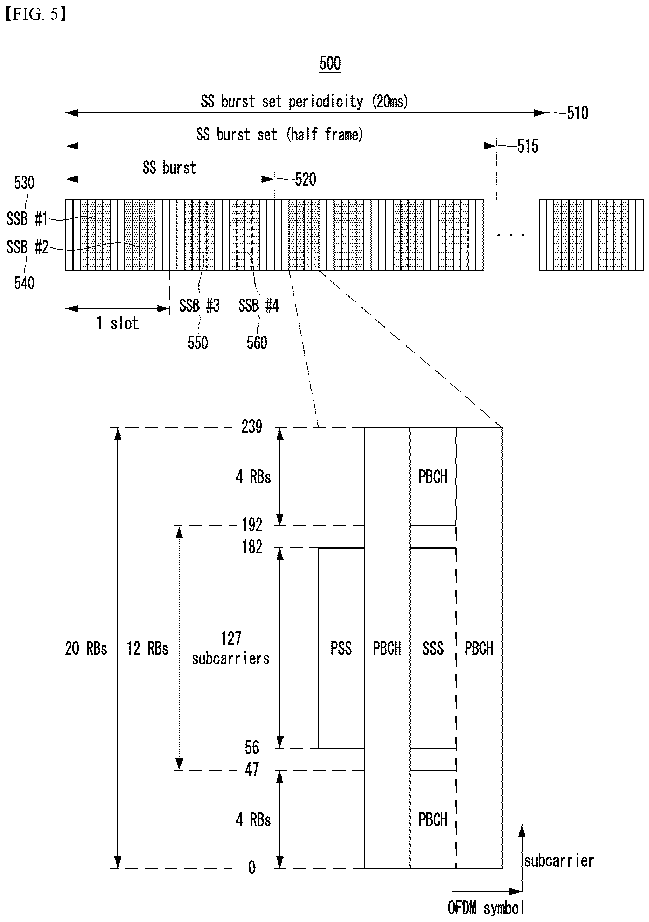

FIG. 5 is a conceptual diagram illustrating an exemplary embodiment of a synchronization signal and physical broadcast channel (SS/PBCH) block of a communication system.

Referring to FIG. 5, an SS/PBCH block 500 of a communication system may be configured with a primary synchronization signal (PSS) transmitted in 127 subcarriers in the middle of a first OFDM symbol, a secondary synchronization signal (SSS) transmitted in 127 subcarriers in the middle of a third OFDM symbol, and a physical broadcast channel (PBCH) transmitted in second, third, and fourth OFDM symbols. The PBCH occupying the widest bandwidth may be transmitted over 20 RBs, which may be 3.6 MHz based on 15 kHz SCS. The base station transmits one SSB by applying the same beam. When the number of base station antennas increases or it is necessary to operate multiple beams such as applying one or more analog beams for high frequency support, the base station may support a multi-beam operation by transmitting multiple SSBs. Here, the term 'beam' may be expressed in various terms such as a transmission precoding or a spatial transmission (TX) filter when applied in practice. However, in order not to obscure the gist of the description, 'beam' is used hereinafter as a unified term.

For example, the base station may transmit a plurality of SSBs 530, 540, 550, and 560 to represent a plurality of beams (e.g. beam #1, beam #2, beam #3, beam #4). In this case, it may be possible that one or more SSBs are transmitted within one slot according to a pattern predetermined according to each numerology. The SSBs 530, 540, 550, and 560 to which different beams are applied may be bundled into one set by being included in an SS burst 520. The terminal may assume a half-frame window having a length of 5 ms at the time of monitoring SSBs. An SS burst set 515 configured by higher layer signaling within a half-frame may include one or more SS bursts 520. If RRC configuration values are unknown or unavailable when performing initial access (IA), the terminal may receive or measure the SSBs assuming that a periodicity of the SS burst set 510 is 20 ms. As an example, the terminal may receive SSB(s) with reference to SSB configuration information identical or similar to that shown in Table 4 and Table 5.

[Table 4]

```
MIB ::=                    SEQUENCE {
     systemFrameNumber
     subCarrierSpacingCommon
     ssb-SubcarrierOffset      // SSB subcarrier offset (0~15)
     dmrs-TypeA-Position
     pdcch-ConfigSIB1
     cellBarred
     intraFreqReselection
     spare
}

MeasObjectNR ::=            SEQUENCE {
     ssbFrequency            // Absolute Radio Frequency Channel Number (ARFCN) of SSB
     ssbSubcarrierSpacing      // Numerology of SSB
     smtc1
          // first SSB measurement timing configuration (SMTC) configured with reference to SSB-MTC
     smtc2  // Second SMTC configured with reference to SSB-MTC
     ...
```

```
      ...
    }

SSB-Index                 // SSB index within SS-burst
```

[Table 5]

```
SSB-MTC ::=                    SEQUENCE {
              // timing occasion configuration for SSBs to be measured by terminal
         periodicityAndOffset           CHOICE {
     sf5       // offset when a SSB reception window has a legnth of 5 subframes
     sf10      // offset when a SSB reception window has a legnth of 10 subframes
     sf20      // offset when a SSB reception window has a legnth of 20 subframes
     sf40      // offset when a SSB reception window has a legnth of 40 subframes
     sf80      // offset when a SSB reception window has a legnth of 80 subframes
     sf160     // offset when a SSB reception window has a legnth of 160 subframes
     },
     duration     // a lengh of a SSB recepion window (number of subframes)
}


SSB-MTC2 ::=                   SEQUENCE {
     pci-List    // physical cell IDs (PCIs) following the SMTC configuration
     periodicity    // SMTC periodicity (number of subframes)
     }
}
```

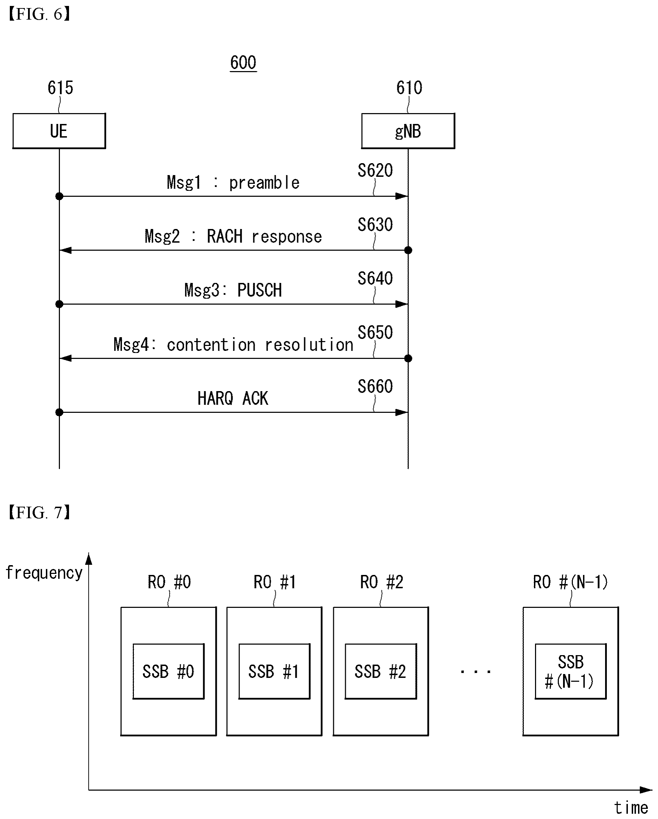

FIG. 6 is a sequence chart illustrating an exemplary embodiment of a random access procedure in a communication system.

Referring to FIG. 6, in a random access procedure of a communication system 600, a terminal 615 may transmit a physical random access channel (PRACH) preamble, and the PRACH preamble may be referred to as 'Msg1' (S620). Through a transmission of the PRACH preamble, random access-radio network temporary identifier (RA-RNTI) may be determined. In this case, the RA-RNTI may be calculated by Equation 4.

[Equation 4]

$$RA - RNTI = 1 + s_{id} + 14 \times t_{id} + 14 \times 80 \times f_{id} + 14 \times 80 \times 8 \times ul_{carrier_{id}}$$

In Equation 4, $s_{id}$ may be an index of a first OFDM symbol of a corresponding PRACH occasion (e.g.. $0 \leq s_{id} < 14$), $t_{id}$ may be an index of a first slot of the PRACH occasion within a system frame (e.g. $0 \leq t_{id} < 80$), $f_{id}$ may be an index of the PRACH occasion in the time domain (e.g. $0 \leq f_{id} < 8$), and $ul_{carrierid}$ may be a value according to a uplink carrier type used for the preamble transmission (e.g. 0 indicates a regular uplink carrier, 1 indicates a supplementary uplink carrier).

Before the terminal transmits the PRACH preamble, the terminal may have at least part of the following information by receiving system information from the base station on a PBCH or receiving RRC signaling from the base station.

- PRACH preamble format
- Time/frequency resource information for RACH transmission
- Index for a logical root sequence table
- Cyclic shift $N_{CS}$
- Set type (unrestricted, restricted set A, restricted set B)

Referring again to FIG. 6, as a second procedure, the base station may provide a random access response (RAR) to the terminal, which may be referred to as 'Msg2' (S630). Particularly, the base station may calculate an RA-RNTI based on Equation 4 when the base station receives the PRACH preamble from the terminal in the step S620, and may transmit a DCI by using the RA-RNTI for scrambling. The terminal may monitor a PDCCH scrambled with the RA-RNTI in a period included in a RACH response window configured by the higher layer in a type 1 PDCCH common search space (CSS). The terminal may receive the PDCCH (or the DCI transmitted from the base station through the PDCCH), and may decode the PDCCH (or the DCI). If the terminal successfully decodes the PDCCH (or the DCI), the terminal may decode a PDSCH including the RAR transmitted from the base station in the step S630. If the terminal succeeds in decoding the RAR, the terminal may identify whether an RA preamble identifier (RAPID) in the RAR matches a RAPID pre-allocated to the terminal.

As a third procedure, the terminal may transmit a PUSCH to the base station, which may be referred to as 'Msg3' (S640). To this end, the terminal may determine whether to apply a transform precoding to transmission of the PUSCH (i.e. whether to apply discrete Fourier transform (DFT)-s-OFDM-based transmission or OFDM-based transmission) based on a higher layer parameter (e.g. *msg3-transformPrecoding*). Also, the terminal may determine a SCS to be used for transmission of the PUSCH according to a higher layer parameter (e.g. *msg3-scs)*. In this case, the PUSCH of Msg3 may be transmitted through a serving cell to which the PRACH has been transmitted.

As a fourth procedure, the base station may transmit a contention resolution message to the terminal, which may be referred to as 'Msg4' (S650). The terminal may start a timer for receiving the contention resolution message, and may monitor a PDCCH scrambled with a temporary cell-RNTI (TC-RNTI) in the type 1 PDCCH CSS until the timer expires. If the terminal successfully decodes the PDCCH, the terminal may decode a corresponding PDSCH including a MAC CE, and set the TC-RNTI as a cell-RNTI (C-RNTI). After successfully decoding the Msg4, the terminal may report a hybrid automatic repeat request (HARQ) positive-acknowledgement (ACK) thereto to the base station, and may report whether the RACH procedure is successful to the base station (S660).

The RACH occasion (RO) may mean a time and frequency resource specified for reception of a RACH preamble, and the terminal may use the RO for PRACH transmission. As described above, in the 5G NR, multiple SSBs may be associated with different beams for the multi-beam operation, and the terminal may measure the multiple SSBs, and select an optimal SSB (i.e. optimal beam) based on one of various schemes such as a reference signal received power (RSRP), reference signal received quality (RSRQ), signal-to-noise ratio (SNR), signal-to-noise/interference ratio (SNIR), or the like. Thereafter, the terminal may determine a beam (i.e. TX spatial filter) to be used for PRACH transmission based on the beam (i.e. RX spatial filter) used when receiving the optimal SSB. In this case, a relationship between SSB(s) and RO(s) may be established for the purpose of allowing the base station or the network to know which SSB (i.e. beam) the terminal has selected. Through such the relationship, the base station may know the SSB (i.e. beam) selected by the terminal based on the RO in which the terminal has transmitted the PRACH. For example, the relationship between SSB(s) and RO(s) may be determined with reference to the higher layer configurations identical or similar to those shown in Table 6 and Table 7.

[Table 6]

```
RACH-ConfigCommon ::=          SEQUENCE {
    rach-ConfigGeneric        // set of RACH parameters
    totalNumberOfRA-Preambles    // the total number of RACH preambles (1~63)
    ssb-perRACH-OccasionAndCB-PreamblesPerSSB   CHOICE {
        oneEighth   // The number of preambles per SSB when one SSB is associated with eight ROs
        oneFourth   // The number of preambles per SSB when one SSB is associated with four ROs
        oneHalf     // The number of preambles per SSB when one SSB is associated with two ROs
        one        // The number of preambles per SSB when one SSB is associated with one RO
        two        // The number of preambles per SSB when two SSBs are associated with one RO
        four       // The number of preambles per SSB when four SSBs are associated with one RO
            eight      // The number of preambles per SSB when eigth SSBs are associated with one RO
            sixteen     // The number of preambles per SSB when sixteen SSBs are associated with one RO
    }
    groupBconfigured            SEQUENCE {
        ra-Msg3SizeGroupA  // The size of a transport block fro contention-based RA of Group A
        messagePowerOffsetGroupB  // Threshold for preamble selection
        numberOfRA-PreamblesGroupA   // The number of CB preambles per SSB of Group A
    }
}
```

[Table 7]

```
      ra-ContentionResolutionTimer   // Initial value of a contention resolution timer
      rsrp-ThresholdSSB       // Threshold for selection of an SSB and an associated RACH resource
      rsrp-ThresholdSSB-SUL  // Threshold for selection of an SSB and an associated RACH resource in SUL
      prach-RootSequenceIndex              CHOICE { // RACH root sequence index
        l839
        l139
      },
      msg1-SubcarrierSpacing      // SCS for Msg1 transmission
      restrictedSetConfig       // one of {unrestricted, restricted set A, restricted set B}
      msg3-transformPrecoder      // whether to apply transform precoding in transmisison of Msg3
        ...
    }
RACH-ConfigGeneric ::=            SEQUENCE {
    prach-ConfigurationIndex    // indicates a preamble format, etc.
    msg1-FDM             // The number of ROs FDMed at a time
    msg1-FrequencyStart      // frequency-axis offset of the lowest RO with reference to PRB 0
    zeroCorrelationZoneConfig   // N-CS configuration
    preambleReceivedTargetPower  // Target power level at a network receiving node
    preambleTransMax
            // The maximum number of RA preambe transmissions performed unitl declaration of an RA
failure
    powerRampingStep        // Power ramping step
    ra-ResponseWindow         // Msg2 (RAR) window length (number of slots)
      ...,
    }
    }
```

FIG. 7 is a conceptual diagram illustrating a first exemplary embodiment of SSB-RO association according to RACH configuration in a communication system.

Referring to FIG. 7, in an SSB-RO mapping relation according to the RACH configurations, in a certain frequency band, N SSBs 710-1 to 710-n having time resources which are separated from each other may be mapped to ROs 720-1 to 720-n having time resources which are separated from each other on a one-to-one basis. For example, if a higher layer parameter msg1-FDM is set to 1 (i.e. msg1-FDM=one) and a higher layer parameter *ssb-perRACH-OccasionAndCB-PreamblesPerSSB* is set to 1 (e.g. *ssb-perRACH-OccasionAndCB-PreamblesPerSSB=one*), the N different SSBs 710-1 to 710-n may be mapped to the N different ROs 720-1 to 720-n on a one-to-one basis.

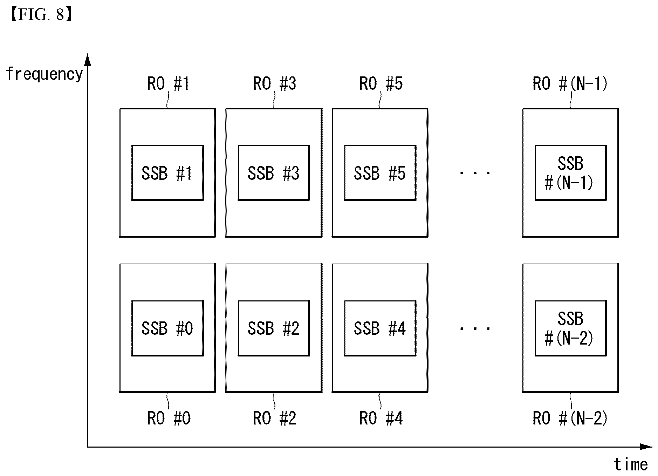

FIG. 8 is a conceptual diagram illustrating a second exemplary embodiment of SSB-RO association according to RACH configuration in a communication system.

Referring to FIG. 8, in an SSB-RO mapping relation according to the RACH configurations, in a first frequency band, SSBs 810-1, 810-3, 810-5, ..., and 810-(n-1) having time resources which are separated from each other may be mapped to ROs 820-1, 820-3, 820-5, ..., and 820-(n-1) having time resources which are separated from each other on a one-to-one basis. In addition, in a second frequency band, SSBs 810-2, 810-4, 810-6, ..., and 810-n having time resources which are separated from each other may be mapped to ROs 820-2, 820-4, 820-6, ..., and 820-n) having time resources which are separated from each other on a one-to-one basis. For example, if the higher layer parameter msg1-FDM is set to 2 (i.e. msg1-FDM=two), and higher layer parameter *ssb-perRACH-OccasionAndCB-PreamblesPerSSB* is set to 2 (e.g. *ssb-perRACH-OccasionAndCB-PreamblesPerSSB*=two), the N different SSBs 810-1 to 810-n may be mapped to the N different ROs 820-1 to 820-n which are frequency division multiplexed (FDMed) in a frequency domain, on a one-to-one basis.

Meanwhile, the 5G NR communication system may support DCI formats shown in Table 8 based on Release-16.

[Table 8]

| DCI format | Usage |
|---|---|
| 0_0 | Used for scheduling a PUSCH within one cell |
| 0_1 | Used for scheduling one or more PUSCHs within one cell, or indicating downlink feedback information for a configured grant (CG) PUSCH (i.e. CG-DFI) |
| 0_2 | Used for scheduling a PUSCH within one cell |

(continued)

| DCI format | Usage |
|---|---|
| 1_0 | Used for scheduling a PDSCH within one cell |
| 1_1 | Used for scheduling a PDSCH within one cell or triggering a one-shot HARQ-ACK codebook feedback |
| 1_2 | Used for scheduling a PDSCH within one cell |
| 2_0 | Used for notifying a slot format, an available RB set, a channel occupancy time (COT) duration, and search space set group switching to a UE group |
| 2_1 | Used for notifying PRB(s) and OFDM symbol(s) assumed not to be intended to be used for transmission to a UE group |
| 2_2 | Used for transmission of a transmission power control (TPC) for a PUCCH and a PUSCH |
| 2_3 | Used for transmission of a TPC command group for SRS transmission by one or more UEs |
| 2_4 | Used for a UE to notify PRB(s) and OFDM symbol(s) for which UL transmission from the UE is cancelled to a UE group |
| 2_5 | Used for notifying availability of soft resources |
| 2_6 | Used for notifying power saving information outside a DRX active time to one or more UEs |
| 3_0 | Used for NR sidelink scheduling within one cell |
| 3_1 | Used for LTE sidelink scheduling within one cell |

DCI may include downlink control information for one or more cells, and may be associated with one RNTI. The DCI may be encoded through the order of 1) information element multiplexing, 2) cyclic redundancy check (CRC) addition, 3) channel coding, and 4) rate matching, and decoding may also be performed in consideration of the above steps. In the above description, "a certain DCI is associated with one RNTI" may mean that CRC parity bits of the DCI are scrambled with the RNTI. Referring to Table 8, some DCI may include scheduling information of one or more PUSCHs for a certain cell.

For example, a CRC of the DCI format 0_1 may be scrambled with a C-RNTI, configured scheduling-RNTI (CS-RNTI), semi-persistent CSI RNTI (SP-CSI-RNTI), or modulation coding scheme cell RNTI (MCS-C-RNTI). The DCI format 0_1 may include at least one of the following information.

☐ Identifier for DCI format (1 bit): Indicator indicating a UL DCI format, which is always set to 0 in the case of DCI format 0_1
☐ Carrier indicator (0 or 3 bits): Indicator indicating a CC scheduled by the corresponding DCI
☐ DFI flag (0 or 1 bit): Configured grant downlink feedback information (CG-DFI) indicator

- If the DCI format 0_1 is used for CG-DFI indication (when the DFI flag is set to 1), at least one of the following fields may be used:

☐ HARQ-ACK bitmap (16 bits), where the order of mapping HARQ process indexes within the bitmap is that the HARQ process indexes are mapped from the MSB to the LSB of the bitmap in ascending order. For each bit in the bitmap, a value of 1 indicates ACK, and a value of 0 indicates NACK.
☐ TPC command for a scheduled PUSCH (2 bits)
☐ All the remaining bits in the DCI format 0_1 are set to zero

- If the DCI format 0_1 is not used for CG-DFI indication (when there is no DFI flag field or DFI flag field is set to 0), at least one of the following fields may be used:

☐ UL/SUL indicator (0 or 1 bit): supplementary UL indicator.
☐ Bandwidth part indicator (0, 1, or 2 bits): Indicator indicating a BWP to be activated among uplink BWPs configured for the terminal.
☐ Frequency domain resource assignment: Indicator for allocating a frequency domain resource.
☐ Time domain resource assignment: Indicator for allocating a time domain resource.
☐ Frequency hopping flag (0 or 1 bit): Frequency axis hopping indicator

☐ Modulation and coding scheme (5 bits)

☐ New data indicator (NDI): Indicator indicating whether allocated data is new data or retransmission data.

☐ Redundancy version (RV): Indicator indicating an RV value when channel coding is applied to allocated data

☐ HARQ process number (4 bits): Indicator indicating a HARQ process to be allocated to scheduled data

☐ TPC command for a scheduled PUSCH (2 bits): TPC indicator

☐ SRS resource indicator: Aperiodic SRS resource selection indicator

☐ Precoding information and number of layers: Indicator indicating precoding and the number of transport layers to be used in PUSCH transmission

☐ Antenna ports: Indicator for uplink antenna ports to be used for PUSCH transmission

☐ SRS request: Indicator indicating whether to transmit aperiodic SRS

☐ CSI request: Indicator indicating whether and how to report channel state information

☐ PTRS-DMRS association: Indicator indicating a relationship between an uplink phase-noise tracking reference signal (PTRS) antenna port and a demodulation reference signal (DMRS) antenna port

☐ DMRS sequence initialization: Indicator for a DMRS sequence initialization value during OFDM-based uplink transmission

☐ UL-SCH indicator: Indicator indicating whether or not an uplink shared channel (UL-SCH) is included in a PUSCH (a PUSCH that does not include a UL-SCH needs to include CSI)

☐ Open-loop power control parameter set indication: Indicator indicating a set of open-loop power control (OPLC) parameter set

☐ Priority indicator: Uplink transmission priority indicator

☐ Invalid symbol pattern indicator: Indicator indicating whether to apply an invalid symbol pattern configured by a higher layer

As another example, a CRC of the DCI format 1_1 may be scrambled with a C-RNTI, CS-RNTI, or MCS-C-RNTI, and the DCI format 1_1 may include at least one of the following information.

☐ Identifier for DCI format (1 bit): Indicator indicating a DL DCI format, which is always set to 1 in the case of DCI format 1_1

☐ Carrier indicator (0 or 3 bits): Indicator indicating a CC scheduled by the corresponding DCI

☐ Bandwidth part indicator (0, 1, or 2 bits): Indicator indicating a BWP to be activated among downlink BWPs configured for the terminal

☐ Frequency domain resource assignment: Indicator for allocating a frequency domain resource

☐ Time domain resource assignment: Indicator for allocating a time domain resource

☐ PRB bundling size indicator: Indicator indicating a type (i.e. static or dynamic) and a size of PRB bundling

☐ Rate matching indicator: Indicator indicating a rate matching pattern configured by a higher layer

☐ ZP CSI-RS trigger: Indicator for applying aperiodic zero-power (ZP) CSI-RS

☐ 'modulation and coding scheme', 'new data indicator', and 'redundancy version' fields for a transport block 1

☐ 'modulation and coding scheme', 'new data indicator', and 'redundancy version' fields for a transport block 2

☐ HARQ process number: Indicator indicating a HARQ process to be allocated to scheduled data

☐ Downlink assignment index: DAI indicator for HARQ-ACK codebook generation in TDD operation

☐ TPC command for a scheduled PUCCH: Power control indicator for PUCCH transmission

☐ PUCCH resource indicator: Indicator indicating a PUCCH resource for transmitting HARQ-ACK information for an allocated PDSCH or a predetermined PDSCH set

☐ PDSCH-to-HARQ_feedback timing indicator: Indicator indicating a time axis offset between the allocated PDSCH and the PUCCH

☐ Antenna port(s): Indicator indicating antenna ports to be used for PDSCH transmission/reception

☐ Transmission configuration indication: Indicator indicating transmission configuration information (TCI) to be used for PDSCH transmission and reception

☐ SRS request: Indicator indicating whether to transmit aperiodic SRS

☐ DMRS sequence initialization: Indicator for a DMRS sequence initialization value used for PDSCH transmission and reception

☐ Priority indicator: PDSCH reception priority indicator

As another example, certain DCI formats may be used to deliver the same control information to one or more terminals. For example, a CRC of the DCI format 2_3 may be scrambled with a transmit power control-sounding reference signal-RNTI (TPC-SRS-RNTI), and may include at least one of the following information.

☐ Block number 1, Block number 2, ..., Block number B: Indicators indicating resource regions to which the DCI format 2_3 is applied. A starting part of the block is configured by a higher layer parameter *startingBitOfFormat2-3* or *startingBitOfFormat2-3SUL-v1530.*

- When a terminal for which a higher layer parameter *srs-TPC-PDCCH-Group* is set to type A performs uplink transmission without a PUCCH and PUSCH or uplink transmission in which SRS power control is not tied to PUSCH power control, one block is configured by the higher layer, and the following fields are defined for the block.

☐ SRS request (0 or 2 bits): Aperiodic SRS transmission indicator
☐ TPC command number 1, TPC command number 2, ...,TPC command number N: Indicators indicating uplink power control to be applied to a UL carrier indicated by a higher layer parameter *cc-IndexInOneCC-Set.*

- When a terminal for which a higher layer parameter *srs-TPC-PDCCH-Group* is set to type B performs uplink transmission without a PUCCH and PUSCH or uplink transmission in which SRS power control is not tied to PUSCH power control, one or more blocks may be configured by the higher layer, and the following fields are defined for each block.

☐ SRS request (0 or 2 bits): Aperiodic SRS transmission indicator.
☐ TPC command (2 bits)

As another example, certain DCI formats may be used to deliver the same control information to more than one terminal. For example, a CRC of a DCI format 2_0 may be scrambled with an SFI-RNTI and may be used to notify information such as slot format(s), channel occupancy time (COT) duration(s), available RB set(s), and search space set group switching. Specifically, the DCI format 2_0 may include at least one of the following information.

- If a higher layer parameter *slotFormatCombToAddModList* is configured,

☐ Slot format indicator 1, Slot format indicator 2, ..., Slot format indicator N

- If a higher layer parameter *availableRB-SetsToAddModList-r16* is configured,

☐ Available RB set indicator 1, Available RB set indicator 2, ..., Available RB set indicator N1

- If a higher layer parameter *co-DurationsPerCellToAddModList-r16* is configured,

☐ COT duration indicator 1, COT duration indicator 2, ..., COT duration indicator N2

- If a higher layer parameter *searchSpaceSwitchTriggerToAddModList-r16* is configured,

☐ Search space set group switching flag 1, Search space set group switching flag 2, ..., Search space set group switching flag M
The size of DCI format 2_0 may be set by a higher layer as one of values up to 128 bits. For example, a DCI format 2_5 may be used to notify availability of soft type resources of an IAB node. A CRC of the DCI format 2_5 may be scrambled with an availability indicator (AI)-RNTI and may include information below.
☐ Availability indicator 1, Availability indicator, ..., Availability indicator N

The size of DCI format 2_5 may set by a higher layer as one of values less than or equal to 128 bits.
The terminal may receive configuration information of a CORESET #0 and a search space #0, identical or similar to that shown in Table 9.

[Table 9]

```
PDCCH-ConfigSIB1 ::=            SEQUENCE {
    controlResourceSetZero
    searchSpaceZero
}


ControlResourceSetZero   // indicates a configuration value (0~15) of a CORESET #0 within an initial BWP
SearchSpaceZero          // indicates a configuration value (0~15) of a search space #0 within an initial BWP
```

The terminal may refer to the following higher layer configurations for cell-specific PDCCH monitoring, identical or similar to those shown in Tables 10 to 13.

[Table 10]

```
PDCCH-ConfigCommon ::=            SEQUENCE {
    controlResourceSetZero // indicates a configuration value (0~15) of a CORESET #0 within an initial BWP
    commonControlResourceSet
            // configure a common CORESET by referring to CORESET configuration
searchSpaceZero    // indicates a configuration value (0~15) of a search space #0 within an initial BWP
    commonSearchSpaceList  // configures a search sapce to be used for cell-specific PDCCH monitoring by
referring to up to four search space configurations
    searchSpaceSIB1      // search space configuration for SIB1
    searchSpaceOtherSystemInformation  // search space configuration for SIB2 or other SIBs
    pagingSearchSpace          // search space configuration for paging
    ra-SearchSpace           // search space configuration for random access procedure

    ...

}
```

[Table 11]

```
ControlResourceSet ::=            SEQUENCE {
    controlResourceSetId      // CORESET ID (a value other than 0 is used)
      frequencyDomainResources    // configuration of frequency resources of a CORESET
    duration                // configuration of a time-axis length (symbols) of a CORESET
        cce-REG-MappingType            CHOICE { // CCE-to-REG mapping configuration
        interleaved                SEQUENCE {
            reg-BundleSize
            interleaverSize
            shiftIndex
        },
        nonInterleaved
    },
    precoderGranularity
    tci-StatesPDCCH-ToAddList
                // indicates a QCL relation possible between a QCL reference RS and a PDCCH DMRS
    tci-StatesPDCCH-ToReleaseList
    tci-PresentInDCI      // indicates whether a TCI field exists within the DCI format 1_1
    pdcch-DMRS-ScramblingID  // indicates a scrambling initialization value of a PDCCH DMRS

    ...

}
```

[Table 12]

```
SearchSpace ::=                    SEQUENCE {
    searchSpaceId          // search space ID
    controlResourceSetId     // CORESET ID associated with the search space
monitoringSlotPeriodicityAndOffset     CHOICE { // periodicity and offset of a PDCCH monitoring slot
        sl1      // performs PDCCH monitoring in every slot
        ...
                        // (omitted) monitoring offset values when a PDCCH monitoring periodicity is one of 2
to 1280 slots
        sl2560   // a monitoring offset value when a PDCCH monitoring periodicity is 2560 slots
    }
    duration   // the number of slots where a search space exists for each occasion
수
    monitoringSymbolsWithinSlot
        // a position of a first symbol on which monitoring is to be performed within a PDCCH monitoring
slot
        nrofCandidates                SEQUENCE {
        aggregationLevel1   // The number of PDCCH candidates in case of aggregation level 1
        aggregationLevel2   // The number of PDCCH candidates in case of aggregation level 2
        aggregationLevel4  // The number of PDCCH candidates in case of aggregation level 4
        aggregationLevel8  // The number of PDCCH candidates in case of aggregation level 8
        aggregationLevel16  // The number of PDCCH candidates in case of aggregation level 16
    }
    searchSpaceType                CHOICE { // indicates a search space type (common or UE-specific) and
DCI formats
```

[Table 13]

```
    common                        SEQUENCE {
        dci-Format0-0-AndFormat1-0          SEQUENCE {
        ...
        }
        dci-Format2-0              SEQUENCE {
        nrofCandidates-SFI                SEQUENCE {
        ...
        },
        ...
        }
        dci-Format2-1
        dci-Format2-2
        dci-Format2-3              SEQUENCE {
        dummy1
        dummy2
        }
    },
    ue-Specific                SEQUENCE {
        dci-Formats
        ...,
        }
    }
}
```

The terminal may refer to the following higher layer configurations for UE-specific PDCCH monitoring, identical or similar to those shown in Table 14.

[Table 14]

```
PDCCH-Config ::=                SEQUENCE {
    controlResourceSetToAddModList
                // At most three CORESETs are configured by referring to CORESET configuration
        controlResourceSetToReleaseList
    searchSpacesToAddModList
                // At most ten search spaces are configured by referring to search space configuration
searchSpacesToReleaseList
    downlinkPreemption    // downlink preemption indicator
    tpc-PUSCH         // configuraion of reception of a group TPC for PUSCH transmission
    tpc-PUCCH          // configuration of reception of a group TPC for PUCCH transmission
    tpc-SRS          // configuration of reception of a group TPC for SRS transmission
    ...,
    }
```

The presence of one antenna port may mean a case in which a channel experienced by a symbol transmitted through the corresponding antenna port can be estimated or inferred from a channel experienced by another symbol transmitted through the same antenna port.

"Two different antenna ports are quasi co-located (QCLed)" may mean a case in which large-scale characteristics of a channel experienced by a symbol transmitted through one antenna port can be estimated or inferred from a channel experienced by a symbol transmitted through another antenna port. The large-scale characteristics of the channel may mean at least one of 'delay spread', 'Doppler spread', 'Doppler shift', 'average gain', 'average delay', and 'spatial Rx parameters'.

When time/frequency resources of a certain signal (e.g. QCL target RS) are insufficient and large-scale characteristics of a channel cannot be accurately measured with only the corresponding signal, information (i.e. QCL information) on another signal (e.g. QCL reference RS having sufficient time/frequency resources) having large-scale characteristics that can be reused for reception of the corresponding signal (i.e. QCL target RS) may be provided to the terminal to improve the channel measurement performance of the terminal. The NR communication system may support various QCL types as follows.

-    QCL-Type A: including {Doppler shift, Doppler spread, average delay, delay spread}.
-    QCL-Type B: including {Doppler shift, Doppler spread}
-    QCL-Type C: including {Doppler shift, average delay}
-    QCL-Type D: including {Spatial Rx parameters}

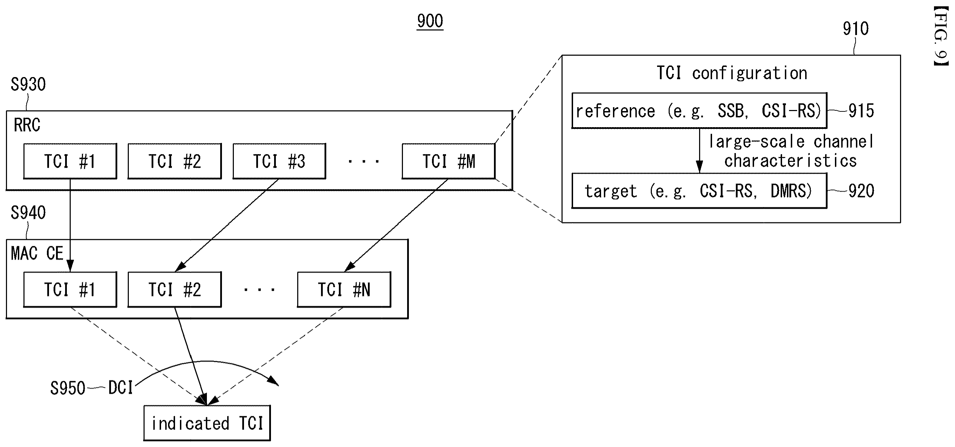

FIG. 9 is a conceptual diagram illustrating an exemplary embodiment of a QCL information transfer process through TCI state configuration and indication in a communication system.

Referring to FIG. 9, in a process of transmitting QCL information through TCI state configuration and indication in a communication system 900, a base station may configure at most M TCI states to a terminal through higher layer (i.e. RRC) signaling, in accordance with a UE capability report and a maximum value (e.g. 4, 8, 64, or 128 depending on a frequency band) defined in a technical specification (S930). In this case, each TCI state configuration 910 may include information on a signal or channel (i.e. QCL reference 915) that provides large-scale channel characteristics to a signal or channel (i.e. QCL target 920) referring to the TCI. One TCI state configuration 910 may include up to two references (i.e. qcl-Type1 and qcl-Type2), the first reference may be one of the QCL-Type A, QCL-Type B, and QCL-type C (i.e. qcl-type1 $\in$ {QCL-type A, QCL-type B, QCL-type C}), and the second reference may be the QCL-type D if present (i.e. qcl-type 2 = QCL-type D).

Allowing the base station to apply all the TCIs configured through the RRC signaling in real time may greatly increase implementation complexity of the terminal, the base station may transmit an activation message for some of the TCIs configured through the RRC signaling to the terminal through L2 signaling such as a MAC CE (S940). The base station may activate a maximum of N (<M) TCIs, and the terminal may receive a dynamic indication only for the activated TCI.

Thereafter, the base station may dynamically indicate to the terminal some of the activated N TCIs through L1 signaling such as a DCI (S950). The terminal may apply QCL information indicated by the corresponding TCI at a predetermined timing after receiving the L1 signaling, and may perform a reception operation for the signal or channel.

The TCI state indication steps including the 'RRC signaling (S930)', 'MAC CE signaling (S940)', and 'DCI signaling (S950)' of FIG. 9 may be partially omitted depending on a type of the QCL target RS. For example, when the QCL target is a PDSCH DMRS, and one or more TCI states are configured through RRC signaling, the base station may indicate the TCI state using all the steps of FIG. 9. However, when the QCL target is a PDSCH DMRS, and a single TCI state is configured through RRC signaling, the MAC CE signaling (S940) and the DCI signaling step (S950) may be omitted. Similarly, when the QCL target is a PDCCH DMRS, the DCI signaling step S940 may be omitted. Specifically, the terminal may obtain configuration information for the TCI states and QCL information with reference to the RRC signaling identical or similar to those shown in Table 15.

[Table 15]

```
TCI-State ::=                 SEQUENCE { // TCI configuration (I.1-00)
    tci-StateId    // TCI state ID
    qcl-Type1     // first QCL reference configured by referring to QCL information
      qcl-Type2     // second QCL reference configured by referring to QCL information
```

```
    ...
}

QCL-Info ::=                  SEQUENCE {
    cell            // index of a cell in which QCL reference is transmitted
    bwp-Id           // index of a BWP in which QCL reference is transmitted
    referenceSignal                CHOICE {
       csi-rs        // index of a CSI-RS to be referred when QCL reference is a CSI-RS
       ssb           // index of an SSB to be referred when QCL reference is an SSB
    },
    qcl-Type
    // QCL type to be applied to a QCL target (one of QCL-type A, QCL-type B, QCL-type C, and QCL-type
D)
    ...
}
```

The base station may instruct the terminal to activate or deactivate some of the TCI states configured by the RRC signaling through MAC CE signaling, or may instruct the terminal to apply a TCI state indicated by a MAC CE to the QCL target RS. For example, the base station may use the following MAC CE signaling according to the type of the QCL target RS.

- TCI state activation/deactivation MAC CE for a UE-specific PDSCH DMRS
- TCI state indication MAC CE for a UE-specific PDCCH DMRS
- TCI state activation/deactivation MAC CE for an enhanced UE-specific PDSCH DMRS

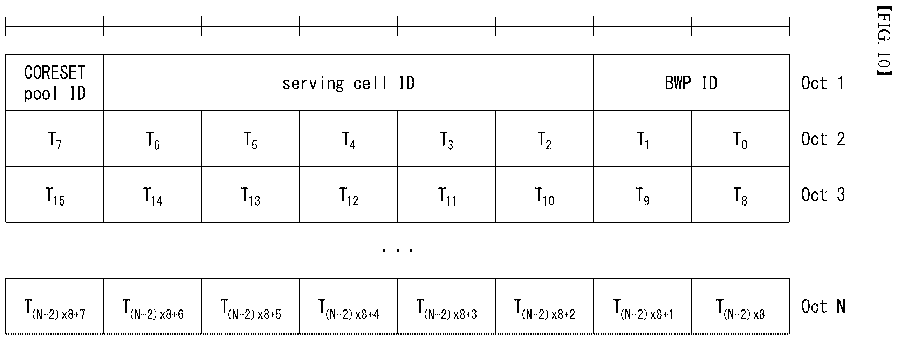

FIG. 10 is a conceptual diagram illustrating an exemplary embodiment of a TCI state activation/deactivation MAC CE in a communication system.
Referring to FIG. 10, a first octet (Oct 1) in a TCI state activation/deactivation MAC CE for a UE-specific PDSCH DMRS may include a COREST pool ID field 1010, a serving cell ID field 1020, and a BWP ID field 1030, and a second octet (Oct 2) to an N-th octet (Oct N) may include Ti fields 1040 indicating TCI state IDs i. The detailed meaning of each field may be as follows, and the sizes thereof may be variable.

- Serving cell ID: a serving cell ID to which the MAC CE is applied
- BWP ID: BWP ID to which the MAC CE is applied, which indicates a BWP in association with a BWP indication field within the DCI
- Ti: indicates a TCI state ID i. When this value is set to 0, it may mean that a TCI state whose TCI state ID is i is deactivated, and when this value is set to 1, it may mean that a TCI state whose TCI state ID is i is activated. The TCI states activated by 1 may be sequentially mapped to TCI indication field code points within the DCI.
- CORESET pool ID: If a DCI scheduling a PDSCH is monitored in a CORESET that does not include a higher layer parameter *coresetPoolIndex,* the field may be ignored. If a DCI scheduling a PDSCH is monitored in a CORESET including the higher layer parameter *coresetPoolIndex,* Ti indication may be applied only when a value of the CORESET pool ID matches a value of *coresetPoolIndex* of the CORESET.

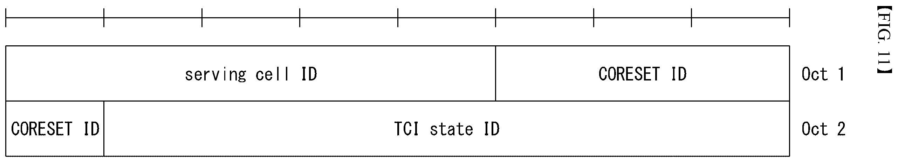

FIG. 11 is a conceptual diagram illustrating an exemplary embodiment of a TCI state indication MAC CE in a communication system.

Referring to FIG. 11, a first octet (Oct 1) in a TCI state activation/deactivation MAC CE for a UE-specific PDSCH DMRS may include a serving cell ID field 1110 and a CORESET ID field 1120, and a second octet (Oct 2) may include a CORESET ID field 1130 and a TCI state ID field 1140. The sizes thereof may be variable.

- Serving cell ID: a serving cell ID to which the corresponding MAC CE is applied.
- CORESET ID: indicates a CORESET to which the MAC CE is applied. If this value is set to 0, a CORESET configured through *controlResourceSetZero* may be a CORESET #0.
- TCI state ID: means a TCI state ID indicated by the corresponding MAC CE.

The base station may configure spatial relation information to the terminal through higher layer (e.g. RRC) signaling in order to indicate uplink beam information. The spatial relation information may mean a signaling structure for using spatial domain filters used for transmission and reception of a reference RS for spatial TX filters for uplink transmission of a target RS according to the corresponding spatial relation. The spatial reference RS may be a downlink signal such as SSB or CSI-RS, and may also be an uplink signal such as SRS. If the reference RS is a downlink signal, the terminal may use the spatial RX filter values used for receiving the reference RS as spatial TX filter values for transmitting the target RS according to the spatial relation. If the reference RS is an uplink signal, the terminal may use the spatial TX filter values used for transmitting the reference RS as the spatial TX filter values for transmitting the target RS according to the spatial relation.

The signaling structure for the spatial relation information may vary depending on the type of target RS. For example, when the target RS is an SRS, the base station may perform RRC configuration for each SRS resource based on message identical or similar to those shown in Table 16.

[Table 16]

```
SRS-SpatialRelationInfo ::=    SEQUENCE {
    servingCellId          // index of a serving cell in which a reference RS is transmitted
    referenceSignal              CHOICE {
        ssb-Index        // SSB index when a reference RS is SSB
        csi-RS-Index     // CSI-RS resource index when a reference RS is CSI-RS
        srs                          SEQUENCE {
            resourceId     // SRS resource index when a reference RS is SRS
            uplinkBWP     // index of a UL BWP in which SRS is transmitted when a reference RS is SRS
        }
    }
}
```

For example, when the target RS is an SRS, the base station may perform RRC configuration for each SRS resource, identical or similar to those shown in Table 17.

[Table 17]

```
PUCCH-SpatialRelationInfo ::=          SEQUENCE {
    pucch-SpatialRelationInfoId    // spatial relation information ID for PUCCH
    servingCellId                // index of a serving cell in which a reference RS is transmitted
    referenceSignal                  CHOICE {
        ssb-Index             // SSB index when a reference RS is SSB
        csi-RS-Index           // CSI-RS resource index when a reference RS is CSI-RS
        srs               // specifiy a SRS resource by referring to PUCCH-SRS configuration
    },
    pucch-PathlossReferenceRS-Id
                    // index of a RS resource to be used for measurement of a pathloss of a PUCCH
    p0-PUCCH-Id    // index of confuring p0 for PUCCH power control
    closedLoopIndex   // configuration value of closed-loop power control
}

PUCCH-SRS ::=    SEQUENCE {
    resource                // SRS resource index
```

| |
|---|
| uplinkBWP                // index of a BWP in which SRS is transmitted |
| } |

In the 5G NR communication system, a slot format may include downlink symbol(s), uplink symbol(s), and/or flexible symbol(s).

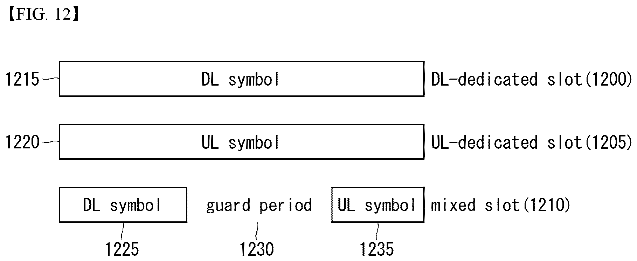

FIG. 12 is a conceptual diagram illustrating slot configurations according to slot formats in a communication system.

Referring to FIG. 12, in slot configurations according to slot formats in a communication system, a downlink dedicated slot 1200 may be a slot in which all symbols within the slot are configured only as downlink symbols 1215 according to a slot format. As another example, an uplink dedicated slot 1205 may be a slot in which all symbols within the slot are configured only as uplink symbols 1220 according to a slot format. As another example, in a downlink/uplink mixed slot 1210, some symbols within the slot may be configured as downlink symbols 1225, and some symbols within the slot may be configured as uplink symbols 1235 according to a slot format. In this case, specific symbols of the mixed slot 1210 including both the uplink and downlink symbols may be configured or indicated as a guard period 1230 for downlink-uplink switching, and the terminal may not perform transmission/reception during the guard period 1230.

In the 5G NR communication system, the base station may configure a 'slot format' over one or more slots for each serving cell to the terminal through a higher layer parameter *tdd-UL-DL-ConfigurationCommon.* In this case, the higher layer parameter *tdd-UL-DL-ConfigurationCommon* may include or refer to at least one of the following information.

- Reference subcarrier spacing: reference numerology $\mu_{ref}$
- Pattern 1: A first pattern.
- Pattern 2: A second pattern.

Here, the pattern 1 or pattern 2 may include at least one of the following configurations.

- Slot configuration periodicity (i.e. *dl-UL-TransmissionPeriodicity):* Slot configuration periodicity P expressed in units of msec
- Number of downlink dedicated slots (i.e. *nrofDownlinkSlots*): The number $d_{slots}$ of slots composed only of downlink symbols
- Number of downlink symbols (i.e. *nrofDownlinkSymbols*): The number $d_{sym}$ of downlink symbols
- Number of uplink dedicated slots (i.e. *nrofUplinkSlots*): The number $u_{slots}$ of slots composed only of uplink symbols
- Number of uplink symbols (i.e. *nrofUplinkSymbols*): The number $u_{sym}$ of uplink symbols

The slot configuration periodicity P msec of the first pattern may include S = P · $2^{\mu ref}$ slots, and in this case, the numerology may follow $\mu_{ref}$. In addition, among the S slots, the first $d_{slots}$ slots may include only downlink symbols, and the last $u_{slots}$ slots may include only uplink symbols. In this case, $d_{sym}$ symbols after first $d_{slots}$ slots may be downlink symbols. In addition, $u_{sym}$ symbols before last $u_{slots}$ slots may be uplink symbols. The remaining symbols (i.e. $(S - d_{slots} - u_{slots}) \cdot N_{symb}^{slot} - d_{sym} - u_{sym}$ symbols) that are not designated as downlink symbols or uplink symbols in the pattern may be flexible symbols.

If the second pattern is configured and the slot configuration periodicity of the second pattern is $P_2$, a slot configuration periodicity P + $P_2$ msec configured with a combination of the first pattern and the second pattern may include first S = P · $2^{\mu ref}$ slots and second $S_2 = P_2 \cdot 2^{\mu ref}$ slots. In this case, the positions and numbers of downlink symbols, uplink symbols, and flexible symbols in the second pattern may be configured with reference to the description of the first pattern based on configuration information of the second pattern. In addition, when the second pattern is configured, the terminal may assume that P + $P_2$ is a divisor of 20 msec.

The base station may override direction(s) of 'flexible symbol(s)' among symbols configured through the higher layer parameter *tdd-UL-DL-ConfigurationCommon* by using the higher layer parameter *tdd-UL-DL-ConfigurationDedicated)* based on the following information.

- Slot configuration set (i.e. *slotSpecificConfigurationsToAddModList*): A set of slot configurations
- Slot index (i.e. *slotIndex*): An index of a slot included in the set of slot configurations
- Symbol directions (i.e. *symbols*): The directions of the symbols indicated by the slot index (i.e. *slotIndex*). If all symbol directions are downlink (symbols = allDownlink), all symbols within the corresponding slot are downlink symbols. If all symbol directions are uplink (symbols = allUplink), all symbols within the corresponding slot are uplink symbols. If the symbol directions are explicit (symbols = explicit), *nrofDownlinkSymbols* may indicate the number of downlink symbols located in the first part of the corresponding slot, and *nrofUplinkSymbols* may indicate the number of uplink symbols located in the last part of the corresponding slot. If *nrofDownlinkSymbols* or *nrofUplinkSymbols* is omitted, the corresponding parameter may be regarded as indicating a value of 0. The remaining symbols within the slot become flexible symbols.

In the 5G communication system, the base station may indicate a slot format to the terminal based on L1 signaling. For example, when the terminal receives a higher layer parameter *SlotFormatIndicator* from the base station, the terminal may obtain configuration information a slot format indication-RNTI (i.e. SFI-RNTI). Meanwhile, when the terminal receives a higher layer parameter *dci-PayloadSize* from the base station, the terminal may obtain configuration information of a payload size of the DCI format 2_0. In addition, the terminal may additionally receive, from the base station, information on PDCCH candidate(s), CCE aggregation level, and search space set(s) of a CORESET for monitoring the DCI format 2_0. Each slot format indication (SFI) index field in the DCI format 2_0 may indicate a slot format to be applied to each slot in a slot set of a DL BWP and a UL BWP from a slot in which the terminal has detected the corresponding DCI format 2_0. In this case, the size of the slot set may be equal to or greater than a PDCCH monitoring periodicity of the DCI format 2_0. For example, when the slot set is composed of N slots, the DCI format 2_0 may include N SFI index fields, and each SFI index field may indicate a format value of Tables 18 to 20 below. In Tables 18 to 20, 'D' may mean a downlink symbol, 'U' may mean an uplink symbol, and 'F' may mean a flexible symbol.

[Table 18]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |

[Table 19]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |

[Table 20]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 255 | UE determines a slot format of a slot based on a higher layer parameter *tdd-UL-DL-Configuration Common* or a higher layer parameter *tdd-UL-DL-ConfigurationDedicated,* and a detected DCI format (when exists). | | | | | | | | | | | | | |

In the 5G NR communication system, it may be possible to support flexible and dense wireless backhaul links for each cell through the IAB feature, without support of a wired network.

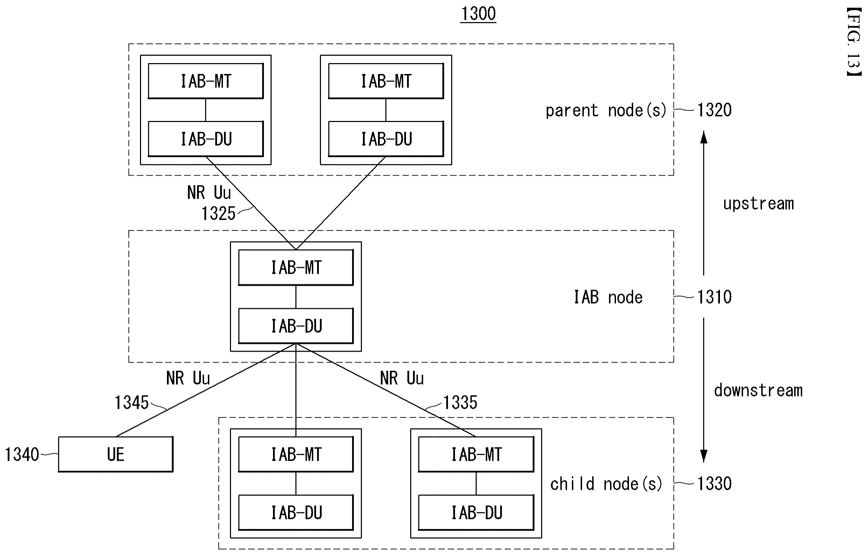

FIG. 13 is a conceptual diagram illustrating an exemplary embodiment of an IAB network in a communication system.

Referring to FIG. 13, a communication system 1300 may include one or more communication nodes. The communication nodes of the communication system 1300 may constitute an IAB network. For example, the communication system 1500 may include one or more IAB nodes. FIG. 13 shows an exemplary embodiment in which one IAB node communicates with one or more upper nodes and one or more lower nodes. However, this is merely an example for convenience of description, and exemplary embodiments of the present disclosure are not limited thereto.

The communication system 1300 may include a plurality of IAB nodes. For example, the communication system 1300 may include a first IAB node 1310, one or more parent nodes 1320 corresponding to upper nodes of the first IAB node 1310, and/or one or more child nodes 1330 corresponding to lower nodes of the first IAB node 1310. Here, each of the one or more parent nodes 1320 may be referred to as a 'donor node'. The IAB node 1310, the one or more parent nodes 1320, and/or the one or more child nodes 1330 may constitute the IAB network. Each of the IAB nodes 1310, 1320, and 1330 constituting the IAB network may function as a type of repeater configured based on a front-haul structure. In the communication system 1300 to which the IAB network technology is applied, it is possible to support flexible and dense wireless backhaul links for each cell without support of a wired network.

Each of the IAB nodes 1310, 1320, and 1330 may include an IAB-DU and an IAB-MT. The IAB-MT may allow each IAB node to function as a terminal in communication with an upper node. For example, the first IAB node 1310 may communicate with the upper parent nodes 1320 through the IAB-MT. On the other hand, the IAB-DU may allow each IAB node to function as a base station or a cell in communication with a lower node. For example, the first IAB node 1310 may communicate with the lower child nodes 1330 or a terminal 1340 through the IAB-DU.

The IAB-MT of the first IAB node 1310 may be connected to the IAB-DUs of the parent nodes 1320 through Uu interfaces 1325. The IAB-DU of the first IAB node 1310 may be connected to the IAB-MTs of the child nodes 1330 through Uu interfaces 1335. The IAB-DU of the first IAB node 1310 may be connected to a terminal 1340 through a Uu interface 1345.

After the IAB node constituting the IAB network completely decodes a received signal, the IAB node may re-encode the decoded received signal, and amplify and transmit it. The IAB node may be classified as a type of regenerative relay. To this end, the IAB node may support a control plane (CP) and a user plane (UP) from the parent node to the terminal based on a protocol stack structure including the L1 and L2 layers, or higher layers.

The IAB node constituting the IAB network has an advantage of being able to perform various operations including operations as a base station and a terminal. On the other hand, the IAB node has disadvantages in that implementation complexity and production cost are relatively high, and a delay required for retransmission may be relatively large.

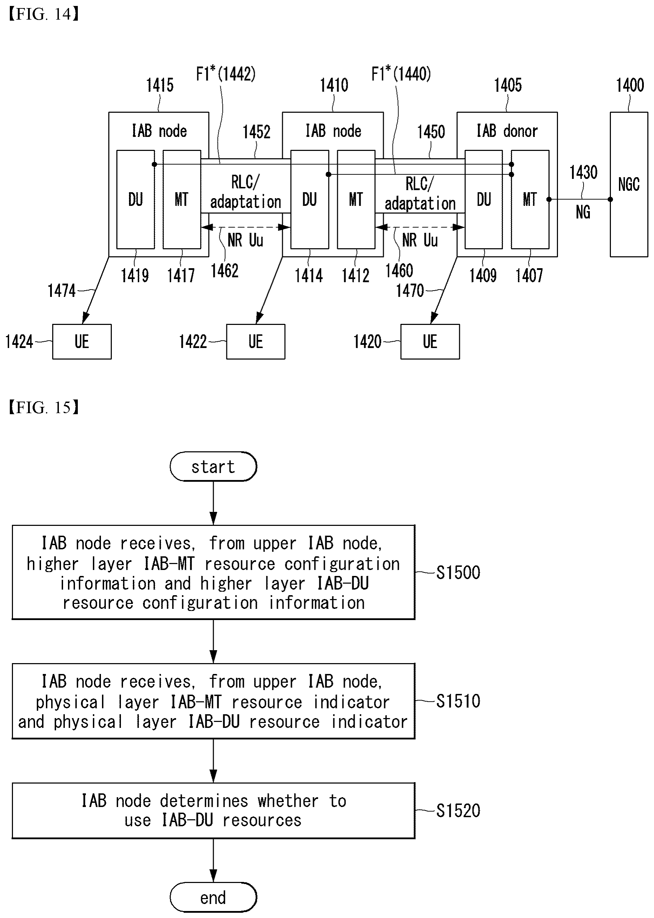

FIG. 14 is a block diagram illustrating an exemplary embodiment of a functional split structure of a central unit (CU) and a distributed unit (DU) in a communication system.

Referring to FIG. 14, in a CU-DU functional split structure in the IAB network, IAB nodes 1410 and 1415 in a two-hop chain are connected to an IAB donor 1405, and each of the IAB nodes 1410 and 1415 and terminals 1420, 1422, and 1424 may be connected to a next generation core (NGC) 1400 in a stand-alone (SA) mode. The IAB nodes 1410 and 1415 may include one DU and one MT, respectively. A certain IAB node (e.g. 1415) may be connected to the parent IAB node 1410 or the IAB donor 1405 via an MT 1417. As another example, a certain IAB node (e.g. 1410) may establish a RLC channel with the MT 1417 of the child IAB node 1415 through a DU 1414. In this case, the RLC channels 1450 and 1452 established for the MTs 1412 and 1417 may additionally include some information for IAB operations in addition to the existing components of a RLC channel for a terminal. Accordingly, the RLC channels 1450 and 1452 may be collectively referred to as 'modified RLC* (RLC*)'.

One IAB node may be connected to DUs of one or more parent IAB nodes or IAB donors. In this case, the IAB node may include a plurality of DUs, but each DU of the IAB node may have an F1-C connection 1440 or 1442 with a single IAB donor CU-CP. Even if the IAB node has a plurality of UP connections, the IAB node may operate based on a single CP connection (i.e. the IAB node may operate by being connected to a single IAB donor), so that no confusion occurs in operations of the IAB node.

The IAB donor 1405 may include the DU for supporting MTs of terminals and child IAB nodes. The IAB donor 1405 may include the CU 1407 for DUs 1409, 1414, and 1419 of itself and all child IAB nodes. It may be assumed that a certain IAB donor has a single IAB donor, and an IAB donor that manages the corresponding IAB donor may be changed by a topology adaptation function. A DU of an IAB node may be connected to a CU of the corresponding IAB donor through an F1 interface or a modified F1 interface (modified F1, F1*) (e.g. 1440, 1442). F1*-user plane (U) may be operated on the RLC channels 1450 and 1452 between the corresponding IAB-MTs 1417 and 1412 and the DUs 1414 and 1409 of the parent IAB node or donor.

Hereinafter, for convenience of description, in the present disclosure, higher layer parameters or higher layer configurations may not be limited to the above-described L2 and L3 signaling, and may collectively include information transmitted or configured through the F1 interfaces 1440 and 1442, the NG interface 1430 for connecting the CU to the NGC, the X2 interface, and the like.

Although it may seem that the slot format configuration and indication methods described with reference to FIGS. 11 and 12 are limited to terminals performing communication with the base station, this is merely an example for convenience of description, and exemplary embodiments of the present disclosure are not limited thereto. For example, the slot format configuration and indication methods described with reference to FIGS. 11 and 12 may be similarly applied to the case of IAB-DU and/or IAB-MT. For example, for each serving cell of the IAB-DU, the IAB-DU may receive a higher layer parameter *IAB-DU-Resource-Configuration* for IAB-DU resource configuration, thereby configuring a slot format in each slot set. On the other hand, the IAB-MT may receive configuration information of 'slot format' over one or more slots for each serving cell through a higher layer parameter *tdd-UL-DL-ConfigurationDedicated-IAB-MT* from at least one upper node of the IAB-MT. When the IAB-MT receives the higher layer parameter *tdd-UL-DL-ConfigurationDedicated-IAB-MT,* the received higher layer parameter may substitute the higher layer parameter *tdd-UL-DL-ConfigurationDedicated* in the above-described slot format configuration and indication method. Specifically, the higher layer parameter *tdd-UL-DL-ConfigurationDedicated-IAB-MT* may include the following information.

☐ IAB-MT slot configuration set (i.e. *slotSpecificConfigurationsToAddModList-14B-MT*): A set of slot configurations
☐ Slot index (i.e. *slotIndex*): Index of a slot included in the set of slot configurations
☐ IAB-MT symbol directions (i.e. *symbols-IAB-MT*): The direction of the slot indicated by the slot index.
☐ If the IAB-MT symbol directions are all downlink (*symbols-IAB-MT*= allDownlink), all symbols within the corresponding slot are downlink symbols.
☐ If the IAB-MT symbol directions are all uplink (*symbols-IAB-MT* = allUplink), all symbols within the corresponding slot are uplink symbols.
☐ If the IAB-MT symbol directions are explicit (*symbols-IAB-MT* = explicit), *nrofDownlinkSymbols* may indicate the number of downlink symbols located in the first part of the slot, and *nrofUplinkSymbols* may indicate the number of uplink symbols located in the last part of the corresponding slot. If *nrofDownlinkSymbols* or *nrofUplinkSymbols* is omitted, the corresponding parameter may be regarded as indicating a value of 0. The remaining symbols within the slot become flexible symbols.
☐ If the IAB-MT symbol directions are IAB-MT explicit (*symbols-IAB-MT = explicit-IAB-MT*), *nrofDownlinkSymbols* may indicate the number of downlink symbols located in the first part of the slot, and *nrofUplinkSymbols* may indicate the number of uplink symbols located in the last part of the corresponding slot. If *nrofDownlinkSymbols* or *nrofUplinkSymbols* is omitted, the corresponding parameter may be regarded as indicating a value of 0. The remaining symbols within the slot become flexible symbols.

Similarly to the above-mentioned normal terminal, the IAB-MT may also receive the DCI format 2_0, and through this, may receive configuration information of a slot format from the base station of the IAB-DU of the parent node. In the case of DCI format 2_0 received by the IAB-MT, candidate values of each SFI field may not be limited to the values shown in Table 14. For example, the candidate values of each SFI field of the DCI format 2_0 received by the IAB-MT may further include values shown in Tables 21 and 22.

[Table 21]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 56 | U | U | U | U | U | U | U | U | U | U | U | U | U | F |
| 57 | U | U | U | U | U | U | U | U | U | U | U | U | F | F |
| 58 | U | U | U | U | U | U | U | U | U | U | U | F | F | F |

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 59 | U | U | U | U | U | U | U | U | U | U | F | F | F | F |
| 60 | U | U | U | U | U | U | U | U | U | F | F | F | F | F |
| 61 | U | U | U | U | U | U | U | U | F | F | F | F | F | F |
| 62 | U | U | U | U | U | U | U | F | F | F | F | F | F | F |
| 63 | U | U | U | U | U | U | F | F | F | F | F | F | F | F |
| 64 | U | U | U | U | U | F | F | F | F | F | F | F | F | F |
| 65 | U | U | U | U | F | F | F | F | F | F | F | F | F | F |
| 66 | U | U | U | F | F | F | F | F | F | F | F | F | F | F |
| 67 | U | U | F | F | F | F | F | F | F | F | F | F | F | F |
| 68 | U | F | F | F | F | F | F | F | F | F | F | F | F | F |
| 69 | U | F | F | F | F | F | F | F | F | F | F | F | F | D |
| 70 | U | U | F | F | F | F | F | F | F | F | F | F | F | D |
| 71 | U | U | U | F | F | F | F | F | F | F | F | F | F | D |
| 72 | U | F | F | F | F | F | F | F | F | F | F | F | D | D |
| 73 | U | U | F | F | F | F | F | F | F | F | F | F | D | D |
| 74 | U | U | U | F | F | F | F | F | F | F | F | F | D | D |
| 75 | U | F | F | F | F | F | F | F | F | F | F | D | D | D |
| 76 | U | U | F | F | F | F | F | F | F | F | F | D | D | D |

[Table 22]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 77 | U | U | U | F | F | F | F | F | F | F | F | D | D | D |
| 78 | U | U | U | U | U | U | U | U | U | U | U | U | F | D |
| 79 | U | U | U | U | U | U | U | U | U | U | U | F | F | D |
| 80 | U | U | U | U | U | U | U | U | U | U | F | F | F | D |
| 81 | U | U | U | U | U | U | U | U | U | U | U | F | D | D |
| 82 | U | U | U | U | U | U | U | U | U | U | F | F | D | D |
| 83 | U | U | U | U | U | U | U | U | U | F | F | F | D | D |
| 84 | U | F | D | D | D | D | D | D | D | D | D | D | D | D |
| 85 | U | U | F | D | D | D | D | D | D | D | D | D | D | D |
| 86 | U | U | U | F | D | D | D | D | D | D | D | D | D | D |
| 87 | U | F | F | D | D | D | D | D | D | D | D | D | D | D |
| 88 | U | U | F | F | D | D | D | D | D | D | D | D | D | D |
| 89 | U | U | U | F | F | D | D | D | D | D | D | D | D | D |
| 90 | U | F | F | F | D | D | D | D | D | D | D | D | D | D |
| 91 | U | U | F | F | F | D | D | D | D | D | D | D | D | D |
| 92 | U | U | U | F | F | F | D | D | D | D | D | D | D | D |

(continued)

| Slot format | Svmbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 93 | U | U | U | U | U | U | U | U | U | F | F | F | F | D |
| 94 | U | U | U | U | U | U | F | F | F | F | F | F | D | D |
| 95 | U | U | U | U | U | U | F | F | D | D | D | D | D | D |
| 96 | U | U | U | U | U | U | U | D | D | D | D | D | D | D |

The IAB-MT may receive information on symbols not to be used by the IAB-MT for a certain serving cell through a higher layer parameter (e.g. *Provided Guard Symbols* MAC CE). The IAB-MT may perform a transition (i.e. operation change) between the IAB-MT and the IAB-DU of the IAB node during a time period including the symbols not used by the IAB-MT. The base station may signal a numerology for the symbols to the terminal through a higher layer parameter (e.g. *Provided Guard Symbols* MAC CE).

In a cell of a certain IAB-DU, a symbol within a slot may be configured as one of three types: 'hard', 'soft', and 'unavailable (or not-available)' (HSNA).

If a certain downlink, uplink, or flexible symbol is configured as the hard type, the cell of the IAB-DU may perform a signal transmit and/or reception operation in the corresponding symbol. This may mean that the fact that a certain symbol is configured as the hard type guarantees the reflection of the downlink, uplink, or flexible symbol configuration of the IAB-DU for the corresponding symbol.

Specifically, in an exemplary embodiment of the communication system, an F1 application protocol (F1AP) signaling as shown in Table 23 may be provided, and the upper IAB node (e.g. IAB donor, parent node, core network, etc.) may configure a DU resource type of the lower IAB node (e.g. IAB node, child node). Referring to Table 23, information of the DU resource type may include one HSNA slot configuration list consisting of one or more HSNA slot configurations. In this case, one HSNA slot configuration list may include HSNA slot configurations according to the maximum number of HSNAs (e.g. *maxnoofHSNA*). The n-th HSNA slot configuration included in the HSNA slot configuration list may include information on whether to apply the hard type, soft type, or not-available type to each of downlink symbols, uplink symbols, and flexible symbols of the n-th slot according to an application periodicity and a starting time of the HSNA slot configuration list.

[Table 23]

| IE/group name | range | IE type and reference | liminality |
|---|---|---|---|
| HSNA slot configuration list | 0..1 | | |
| >HSNA slot configuration item | 1 .. *<maxnoofHSNASlo ts>* | | |
| >>HSNA (Downlink) | | Enumerated (H, S, NA) | HSNA value for a downlink symbol of a slot |
| >>HSNA (Uplink) | | Enumerated (H, S, NA | HSNA value for a uplink symbol of a slot |
| >>HSNA (Flexible) | | Enumerated (H, S, NA | HSNA value for a flexible symbol of a slot |

If a certain downlink, uplink, or flexible symbol is configured as the soft type, the IAB-DU cell may perform a signal transmission and reception operation in the symbol when at least one of the following conditions is satisfied.

- Condition 1: The IAB-MT (co-located/associated with the IAB-DU) does not perform transmission or reception in the corresponding symbol.

- Condition 2: The IAB-MT (co-located/associated with the IAB-DU) can perform transmission or reception in the corresponding symbol, but the transmission/reception operation of the IAB-MT does not change due to the use of the symbol at the IAB-DU.

- Condition 3: The IAB-MT (co-located/associated with the IAB-DU) receives a DCI format 2_5 indicating the corresponding soft symbols as 'available'.

If a certain downlink, uplink, or flexible symbol is configured as the 'unavailable (or not-available (NA)) type', the IAB-DU (i.e. cell) may not perform transmission or reception in the symbol.

If the IAB-DU transmits one of a cell-specific, periodic, or semi-static signal or channel included in the following list in symbol(s) of a certain slot, the IAB-DU may perform a transmission/reception operation by assuming that the corresponding symbol(s) in the corresponding slot are configured as the hard type regardless of the configured resource type.

- SS/PBCH block, type 0-PDCCH CSS sets configured by a system information block 1 (SIB1) for PDCCH configuration (i.e. PDCCHs for a type 0-PDCCH CSS sets configured by *pdcchConfigSIB1),* periodic CSI-RS, and/or the like

If the IAB-DU receives one of a cell-specific, periodic, or semi-static signal or channel included in the following list in symbol(s) of a certain slot, the IAB-DU may perform a transmission/reception operation by assuming that the corresponding symbol(s) in the corresponding slot are configured as the hard type regardless of the configured resource type.

□ PRACH, scheduling request (SR)

- Following information may be configured for each cell in the set of cells of the IAB-DU.

□ IAB-DU cell identifier (i.e. *iabDuCellId-AI*): Identifier of the IAB-DU cell
□ AI position within DCI format (i.e. *positionInDCI-AI*): Position of an availability identifier (AI) index field within the DCI format 2_5.
□ Availability combinations (i.e. *availabilityCombinations*): includes a list of the following two pieces of information for availability combinations.

- Resource availability (i.e. *resourceAvailability*): indicates resource availability for soft symbols included in one or more slots of the IAB-DU cell. The availability of soft symbols within one slot may be determined by referring to values in Table 17.
- Availability combination identifier (i.e. *availabilityCombinationId*): indicates a mapping between the resource availability (i.e. *resourceAvailability*) and the AI index field in the DCI format 2_5.

As described above, in the DCI format 2_5, one AI index field may indicate to the IAB-DU the availability of soft symbols included in each slot in a certain slot set. In this case, the slot set may start from the earliest slot among the slots of the IAB-DU overlapping in the time axis with the slot in which the IAB-MT detects the corresponding DCI format 2_5. In addition, the size of the slot set may be greater than or equal to a PDCCH monitoring periodicity of the DCI format 2_5 given from a higher layer parameter SearchSpace. The AI index field of the DCI format 2_5 may include $\max\{\lceil \log_2(maxAIindex)\rceil, 1\}$ bits and may be mapped to one of the values of Table 18. In this case, the maximum value of the AI index (i.e. maxAIindex) may mean a maximum value among the provided availability combination identifiers (i.e. *availabilityCombinationId*). Table 24 may indicate a mapping relationship between the resource availability value and the soft symbol type within one slot.

[Table 24]

| Value | Indication |
|-------|------------|
| 0 | No indication of availability for soft symbols |
| 1 | Indicates that downlink symbols are available.<br>No indication of availability for uplink and flexible soft symbols |
| 2 | Indicates that uplink symbols are available.<br>No indication of availability for downlink and flexible soft symbols |
| 3 | Indicates that downlink and uplink soft symbols are available.<br>No indication of availability for flexible soft symbols |
| 4 | Indicates that flexible soft symbols are available.<br>No indication of availability for downlink and uplink soft symbols |

(continued)

| Value | Indication |
|---|---|
| 5 | Indicates that downlink and flexible soft symbols are available. No indication of availability for uplink soft symbols |
| 6 | Indicates that uplink and flexible soft symbols are available. No indication of availability for downlink soft symbols |
| 7 | Indicates that downlink, uplink, and flexible soft symbols are available |

As described above, the upper IAB node including the IAB donor may indicate whether the lower IAB node uses the soft symbols based on the DCI format 2_5 and the contents of Table 16. On the other hand, such the function may be designed assuming that the IAB node operates in a half-duplex manner. In other words, such the function may be designed mainly assuming that the MT and DU of the IAB node operate in a time division multiplexing (TDM) scheme or time division duplexing (TDD) scheme.

In an exemplary embodiment of the communication system, the F1AP signaling as shown in Table 25 may be used. Through this, the IAB node may report or deliver, to the upper IAB node (e.g. IAB donor or parent node), multiplexing information on a multiplexing capability between the IAB-DU of the IAB node (or, cell of a gNB-DU) and the IAB-MT of the IAB node (or, a cell configured in a co-located IAB-MT). Referring to Table 25, the multiplexing information may include one IAB-MT cell list composed of information on one or more IAB-MT cells. In this case, one IAB-MT cell list may include IAB-MT cell information according to the maximum number of serving cells (i.e. *maxnoofServingCells*). The n-th IAB-MT cell information included in the IAB-MT cell list may include NR cell identity (ID) information of the corresponding cell and information on whether the following four types of multiplexing are supported.

- DU_RX/MT_RX multiplexing: informs whether the IAB node supports simultaneous receptions in the DU and the MT
- DU_TX/MT_TX multiplexing: informs whether the IAB node supports simultaneous transmissions in the DU and the MT
- DU_TX/MT_RX multiplexing: informs whether the IAB node can simultaneously perform transmission in the DU and reception in the MT
- DU_RX/MT_TX multiplexing: informs whether the IAB node can simultaneously perform reception in the DU and transmission in the MT

[Table 25]

| IE/group name | range | IE type and reference | liminality |
|---|---|---|---|
| IAB-MT cell list | 1 | | |
| >IAB-MT cell item | 1.. <maxnoofServingCells> | | |
| >>NR cell identity | | Bit string (size: 36) | Identity of a serving cell configured for a co-located IAB-MT |
| >>DU_RX/MT_RX | | Enumerated (supported, not-supported) | Indicates whether the IAB node supports simultaneous receptions in DU and MT |
| >>DU_TX/MT_TX | | Enumerated (supported, not-supported) | Indicates whether the IAB node supports simultaneous transmissions in DU and MT |
| >>DU_TX/MT_RX | | Enumerated (supported, not-supported) | Indicates whether the IAB node simultaneously supports transmission in DU and reception in MT |
| >>DU_RX/MT_TX | | Enumerated (supported, not-supported) | Indicates whether the IAB node simultaneously supports reception in DU and transmission in MT |

According to Table 25, the IAB node may semi-statically report the DU/MT multiplexing capability or whether to support the DU/MT simultaneous operations for each cell, but whether the IAB node supports the DU/MT simultaneous operations may depend entirely on the corresponding IAB node itself. The upper IAB node may not support controlling the DU/MT simultaneous operations of the lower IAB node dynamically or semi-statically depending on a situation.

FIG. 15 is a flowchart illustrating a first exemplary embodiment of a method for resource management of an IAB node in a communication system.

FIG. 15 shows a first exemplary embodiment of the method for resource management of an IAB node by taking the operation of the IAB node determining whether to use the IAB-DU resources as an example. However, this is only an example for convenience of description, and exemplary embodiments of the present disclosure are not limited thereto. For example, in the present disclosure, configurations described for 'whether to use IAB-DU resources' may be applied similarly or identically also to 'whether to use IAB node resources', 'whether to use IAB-MT resources', 'whether to use DU/MT simultaneous operation resources', and the like.

Referring to FIG. 15, in the order of determining whether to use the IAB-DU resources of the IAB node, the IAB node may identify whether the corresponding IAB-DU resources are available, and in order to determine whether to use the IAB-DU resources, may receive, from the upper IAB node, at least one of higher layer IAB-MT resource configuration information and higher layer IAB-DU resource configuration information (S1500). As an example, the higher layer IAB-MT resource configuration information may include slot configuration (i.e. downlink/uplink/flexible (DUF)) information and symbol configuration information for a cell (or cell group) of the IAB-MT. As another example, the higher layer IAB-DU resource configuration information may include slot configuration (i.e. downlink/uplink/flexible (DUF)) information and symbol configuration information for a cell (or cell group) of the IAB-DU.

The higher layer IAB-DU resource configuration information may include type (i.e. hard, soft, or not-available) information of the IAB-DU resources configured by the upper IAB node. The higher layer IAB-DU resource configuration information may include a part or all of cell-specific/semi-static downlink signals and channels such as SSB(s), type 0-PDCCH CSS set configured by a SIB1 for PDCCH configuration, CSI-RS, etc. configured in a cell (or cell group) configured to the IAB-DU. The higher layer IAB-DU resource configuration information may include a part or all of cell-specific/semi-static downlink signals and channels such as PRACH, SR, etc. configured in a cell (or cell group) configured to the IAB-DU.

In addition to the above-described higher layer configuration, the IAB node may receive at least one of a physical layer (L1 signaling) IAB-MT resource indicator and a physical layer IAB-DU resource indicator from the upper IAB node (S1510). As an example, the physical layer IAB-MT resource indicator may be a DCI format 2_0 including a slot format indicator for a cell (or a set of cells) which is configured to the IAB-MT. As another example, the physical layer IAB-DU resource indicator may be a DCI format 2_5 including a soft resource AI of the IAB-DU.

Finally, the IAB node may finally determine whether to use the IAB-DU resources based on the higher layer signaling (S1500) and the L1 signaling (S1510) (S1520).

Meanwhile, in general, it may not be possible to force all terminals to implement the same feature. The UE capability report may enable an expensive terminal to implement a large amount of features with high performance, and may enable a low-cost terminal to implement a small amount of features with low performance. The UE capability report may make it possible to secure the degree of freedom in terminal implementation for various situations, and when the capability information is reported to the network, the base station may configure each function within the limits supported by each terminal. Certain functions may be promised to be mandatory for all terminals to implement, and in this case, it may be possible to omit the UE capability report for the mandatory functions.

It may be possible for the terminal to perform UE capability reporting of different values for one function for each frequency band or for each duplex scheme. For example, the terminal may support a specific function for a frequency range 1 (FR1), which means a band below 6 GHz, but may report to the base station that the terminal does not support a specific function for a frequency range 2 (FR2), which means a band above 6 GHz. As another example, the terminal may report to the base station that a specific function is supported in the time division duplexing (TDD) scheme but not supported in the frequency division duplexing (FDD) scheme.

When the terminal performs the UE capability reporting, the base station should follow (should not violate) the content of the UE capability report when perform configuration, indication, or scheduling on the terminal. If the base station indicates, to the terminal, configuration, indication or scheduling contrary to the UE capability report, the terminal may ignore it.

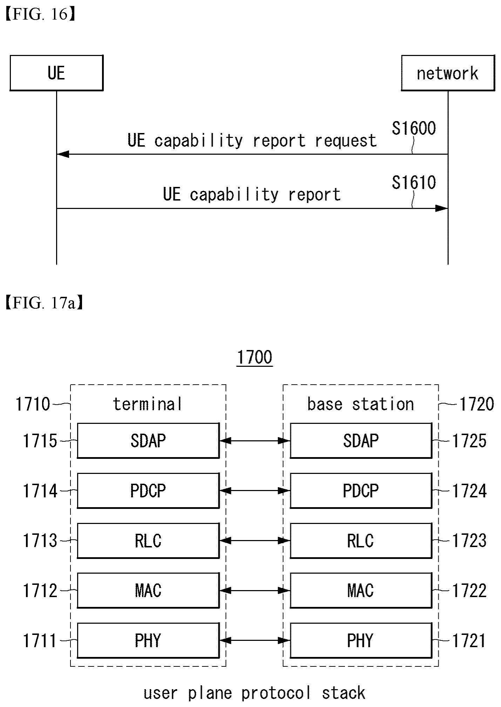

FIG. 16 is a sequence chart illustrating an exemplary embodiment of a UE capability reporting procedure in a communication system.

Referring to FIG. 16, in the UE capability reporting procedure, the base station may transmit a UE capability report request signal to the terminal through a higher layer parameter *UECapabilityEnquiry* when the terminal is in RRC connected mode (i.e. RRC_CONNECTED state) (S1600). In this case, the network may refer to only the UE capability report after access stratum (AS) security activation, and may not retransmit or report the UE capability report before the AS security activation to the core network (CN). Upon receiving the UE capability report request signal, the terminal may compile UE capability information according to a specific procedure, and report it to the base station through a UE capability information signal (e.g. *UECapabilityInformmation*) (S1610).

The specific procedure for compiling the UE capability information signal may include a procedure of generating at least one of a list (i.e. *supportedBandCombinationList*) of band(s) or band combination(s) (BC(s)) supported by the terminal, feature set (FS) information related to feature sets supported by the terminal, or feature set combination (FSC) information related to feature set combinations supported by the terminal. For example, when the base station requests a UE capability report from the terminal in order to obtain information on band(s) or band combination(s) supported by the terminal, the terminal may report which band(s) it supports for each radio access technology (RAT). To this end, the base station may set a RAT-type in a UE RAT capability report request signal (e.g. *UE-CapabilityRAT-Request*), which is included in a UE RAT capability report request list signal (e.g. *ue-CapabilityRAT-RequestList*) that is a higher layer message, to one of 'nr' , 'eutra-nr' , 'eutra' , and 'eutra-fdd' . This may mean that the base station may request a UE capability report for one or more RATs or RAT combinations from the terminal, and in this case, the terminal may respond to each request for a list of support bands for a plurality of RATs or RAT combinations. For example, if the RAT-type is set to 'nr', the terminal may include a list of bands or band combinations to which NR-DC can be applied in the UE capability report. As another example, if the RAT-type is set to 'eutra-nr', the terminal may include a list of bands or band combinations applicable to multi-RAT DC (MR-DC) such as EN-DC, NGEN-DC, NE-DC, or the like in the UE capability report. In addition, when the base station requests a UE capability report, the base station may provide, to the terminal, a list of bands for which the terminal determines whether support is provided, through a higher layer parameter *frequencyBandListFilter.* For the bands included in the higher layer parameter *frequencyBandListFilter*, the terminal may determine a candidate band combination by considering 'predetermined RAT types supported for each band', 'information on RAT-types requested by the base station', etc., and may include the candidate band combination in the UE capability report.

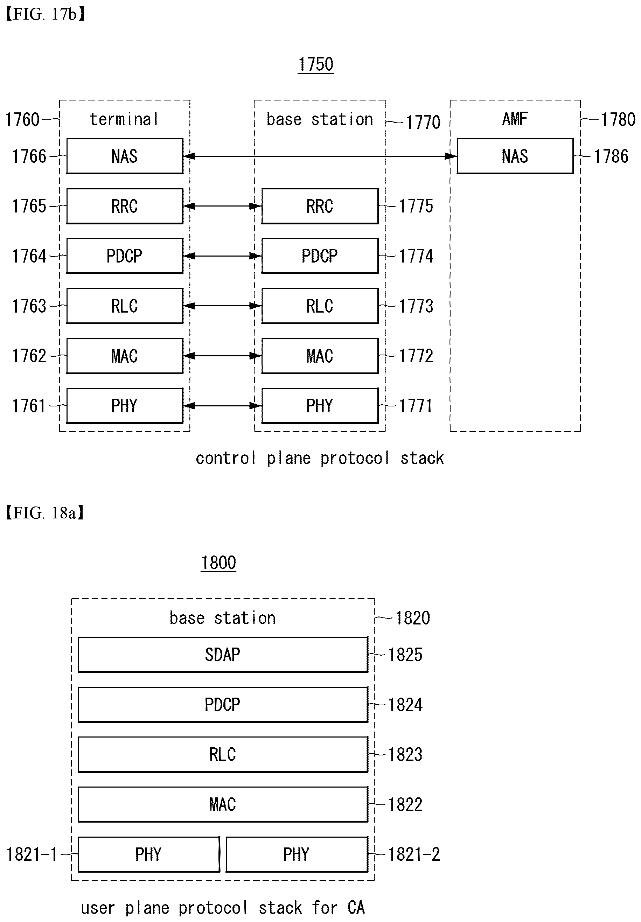

FIGS. 17A and 17B are conceptual diagrams for describing a first exemplary embodiment of a user plane protocol stack structure and a control plane protocol stack structure in a communication system.

Referring to FIGS. 17A and 17B, a radio interface protocol stack or radio interface protocol stack structures 1700 and 1750 may be defined in a radio connection section between communication nodes. For example, the radio interface protocol stack may be divided into a physical layer, a data link layer, a network layer, and the like, which are vertically configured.

The radio interface protocol stack may be divided into the user plane protocol stack 1700 and the control plane protocol stack 1750. Here, the control plane may be a plane for transmitting a control signal. The control signal may be referred to as a signaling signal. The user plane may be a plane for transmitting user data.

Referring to FIG. 17A, the communication system may include a terminal 1710 and a base station 1720. The terminal 1710 may be referred to as a user equipment (UE). The base station 1720 may correspond to an eNB, a gNB, or the like. The terminal 1710 and the base station 1720 may perform mutual data signal transmission/reception based on the user plane protocol stack structure 1700 shown in FIG. 17A.

In the user plane air interface protocol stack structure 1700 of the communication system, the terminal 1710 and the base station 1720 may include PHY layers 1711 and 1721 included in L1, MAC layers 1712 and 1722, RLC layers 1713 and 1723, and packet data convergence protocol (PDCP) layers 1714 and 1724 included in L2, service data adaptation protocol (SDAP) layers 1715 and 1725 included in L3, and the like.

Referring to FIG. 17B, the communication system may include a terminal 1760 and a base station 1770. The terminal 1760 and the base station 1770 may perform mutual control signal transmission/reception based on the control plane protocol stack structure 1750 shown in FIG. 17B.

In the control plane protocol stack structure 1750 of the communication system, the terminal 1760 and the base station 1770 may include PHY layers 1761 and 1771 included in L1, MAC layers 1762 and 1772, RLC layers 1763 and 1773, and PDCP layers 1764 and 1774 included in L2, and RRC layers 1765 and 1775 included in L3, and the like.

The communication system may further include an Access and Management Mobility Function (AMF) 1780. In the control plane protocol stack structure 1750, the terminal 1760 and the AMF 1780 may include non-access stratum (NAS) layers 1766 and 1786. The base station 1770 may not include a NAS layer. In other words, in the control plane protocol stack structure 1750, the NAS layer of the base station 1770 may be transparent.

The 5G communication system can provide techniques for improving wireless coverage and/or reducing network configuration costs. For example, the 5G communication system can provide integrated access and backhaul (IAB) technology that provides wireless backhaul/fronthaul that can coexist with a radio access network and repeater technology that covers shadow areas at low cost.

In the 5G NR communication system, it may be possible to support flexible and dense wireless backhaul links for each cell without wired network support through the IAB features. Additionally, the protocol structures of FIGS. 17A and 17B can be appropriately changed and applied depending on a situation when applying carrier aggregation (CA) or dual connectivity (DC).

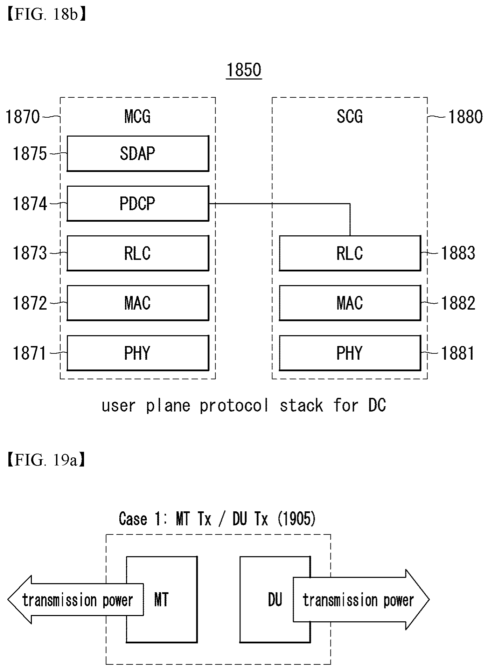

FIG. 18A is a conceptual diagram for describing a user plane protocol structure for carrier aggregation (CA) in a base station of a communication system, and FIG. 18B is a conceptual diagram for describing a user plane protocol structure for dual connectivity (DC) in a base station of a communication system.

Referring to FIGS. 18A and 18B, a radio interface protocol stacks or radio interface protocol stack structures 1800 and 1850 may be defined in a radio connection section between communication nodes. For example, in the radio connection section between communication nodes, the user plane protocol stack structure 1800 for carrier aggregation (CA) may be defined. Alternatively, in the radio connection section between communication nodes, the user plane protocol stack structure 1850 for dual connectivity (DC) may be defined.

Referring to FIG. 18A, the communication system may include a base station 1820. The base station 1820 may correspond to an eNB, a gNB, or the like. The base station 1800 applying CA may operate two or more PHY layers 1821-1 and 1821-2 to perform transmission and reception in two or more component carriers (CCs). In this case, each of the PHY layers 1821-1 and 1821-2 may be connected to one MAC layer 1822 through an independent hybrid automatic repeat request (HARQ) entity for each CC (or each serving cell).

The connection to higher layers such as RLC 1823, PDCP 1824, and SDAP 1825 may be based on the descriptions of FIGS. 17A and 17B. This is because CA assumes support for multiple carriers at a single transmission point, and when operating CA at multiple transmission points, the base station 1800 may require a backhaul with a latency of 0 ms between the transmission points for a single MAC entity.

Referring to FIG. 18B, the communication system may include a master cell group (MCG 1870) and a secondary cell group (SCG) 1880. A cell or base station of the MCG 1870 and SCG 1880 may configure a DC with a lower node such as a terminal based on the user plane protocol stack structure 1850 for DC. In the user plane radio interface protocol stack structure 1850 for DC, the cell or base station of the MCG 1870 may include a PHY layer 1871 included in L1, a MAC layer 1872, RLC layer 1873, and PDCP layer 1874 included in L2, a SDAP layer 1875 included in L3, and the like. Meanwhile, the cell or base station of the SCG 1880 may include a PHY layer 1881 included in L1, a MAC layer 1882 and RLC layer 1883 included in L2, and the like.

The base station applying DC may use two or more transmission nodes 1870 and 1880 to perform transmission and reception in two or more CCs. In this case, the transmission nodes may include a first node (i.e. master node, master gNB, MgNB) 1870 leading connection with 5GC and the remaining node(s) (i.e. second node(s), secondary node(s), secondary gNB(s), MgNB) 1880 supporting auxiliary connection with 5GC.

The first node 1870 and the remaining node 1880 may also be referred to as MeNB or SeNB when applying multi-RAT DC such as LTE-NR or NR-LTE. In the case of DC, since a backhaul structure with a latency greater than 0 (e.g. 3ms, etc.) is assumed, unlike CA, RLC layers 1873 and 1883, MAC layers 1872 and 1882, and PHY layers 1871 and 1881, which are separated between the MgNB 1870 and the SgNB 1880, may be supported.

For example, this may mean that in a PDCP layer 1874, separate data for the MeNB 1870 and SeNB 1880 may be scheduled independently of each other. The structure in which the PDCP or higher layers are shared operating DC (i.e. using the PDCP or higher layers as a single entity when operating DC) in the above description is merely an example of DC operations, and in actual application, DC and CA are not mutually exclusive, and it is possible to apply them simultaneously.

As another example, the MgNB 1870 may configure a cell group consisting of one or more CCs, and the cell group may be referred to as a master cell group (MCG). Similarly, the SgNB 1880 may configure a cell group consisting of one or more CCs, and the cell group may be referred to as a secondary cell group (SCG). In this case, multiple CCs within one cell group (i.e. within the MCG or SCG) may be operated by the CA protocol structure described above.

An exemplary embodiment of the communication system supporting 5G wireless communication may support the following various DC types.

☐ EUTRA-NR DC (EN-DC): DC in which the MCG is configured based on 4G Evolved Universal Terrestrial Radio Access (E-UTRA), and the SCG is configured based on the 5G NR. Here, a control plane of the MCG may be configured through a 4G core (i.e. Evolved Packet Core (EPC)).

☐ Next Generation-RAN E-UTRA-NR DC (NGEN-DC): DC in which the MCG is configured based on the E-UTRA and the SCG is configured based on the NR. In this case, a control plane of the MCG may be configured through a 5G core (i.e. Next Generation Core (NGC)).

☐ NR-EUTRA DC (NE-DC): DC in which the MCG is configured based on the NR and the SCG is configured based on the E-UTRA

☐ NR DC: DC in which both the MCG and the SCG are configured based on the NR

The base station may perform DC-related configuration for the terminal (i.e. UE, MT, etc.) using one or more higher layer parameters. For example, higher layer parameters used by the base station for the DC-related configuration may include at least some of *CellGroupConfig*, *SpCellConfig*, *ReconfigurationWithSync*, and *SCellConfig*. The higher layer parameter *CellGroupConfig* may be the same as or similar to that shown in Tables 26 and 27.

[Table 26]

```
CellGroupConfig ::=                SEQUENCE {
    cellGroupId      // cell group ID. 0 indicates MCG, and a value of 1 or more indicates SCG
    rlc-BearerToAddModList //configure a relation list of MAC logical channel, RLC entity, and radio bearer
        rlc-BearerToReleaseList   //release a relation list of MAC logical channel, RLC entity, and radio bearer
    mac-CellGroupConfig     //MAC parameters applicable to the corresponding cell group
    physicalCellGroupConfig
        //configuration of common PHY layer parameters such as HARQ, power control, etc. within a cell
group
    spCellConfig          //configure a SpCell of a cell group by referring to SpCellConfig
    sCellToAddModList     //configure a list of SCells included in a cell group by referring to SCellConfig
    sCellToReleaseList     //exclude the Scell from a cell group by referring to SCellIndex
    ...,
    [[
```

```
    reportUplinkTxDirectCurrent   //configure whether a UE reports a uplink DC position
        ]],
```

[Table 27]

```
[[
bap-Address-r16 //configure a backhal adaptation protocol (BAP) address of a parent node in a cell group
bh-RLC-ChannelToAddModList-r16 //configure backhaul RLC entities and a list of corresponding MAC logical
channels
bh-RLC-ChannelToReleaseList-r16 //release backhaul RLC entities and a list of corresponding MAC logical channels
flc-TransferPath-r16 //configure a F1-C transfer path to be used by EN-DC IAB-MT
simultaneousTCI-UpdateList1-r16 //a list 1 of serving cells for which TCI updata can be simultaneously performed
through a single MAC CE (corresponding to coresetPoolIndex =0, i.e. corresponding to serving cells of a first TRP
for which TCI update can be simultaneouly performed)
simultaneousTCI-UpdateList2-r16 //a list 2 of serving cells for which TCI updata can be simultaneously performed
through a single MAC CE (corresponding to coresetPoolIndex =0, i.e. corresponding to serving cells of a first TRP
for which TCI update can be simultaneouly performed)
simultaneousSpatial-UpdatedListl-r16 //a list 1 of serving cells for which spatial relation update can be simultaneously performed through a single MAC CE (corresponding to coresetPoolIndex =0, i.e. corresponding to serving
cells of a first TRP for which spatial relation update can be simultaneouly performed)
simultaneousSpatial-UpdatedList2-r16 //a list 2 of serving cells for which spatial relation update can be simultaneously performed through a single MAC CE (corresponding to coresetPoolIndex =0, i.e. corresponding to serving
cells of a first TRP for which spatial relation update can be simultaneouly performed)
uplinkTxSwitchingOption-r16 //configure a UL TX switching option for inter-band UL CA or (NG)EN-DC
uplinkTxSwitchingPowerBoosting-r16 //configure whether a UE can perform 3dB power boosting for a second carrier when applying inter-band UL CA
]]
}
```

Meanwhile, the higher layer parameter *SpCellConfig* may be the same as or similar to that shown in Table 28.

[Table 28]

```
SpCellConfig ::=                SEQUENCE {
        servCellIndex   // servince cell ID of PSCell. PCell of MCG uses ID=0
        reconfigurationWithSync //configuration values used for synchronous reconfiguration of a target SpCell
        rlf-TimersAndConstants  //configuration of a timer and a constant value for detecting and triggerig cell-
level radio link failure
        rlmInSyncOutOfSyncThreshold
        spCellConfigDedicated   //ServingCellConfig of SpCell
        ...
}
```

Meanwhile, the higher layer parameter *ReconfigurationWithSync* may be the same as or similar to that shown in Table 29.

[Table 29]

```
ReconfigurationWithSync ::=      SEQUENCE {
     spCellConfigCommon   // ServingCellConfigCommon of SpCell
     newUE-Identity        // New RNTI value configuration
     t304            // configure a t304 timer value
     rach-ConfigDedicated         CHOICE {
                     // RACH configuration used for Reconfiguration with sync
       uplink
       supplementaryUplink
     }                                              OPTIONAL,  -- Need N
     ...,
     [[
     smtc   //configure a periodicity, offset, and duration of SSB to be used for change of PSCell or PCell, or
addition of PSCell
     ]],
     [[
     daps-UplinkPowerConfig-r16
     ]]
}
```

Meanwhile, the higher layer parameter *SCellConfig* may be the same as or similar to that shown in Table 30.

[Table 30]

```
SCellConfig ::=                SEQUENCE {
     sCellIndex             // SCell index
     sCellConfigCommon       // ServingCellConfigCommon of SCell
     sCellConfigDedicated       // ServingCellConfig of SCell
     ...,
     [[
     smtc   //configure a periodicity, offset, and duration of SSB to be used for addition of SCell
     ]],
     [[
     sCellState-r16            // configure whether to activate SCell
     secondaryDRX-GroupConfig-r16
     ]]
}
```

Meanwhile, cell-specific configurations of a serving cell configured as a SpCell or SCell in the MCG or SCG may be performed with reference to a higher layer parameter *ServingCellConfigCommon*. The higher layer parameter *ServingCellConfigCommon* may be the same as or similar to that shown in Table 31.

[Table 31]

```
ServingCellConfigCommon ::=        SEQUENCE {
   physCellId         // physical cell ID of the corresponding serving cell
```

```
   downlinkConfigCommon    // cell-specific downlink configuration of the corresponding serving cell
   uplinkConfigCommon      // cell-specific uplink configuration of the corresponding serving cell
   supplementaryUplinkConfig  // cell-specific SUL configuration of the corresponding serving cell
      n-TimingAdvanceOffset    // timing advanced offset configuration
   ssb-PositionsInBurst          CHOICE {
      shortBitmap       // 4-bit SSB position configuration
          mediumBitmap        // 8-bit SSB position configuration
      longBitmap        // 64-bit SSB position configuration
   }
   ssb-periodicityServingCell     // SSB periodicity configuration
   dmrs-TypeA-Position      // first DMRS symbol configuration for Type A DMRS
      lte-CRS-ToMatchAround    // LTE CRS rate matching configuration
   rateMatchPatternToAddModList  // rate matching pattern list additional/new configuration
      rateMatchPatternToReleaseList   // rate matching pattern list release
   ssbSubcarrierSpacing         // subcarrier spacing configuration for SSB
      tdd-UL-DL-ConfigurationCommon  // cell-specific D/F/U configuration for a TDD cell (refer to detail
description on slot formats)
      ss-PBCH-BlockPower          // SSB transmission power (-60dBm ~ 50dBm)
   ...,
   [[
   channelAccessMode-r16          CHOICE {
      dynamic
      semiStatic
   }
   discoveryBurstWindowLength-r16
   ssb-PositionQCL-r16          // configure QCL relation between SSB positions
   highSpeedConfig-r16
   ]]
}
```

Meanwhile, UE-specific configurations or cell-specific configurations of a serving cell configured as a SpCell or SCell in the MCG or SCG may be performed with reference to a higher layer parameter *ServingCellConfig*. The higher layer parameter *ServingCellConfig* may be the same as or similar to that shown in Tables 32 and 33.

[Table 32]

```
ServingCellConfig ::=          SEQUENCE {
   tdd-UL-DL-ConfigurationDedicated   // UE-specific D/F/U configuration for a TDD cell (refer to detail
description on slot formats)
   initialDownlinkBWP         // UE-specific configuration for an initial BWP (BWP #0)
   downlinkBWP-ToReleaseList   // a list of BWPs to be released
   downlinkBWP-ToAddModList   // a list of new BWPs or BWPs to be added
   firstActiveDownlinkBWP-Id
   bwp-InactivityTimer
   defaultDownlinkBWP-Id
   uplinkConfig
   supplementaryUplink
   pdcch-ServingCellConfig
   pdsch-ServingCellConfig
   csi-MeasConfig
   sCellDeactivationTimer
   crossCarrierSchedulingConfig
```

```
        tag-Id
        dummy
        pathlossReferenceLinking
        servingCellMO
        ...,
        [[
        lte-CRS-ToMatchAround
        rateMatchPatternToAddModList
        rateMatchPatternToReleaseList
        downlinkChannelBW-PerSCS-List
        ]],
```

[Table 33]

```
[[
    supplementaryUplinkRelease
    tdd-UL-DL-ConfigurationDedicated-IAB-MT-r16   // IAB-MT-specific D/F/U configuration for a TDD
cell (refer to detail description on slot formats)
    dormantBWP-Config-r16
    ca-SlotOffset-r16              CHOICE {
        refSCS15kHz
        refSCS30KHz
        refSCS60KHz
        refSCS120KHz
    }
    channelAccessConfig-r16
    intraCellGuardBandsDL-List-r16
    intraCellGuardBandsUL-List-r16
    csi-RS-ValidationWith-DCI-r16
    lte-CRS-PatternList1-r16
    lte-CRS-PatternList2-r16
    crs-RateMatch-PerCORESETPoolIndex-r16
    enableTwoDefaultTCI-States-r16
    enableDefaultTCI-StatePerCoresetPoolIndex-r16
    enableBeamSwitchTiming-r16
    cbg-TxDiffTBsProcessingType1-r16
    cbg-TxDiffTBsProcessingType2-r16
    ]]
}
```

Meanwhile, cell-specific configuration of a serving cell configured a SpCell or SCell within the MCG or SCG may be performed with reference to the higher layer parameter *ServingCellConfig*. The higher layer parameter *ServingCell-Config* may be the same as or similar to the following.

The DC or CA may be defined within a specific frequency resource. The DC or CA may operate within one band (e.g. 4G band or 5G band) including one or more CCs. The DC or CA operating within one band may be referred to as 'intra-band DC' or 'in-band CA'. On the other hand, the DC or CA may be applied across one or more bands or may be applied across a band combination configured as a combination of one or more bands. The DC or CA applied across one or more bands or a band combination may be referred to as 'inter-band DC' or 'inter-band CA'.

Meanwhile, the DC or CA may operate within one CC. The DC or CA operating within one CC may be referred to as 'intra-carrier DC' or 'intra-carrier CA'. On the other hand, the DC or CA may be applied across one or more CCs. The DC or CA applied across one or more CCs may be referred to as 'inter-carrier DC' or 'inter-carrier CA'.

Meanwhile, the DC or CA may operate within one frequency range (FR). The DC or CA applied within one FR may be referred to as 'intra-FR DC' or 'intra-FR CA'. On the other hand, the DC or CA may be applied across one or more FRs. For example, some cell groups or CCs may exist in the FR1, and the remaining cell groups or CCs may be configured to exist in the FR2. They may be applied across one or more FRs. The DC or CA may be referred to as 'inter-FR DC' or 'inter-FR CA'.

The intra-FR DC/CA, inter-FR DC/CA, intra-band DC/CA, inter-band DC/CA, intra-carrier DC/CA, inter-carrier DC/CA, or the like may be configured according to how far or close a frequency axis distance between one or more CCs or serving cells is. Hardware of a communication node such as a terminal or a base station may be implemented differently depending on which combination of the DCs/CAs should be supported. Hereinafter, exemplary embodiments of hardware implementation schemes of communication nodes will be described, taking an implementation scheme for supporting intra-band CA or inter-band CA as an example. However, this is merely an example for convenience of description, and exemplary embodiments of the present disclosure are not limited thereto.

In all exemplary embodiments of the present disclosure described below, for convenience of description, six types of DU/MT simultaneous operation types are defined as follows. Here, it may be assumed that a DU and an MT operating simultaneously are co-located (i.e. included in one IAB node or considered as one IAB node).

(1) Case A (both DU/MT Tx): Case A may correspond to a case where an IAB-DU and an IAB-MT perform transmissions simultaneously at the same time (symbol). In other words, the IAB-DU may transmit a downlink signal, and the IAB-MT may transmit an uplink signal.

(2) Case B (both DU/MT Rx): Case B may correspond to a case where an IAB-DU and an IAB-MT perform receptions simultaneously at the same time (symbol). In other words, the IAB-DU may receive an uplink signal, and the IAB-MT may receive a downlink signal.

(3) Case C (DU Rx / MT Tx): Case C may correspond to a case where an IAB-DU performs reception and an IAB-MT performs transmission at the same time (symbol). In other words, the IAB-DU may receive an uplink signal, and the IAB-MT may transmit an uplink signal.

(4) Case D (DU Tx / MT Rx): Case D may correspond to a case where an IAB-DU performs transmission and an IAB-MT performs reception at the same time (symbol). In other words, the IAB-DU may transmit a downlink signal and the IAB-MT may receive a downlink signal.

(5) Case E (FDM of DU/MT is required): Case E may correspond to a case where a time-frequency resource of an IAB-DU and a time-frequency resource of an IAB-MT need to be frequency division multiplexed (FDMed) during simultaneous DU/MT operations. Case E may be required when interference control capability of the DU or MT is relatively limited.

(6) Case F (Case F: SDM of DU/MT is required): Case F may correspond to a case where a time-frequency resource of an IAB-DU and a time-frequency resource of an IAB-MT need to be time division multiplexed (TDMed) during simultaneous DU/MT operations. Case F may be supported if interference control capability of the DU or MT is relatively good.

An IAB node (or IAB-DU to IAB-MT) according to an exemplary embodiment of the present disclosure may support at least one of six types of Case A to Case F. In addition, an IAB node according to an exemplary embodiment of the present disclosure may report information related to the supported simultaneous operation or a combination of supported types to an upper IAB node (IAB donor, etc.) or core network (CU, etc.). The example in Table 16 described above may be an example therefor. In addition, the upper IAB node or CU may indicate which simultaneous operation type or combination of types to apply to which time-frequency resource for the IAB node reporting the supported simultaneous operation type or combination of supported types. This indication may be configured through higher layer signaling or may be dynamically indicated through L1/L2 signaling.

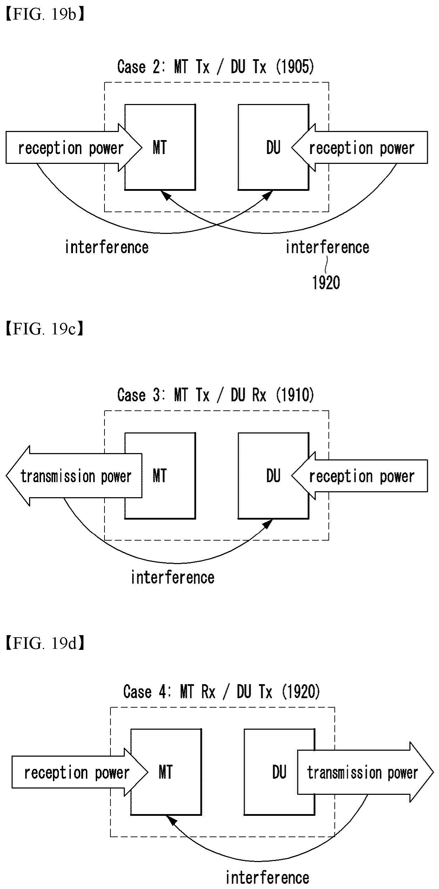

FIG. 19A is a conceptual diagram for describing a case where both an MT and a DU of an IAB node are in the transmission mode, FIG. 19B is a conceptual diagram for describing a case where both an MT and a DU of an IAB node are in the reception mode, FIG. 19C is a conceptual diagram for describing a case where an MT of an IAB node is in the transmission mode and a DU thereof is in the reception mode, and FIG. 19D is a conceptual diagram for describing a case where an MT of an IAB node is the reception mode and a DU thereof is in the transmission mode.

Before referring to FIGS. 19A to 19D, the IAB node may support at least some of the six operation modes described above. In the examples of FIGS. 19A to 19D, it is assumed that the IAB node supports four cases: Case A 1900, Case B 1905, Case C 1910, and Case D 1920 among the six cases exemplified above.

First, referring to Case A 1900 in FIG. 19A, both MT and DU are in the transmission mode. Here, the MT may refer to an IAB-MT, and the DU may refer to an IAB-DU. Therefore, in FIG. 19A, the DU may transmit a downlink signal, and the MT may transmit an uplink signal. As illustrated in FIG. 19A, since the DU transmits a downlink signal, the DU may perform downlink transmission with a higher transmission power than the MT that transmits an uplink signal. In FIG. 19A, a strength of the transmission power is indicated by a thickness of arrow. Therefore, a case that the DU has a higher transmission power is shown.

Referring to Case B 1905 in FIG. 19B, both MT and DU are in the reception mode. Here, the MT may refer to an IAB-MT, and the DU may refer to an IAB-DU. Therefore, in FIG. 19B, the DU may receive an uplink signal, and the MT may receive a downlink signal. A strength of a reception power is indicated by a thickness of arrow also in FIG. 19B, but a difference in strengths of received signals may not be large, or the strengths of received signals may be the same.

Referring to Case C 1910 in FIG. 19C, an MT is in the transmission mode and a DU is in the reception mode. Here, the MT may refer to an IAB-MT, and the DU may refer to an IAB-DU. Therefore, in FIG. 19C, the DU may receive an uplink signal, and the MT may transmit an uplink signal. A strength of a reception power is indicated by a thickness of arrow. As illustrated in FIG. 19C, a case where a transmission power of the MT is greater than a reception power of the DU is shown.

Referring to Case D 1910 in FIG. 19D, an MT is in the reception mode and a DU is in the transmission mode. Here, the MT may refer to an IAB-MT, and the DU may refer to an IAB-DU. Therefore, in FIG. 19D, the DU may transmit a downlink signal, and the MT may receive a downlink signal. A strength of a reception power is indicated by a thickness of arrow as in FIG. 19D. As illustrated in FIG. 19D, a case where a transmission power of the DU is greater than a reception power of the MT is shown.

In the situations shown in FIGS. 19A to 19D, the IAB node may need to measure and report uplink-downlink interference (i.e. cross link interference (CLI)) according to DU/MT transmission and reception operations. For example, when the IAB node operates according to Case A 1900, a transmission operation of the MT (i.e. uplink transmission because a signal is transmitted from the MT to the DU) and a transmission operation of the DU (i.e. downlink transmission because a signal is transmitted from the DU to the MT or UE) may be performed simultaneously. Therefore, a CLI may occur due to the simultaneous operations. In this case, since both the DU and MT are performing transmissions, CLI measurement may be performed by one of the DU, MT, or UE located in different locations.

On the other hand, when the IAB node operates according to Case B 1905, since a reception operation of the MT (i.e. downlink reception because a signal is transmitted from the DU to the MT) and a reception operation of the DU (i.e. uplink reception because a signal is transmitted from the UE to the DU) are performed simultaneously, a CLI 1920 may occur. In this case, measurement and reporting of the CLI 1920, which is an interference caused by an uplink signal received at the DU to the MT receiving a downlink signal, need to be supported by technical specifications.

The 5G NR system may be likely to experience UL-DL mutual interference (CLI) due to dynamic TDD, full duplex, and IAB DU/MT simultaneous operations. Therefore, to prevent performance degradation due to the CLI, CLI measurement and reporting functions need to be supported.

The Rel-16 NR of 5G NR standards two CLI measurement methods as follows.

    1) CLI-received signal strength indicator (CLI-RSSI) measurement
    2) SRS-reference signal received power (SRS-RSRP) measurement

Layer 3 (L3) filtering may be applied to both of the above two methods, and measurement and reporting may be performed based on time/frequency resources according to detailed configuration parameters in Table 25 and Table 26 below. In addition, reporting of measurement values supports event triggered reporting and periodic reporting, and measurement and reporting may be applied when operating NR multi-cells such as CA/DC.

Table 34 is an example of configuring parameters related to SRS-RSRP measurement.

[Table 34]

```
MeasObjectCLI-r16 ::=          SEQUENCE {
    cli-ResourceConfig-r16         CLI-ResourceConfig-r16,
    ...
}

CLI-ResourceConfig-r16 ::=     SEQUENCE {
    srs-ResourceConfig-r16         SetupRelease { SRS-ResourceListConfigCLI-r16 }
    rssi-ResourceConfig-r16        SetupRelease { RSSI-ResourceListConfigCLI-r16 }
}
```

```
SRS-ResourceListConfigCLI-r16 ::=   SEQUENCE (SIZE (1.. maxNrofCLI-SRS-Resources-r16)) OF SRS-
ResourceConfigCLI-r16

RSSI-ResourceListConfigCLI-r16 ::=  SEQUENCE (SIZE (1.. maxNrofCLI-RSSI-Resources-r16)) OF
RSSI-ResourceConfigCLI-r16

SRS-ResourceConfigCLI-r16 ::=      SEQUENCE {
    srs-Resource-r16            SRS-Resource,
    srs-SCS-r16                 SubcarrierSpacing,
    refServCellIndex-r16           ServCellIndex
    refBWP-r16                  BWP-Id,
    ...
}
```

Table 35 is an example of configuring parameters related to CLI-RSSI measurement.

[Table 35]

```
RSSI-ResourceConfigCLI-r16 ::=     SEQUENCE {
    rssi-ResourceId-r16            RSSI-ResourceId-r16,
    rssi-SCS-r16                  SubcarrierSpacing,
    startPRB-r16                  INTEGER (0..2169),
    nrofPRBs-r16                   INTEGER (4..maxNrofPhysicalResourceBlocksPlus1),
    startPosition-r16             INTEGER (0..13),
    nrofSymbols-r16               INTEGER (1..14),
    rssi-PeriodicityAndOffset-r16      RSSI-PeriodicityAndOffset-r16,
    refServCellIndex-r16           ServCellIndex
    ...
}

RSSI-ResourceId-r16 ::=          INTEGER (0.. maxNrofCLI-RSSI-Resources-r16-1)

RSSI-PeriodicityAndOffset-r16 ::=  CHOICE {
    sl10                 INTEGER(0..9),
    sl20                 INTEGER(0..19),
    sl40                 INTEGER(0..39),
    sl80                 INTEGER(0..79),
    sl160                 INTEGER(0..159),
    sl320                 INTEGER(0..319),
    sl640                 INTEGER(0..639),
    ...
}
```

The 3GPPP TS38.473 provides F1 application protocol (F1AP) signaling as shown in Table 36 below.
Through the F1AP signaling as shown in Table 36, the gNB-DU may report/deliver information to be considered in CLI mitigation to the gNB-CU (or, gNB-CU to gNB-DU, or gNB-DU to another gNB-DU). Here, the CLI mitigation may include both CLI measurement/reporting and additional implementation accordingly.
Here, the information to be considered in CLI mitigation may be delivered by 'intended TDD DL-UL configuration', and the 'intended TDD DL-UL configuration' may include information such as SCS, CP, and TDD UL-DL slot configuration.

[Table 36]

| IE/group name | range | IE type and reference | Description |
|---|---|---|---|
| NR SCS | | Enumerated (scs15, scs30, scs60, scs120, ...) | Values such as scs15, scs30, scs60, and scs120 correspond to subcarrier spacings. |

(continued)

| IE/group name | range | IE type and reference | Description |
|---|---|---|---|
| NR cyclic prefix | | Enumerated (normal, extended, ...) | Type of cyclic prefix determining the number of symbols within one slot |
| NR DL-UL transmission periodicity | | Enumerated (ms0p5, ms0p625, ms1, ms1p25, ms2, ms2p5, ms3, ms4, ms5, ms10, ms20, ms40, ms60, ms80, ms100, ms120, ms140, ms160, ...) | Periodicity is expressed in a format of msXpYZ, and corresponds to X.YZ milliseconds |
| Slot configuration list | 1 | | |
| >Slot configuration item | 1..<maxnoofSlots> | | |
| >>Slot index | | Integer (0..5119) | |
| >> CHOICE Symbol Allocation in Slot | | | |
| >>> All DL | | NULL | This means that all symbols within the slot are DL symbols |
| >>> All UL | | NULL | This means that all symbols within the slot are UL symbols |
| >>> Both DL and UL | | | |
| >>>> Number of DL symbols | | Integer (0..13) | |
| >>>> Number of UL symbols | | Integer (0..13) | |

Referring to Table 36, 'intended TDD DL-UL configuration' may include a slot configuration list including information on DL/UL symbols for one or more slots, that is, TDD DL-UL pattern information. If a certain slot includes both DL symbol(s) and UL symbol(s), how many symbols from a stating part of the slot are DL symbols and how many symbols immediately before an ending part of the slot are UL symbols may be notified through parameters 'Number of DL symbols' and 'Number of UL symbols', respectively.

Meanwhile, TS38.473 of 3GPP standard may provide F1AP signaling as shown in Tables 37 and 38 below, and through this, the IAB node may deliver resource configuration information (gNB-DU cell resource configuration) for cell(s) supported by a gNB-DU of the IAB node to an upper IAB node (e.g. IAB donor, parent node, gNB-CU) or neighbor IAB nodes. In other words, the IAB node may report/deliver information on TDD/FDD resource parameters for each activated cell to the upper IAB node or neighbor IAB nodes through F1AP signaling.

[Table 37]

| IE/group name | range | IE type and reference | Description |
|---|---|---|---|
| Subcarrier spacing | | Enumerated (kHz15, kHz30, kHz60, kHz120, kHz240, spare3, spare2, spare1, ...) | The subcarrier spacing is used for a reference of TDD/FDD slot configuration. |
| DUF transmission periodicity | | Enumerated (ms0p5, ms0p625, ms1, ms1p25, ms2, ms2p5, ms5, ms10, ...) | |
| DUF slot configuration list | 0..1 | | |

(continued)

| IE/group name | range | IE type and reference | Description |
|---|---|---|---|
| >DUF slot configuration item | 1..<maxno of-DUFSlot s> | | Corresponds to 'maxNrofSlots' |
| >> CHOICE DUF Slot Configuration | | | |
| >>> explicit format | | | |
| >>>> permutation | | Enumerated (DFU, UFD, ...) | |
| >>>> Number of DL symbols | | Integer (0 .. 14) | |
| >>>> Number of UL symbols | | Integer (0 .. 14) | |
| >>> Implicit format | | | |

[Table 38]

| IE/group name | range | IE type and reference | Description |
|---|---|---|---|
| >>>>DUF slot format index | | Integer (0..254) | Corresponds to an index of a preconfigured table |
| HSNA transmission periodicity | | Enumerated (ms0p5, ms0p625, ms1, ms0p5, ms0p625, ms1, ms1p25, ms2, ms2p5, ms5, ms10, ms20, ms40, ms80, ms160, ...) | |
| HSNA slot configuration list | 0..1 | | |
| >HSNA slot configuration item | 1..<maxno ofHSNASI ots> | | |
| >>HSNA Downlink | | Enumerated (H, S, NA) | HSNA value for DL symbol of a slot |
| >>HSNA Uplink | | Enumerated (H, S, NA) | HSNA value for UL symbol of a slot |
| >>HSNA Flexible | | Enumerated (H, S, NA) | HSNA value for flexible symbol of a slot |

Referring to Tables 37 and 38, the resource allocation information may include downlink/uplink/flexible (DUF) configuration information for one or more slot lists that are repeated at a specific periodicity (i.e. DUF transmission periodicity). In this case, 'maxnoofDUFSlots' in Table 28 may be defined as 320 as the maximum number of slots within 10ms, and 'maxnoofHSNASlots' may be defined as 5120 as the maximum number of H/S/NA slots within 160ms.

The number of downlink symbols and the number of uplink symbols within one slot may be set by the parameters 'Number of Downlink Symbols' and 'Number of Uplink Symbols', respectively. In addition, when a permutation parameter is set to 'DFU', downlink symbol(s) may be arranged at a starting part of the slot and uplink symbol(s) may be arranged at an ending part of the slot. On the other hand, when the permutation parameter is set to 'UFD', uplink symbol(s) may be arranged at the starting part of the slot, and downlink symbol(s) may be arranged at the ending part of the slot. Other parameters and detailed configuration values are shown in Table 30.

In the GPP Rel-17 specifications, HSNA slot configurations in Table 30 are specified to be expanded to the frequency domain for a purpose of supporting simultaneous operations of the IAB-DU and IAB-MT. In other words, the 3GPP Rel-17 specifications stipulate that HSNA slot configurations can be expanded to the frequency domain so that IAB-DU resources and IAB-MT resources can support FDM or SDM as well as TDM. The base station or upper node may configure or indicate one or more RB sets or RB set groups to which frequency-domain HSNA configuration is to be applied. In addition, the base station or upper node may indicate, to an IAB-MT of a lower node, availability of one or more frequency-domain soft resources for one or more RB sets and/or RB set groups within a specific time resource. This indication may be delivered to the IAB-MT of the lower node through an availability indicator of an extended form in a DCI format 2_5.

In this case, when the IAB-node receives the DCI format 2_5, the IAB-node may use an RB set, RB set group, and/or slots indicated by the availability indicator as available as IAB-DU resources of the IAB-node.

Meanwhile, in 3GPP Rel-17, the following functions have been additionally introduced to support IAB-DU resources and IAB-MT resources not only TDMed but also FDMed or SDMed during simultaneous operations of the IAB-DU and IAB-MT. For example, transmission timing adjustment method, FDM through frequency axis resource allocation, additional PDSCH power adjustment (i.e. DL Tx power adjustment) in addition to PDSCH power configuration through a higher layer parameter *powerControlOffset*, desired uplink power spectral density (PSD) reporting, etc. have been introduced. These functions are summarized as follows.

The gNB may determine a desired timing advance (TA) configuration, and provide it to the UE/IAB-MT. The UE/IAB-MT may use the provided TA to determine an uplink transmission timing relative to a downlink reception timing observed by the UE/IAB-MT.

The IAB node may support an additional mode for uplink timing.

- The IAB-MT may determine an uplink transmission timing using the provided TA and the provided additional offset, and facilitate multiplexing of IAB-MT reception/IAB-DU reception of the upper node.
- The IAB-MT may facilitate multiplexing of IAB-MT transmission/IAB-DU transmission by matching its uplink transmission timing to the IAB-DU downlink transmission timing.

The IAB node uplink timing mode may be indicated to the upper node through a MAC-CE.

If the IAB-DU and the IAB-MT of the IAB-node are subject to half-duplex constraints, normal transmission/reception of one side may not be guaranteed during transmission/reception of the other side, and vice versa. For example, a case where they are deployed and operate at the same frequency may be an example. When the IAB node supports enhanced frequency or space multiplexing capability, additional multiplexing mode(s) may be supported. For example, multiplexing mode(s) such as IAB-MT reception/IAB-DU reception, IAB-MT transmission/IAB-DU transmission, IAB-MT reception/IAB-DU transmission, and IAB-MT transmission/IAB-DU reception may be supported. The IAB node may report duplexing constraints between the IAB-MT and IAB-DU through F1AP signaling. The IAB node may indicate through F1AP signaling whether FDM is required for enhanced multiplexing operations.

A scheduler of the IAB-DU or IAB-donor-DU may follow the gNB-DU resource configuration received through F1AP, which defines use of scheduling resources to account for the aforementioned duplexing constraints.

The resource configuration may assign hard, soft, or unavailable type to each symbol of each DU cell.

Transmission/reception may be possible in symbols configured as 'hard', and scheduling may not occur in symbols configured as 'unavailable', except in special cases. For symbols configured as 'soft', scheduling may occur conditionally based on an explicit availability indicator from ab upper node via the DCI format 2_5 or an implicit availability determination of the IAB node. The implicit availability determination may be made by the IAB node depending on whether operations of the IAB-DU are to affect co-located IAB-MT(s).

The resource configuration may be shared between adjacent IAB nodes and the IAB donor to facilitate interference management, dual connectivity, and enhanced multiplexing.

To facilitate the transition from IAB-MT to IAB-DU operations and vice versa, guard symbols may be used to overcome potentially misaligned symbol boundaries between the IAB-MT domain and the IAB-DU domain (e.g. a case where a reception boundary of the IAB-MT is not aligned with a transmission boundary of the IAB-DU). Specifically, the IAB node may indicate the desired number of guard symbols to the parent node, while the parent node indicates to the IAB node the number of guard symbols actually provided for a specific transition.

The IAB node supporting enhanced multiplexing capabilities (i.e. IAB-MT reception/IAB-DU reception, IAB-MT transmission/IAB-DU transmission, IAB-MT reception/IAB-DU transmission, IAB-MT transmission/IAB-DU reception) may provide information on an upper node through a MAC-CE to facilitate scheduling of enhanced multiplexing operations by the IAB nodes as follows.

- Recommendation of IAB-MT transmission/reception (Tx/Rx) beam(s)
- Desired IAB-MT transmission PSD range
- Desired IAB-DU transmission power adjustment of the parent node
- Requirement of an uplink transmission timing mode of the IAB-MT

Accordingly, the parent node may provide MAC-CE information to the IAB node to facilitate enhanced multiplexing in the IAB node and/or the parent node:

- Restricted IAB-DU Tx beam
- IAB-DU Tx power adjustment of the actual parent node
- Uplink transmission timing mode of the IAB-MT

Meanwhile, in the 5G NR system, a base station (or relay station such as an IAB node) may control a UE or MT to report channel state information (CSI) using specific time/frequency resources. For convenience of description, a relay station with general base station functions such as eNB and gNB and a relay station with part or all of base station functions such as IAB node (e.g. IAB-DU, IAB-MT) and repeater will be collectively referred to as a relay station. In addition, for convenience of description in the following description, various types of terminals such as a UE configured with a mobile equipment (ME) and a UMTS subscriber identity module (USIM), an ME configured with a mobile terminal (MT) and a terminal equipment (TE), an MT configured with a mobile communication functional unit will all be collectively referred to as a terminal.

The CSI may mean all or part of a channel quality indicator (CQI), precoding matrix indicator (PMI), CSI-RS resource indicator (CRI), SS/PBCH block resource indicator SSBRI, layer indicator (LI), rank indicator (RI), layer-1 reference resource received power (L1-RSRP), or layer-1 signal-to-noise and interference ratio (L1-SINR). For CSI reporting, a terminal may receive N (N is 1 or more) reporting configurations (*CSI-ReportConfig*), M (M is 1 or more) resource configurations (*CSI-ResourceConfig*), and trigger configurations including a list of one or more trigger states (e.g. *CSI-AperiodicTriggerStateList* or *CSI-SemiPersistentOnPUSCH-TriggerStateList*) from a higher layer of the base station.

Each report configuration *CSI-ReportConfig* may be composed of some or all of higher layer parameters shown in Tables 39 to 41 below.

[Table 39]

```
CSI-ReportConfig ::=              SEQUENCE {
    reportConfigId              // ID of report configuration
    carrier                     // ServCellIndex, index indicator of a serving cell in which resource
configuration associated with the report configuration exists.  If this field does not exist, it means that
resource configuration exists in the serving cell identical to the report configuration.
    resourcesForChannelMeasurement      // resource configuration ID for channel measurement resource
(CMR)
    csi-IM-ResourcesForInterference         // resource configuration ID for CSI-IM based interference
measurement resource (IMR)
    nzp-CSI-RS-ResourcesForInterference     // resource configuration ID NZP CSI-RS based IMR
    reportConfigType                CHOICE {  // temporal operation type of report configuration
        periodic                SEQUENCE { configuration related to periodic reporting
        reportSlotConfig          // slot periodicity and offset for periodic reporting
        pucch-CSI-ResourceList    // PUCCH resource list for periodic reporting
        },
        semiPersistentOnPUCCH               SEQUENCE { // PUCCH-based semi-peristent reporting related
configuration
        reportSlotConfig          // slot periodicity and offset for semi-persisitent reporting
        pucch-CSI-ResourceList    // PUCCH resource list for semi-persistent reporting
        },
        semiPersistentOnPUSCH               SEQUENCE { // PUSCH-based semi-peristent reporting related
configuration
        reportSlotConfig          // slot periodicity and offset for semi-persisitent reporting
        reportSlotOffsetList      // timing offset list for semi-persisitent reporting
        p0alpha                   // power control parameter p0-alpha set index for semi-persisitent
reporting
        },
        aperiodic               SEQUENCE { // aperiodic reporting configuration
        reportSlotOffsetList      // timing offset list for aperiodic reporting
        }
    },
```

[Table 40]

```
reportQuantity                    CHOICE {  // CSI componet configuration
     none              // skip actual report (for UE Rx beam switching etc.)
     cri-RI-PMI-CQI        // CSI report composed of CRI, RI, PMI, CQI
     cri-RI-i1               CRI, RI, i1  // CSI report (composed of first PMI)
     cri-RI-i1-CQI              SEQUENCE {  // CSI report composed of CRI, RI, i1, CQI
        pdsch-BundleSizeForCSI       // PDSCH bundling configuration for CSI reporting
     },
     cri-RI-CQI            // CSI report composed of CRI, RI, CQI
     cri-RSRP             // CSI report composed of CRI, RSRP
     ssb-Index-RSRP       // CSI report composed of SSBRI, RSRP
     cri-RI-LI-PMI-CQI    // CSI report composed of CRI, RI, LI, PMI, CQI
  },
   reportFreqConfiguration           SEQUENCE {  // frequency domain property configuration of report
configuration
     cqi-FormatIndicator          // Whether to report wideband CQI or subband CQI
     pmi-FormatIndicator          // Whether to report wideband PMI or subband PMI
     csi-ReportingBand            CHOICE {  // whether to report for each subband
        subbands3              BIT STRING(SIZE(3)),
        ...
        subbands18             BIT STRING(SIZE(18)),
```

```
        ...,
        subbands19-v1530           BIT STRING(SIZE(19))
     }  OPTIONAL   -- Need S


   }
```

[Table 41]

```
timeRestrictionForChannelMeasurements      // whether to apply time-domain measurement restriction for
CMR
   timeRestrictionForInterferenceMeasurements  // whether to apply time-domain measurement restriction
for IMR
     codebookConfig             // Codebook configuration
     groupBasedBeamReporting          CHOICE {
        enabled                NULL,
        disabled               SEQUENCE {
           nrofReportedRS             ENUMERATED {n1, n2, n3, n4}            OPTIONAL
-- Need S
        }
     },
     cqi-Table         // CQI table indicator
     subbandSize       // subband size indicator for report configuration
     non-PMI-PortIndication    // index indicator of a CSI RS port used for calculating CSI of a rank R for non-
PMI report not including PMI
     ...,
   }
```

Each resource configuration *CSI-ResourceConfig* may be configured with some or all of higher layer parameters shown in Tables 42 to 44 below.

[Table 42]

```
CSI-ResourceConfig ::=      SEQUENCE {
    csi-ResourceConfigId      CSI-ResourceConfigId,
    csi-RS-ResourceSetList      CHOICE {
        nzp-CSI-RS-SSB            SEQUENCE {
            nzp-CSI-RS-ResourceSetList  SEQUENCE (SIZE (1..maxNrofNZP-CSI-RS-
ResourceSetsPerConfig)) OF NZP-CSI-RS-ResourceSetId
                                                        OPTIONAL, -- Need R
            csi-SSB-ResourceSetList    SEQUENCE (SIZE (1..maxNrofCSI-SSB-ResourceSetsPerConfig)) OF
CSI-SSB-ResourceSetId  OPTIONAL  -- Need R
        },
        csi-IM-ResourceSetList      SEQUENCE (SIZE (1..maxNrofCSI-IM-ResourceSetsPerConfig)) OF CSI-
IM-ResourceSetId
    },

    bwp-Id                BWP-Id,
    resourceType            ENUMERATED { aperiodic, semiPersistent, periodic },
    ...
}
```

[Table 43]

```
NZP-CSI-RS-Resource ::=           SEQUENCE {
    nzp-CSI-RS-ResourceId            NZP-CSI-RS-ResourceId,
    resourceMapping                CSI-RS-ResourceMapping,
    powerControlOffset              INTEGER (-8..15),
    powerControlOffsetSS            ENUMERATED{db-3, db0, db3, db6}       OPTIONAL,  -- Need R
    scramblingID                  ScramblingId,
    periodicityAndOffset            CSI-ResourcePeriodicityAndOffset        OPTIONAL,  -- Cond
PeriodicOrSemiPersistent
    qcl-InfoPeriodicCSI-RS            TCI-StateId                    OPTIONAL,  -- Cond Periodic
    ...
}
```

[Table 44]

```
CSI-IM-Resource ::=          SEQUENCE {
    csi-IM-ResourceId              CSI-IM-ResourceId,
    csi-IM-ResourceElementPattern        CHOICE {
        pattern0                  SEQUENCE {
            subcarrierLocation-p0            ENUMERATED { s0, s2, s4, s6, s8, s10 },
            symbolLocation-p0            INTEGER (0..12)
        },
        pattern1                  SEQUENCE {
            subcarrierLocation-p1            ENUMERATED { s0, s4, s8 },
            symbolLocation-p1            INTEGER (0..13)
        }
    }                                OPTIONAL,  -- Need M
    freqBand                CSI-FrequencyOccupation        OPTIONAL,  -- Need M
    periodicityAndOffset            CSI-ResourcePeriodicityAndOffset      OPTIONAL,  -- Cond
PeriodicOrSemiPersistent
    ...
}
```

Trigger configuration *CSI-AperiodicTriggerStateList* or *CSI-SemiPersistentOnPUSCH-TriggerStateList* may be configured with some or all of higher layer parameters as shown in Tables 45 and 46 below.

[Table 45]

```
CSI-MeasConfig ::=              SEQUENCE {
    nzp-CSI-RS-ResourceToAddModList    SEQUENCE (SIZE (1..maxNrofNZP-CSI-RS-Resources)) OF
NZP-CSI-RS-Resource   OPTIONAL, -- Need N
    nzp-CSI-RS-ResourceToReleaseList   SEQUENCE (SIZE (1..maxNrofNZP-CSI-RS-Resources)) OF
NZP-CSI-RS-ResourceId OPTIONAL, -- Need N
    nzp-CSI-RS-ResourceSetToAddModList SEQUENCE (SIZE (1..maxNrofNZP-CSI-RS-ResourceSets))
OF NZP-CSI-RS-ResourceSet
                                                    OPTIONAL, -- Need N
    nzp-CSI-RS-ResourceSetToReleaseList SEQUENCE (SIZE (1..maxNrofNZP-CSI-RS-ResourceSets)) OF
NZP-CSI-RS-ResourceSetId
                                                    OPTIONAL, -- Need N
    csi-IM-ResourceToAddModList      SEQUENCE (SIZE (1..maxNrofCSI-IM-Resources)) OF CSI-IM-
Resource        OPTIONAL, -- Need N
    csi-IM-ResourceToReleaseList      SEQUENCE (SIZE (1..maxNrofCSI-IM-Resources)) OF CSI-IM-
ResourceId        OPTIONAL, -- Need N
```

```
    csi-IM-ResourceSetToAddModList     SEQUENCE (SIZE (1..maxNrofCSI-IM-ResourceSets)) OF CSI-
IM-ResourceSet   OPTIONAL, -- Need N
    csi-IM-ResourceSetToReleaseList     SEQUENCE (SIZE (1..maxNrofCSI-IM-ResourceSets)) OF CSI-IM-
ResourceSetId   OPTIONAL, -- Need N
    csi-SSB-ResourceSetToAddModList     SEQUENCE (SIZE (1..maxNrofCSI-SSB-ResourceSets)) OF CSI-
SSB-ResourceSet   OPTIONAL, -- Need N
    csi-SSB-ResourceSetToReleaseList   SEQUENCE (SIZE (1..maxNrofCSI-SSB-ResourceSets)) OF CSI-
SSB-ResourceSetId OPTIONAL, -- Need N
    csi-ResourceConfigToAddModList     SEQUENCE (SIZE (1..maxNrofCSI-ResourceConfigurations)) OF
CSI-ResourceConfig
```

[Table 46]

```
OPTIONAL, -- Need N
    csi-ResourceConfigToReleaseList     SEQUENCE (SIZE (1..maxNrofCSI-ResourceConfigurations)) OF
CSI-ResourceConfigId
                                                    OPTIONAL, -- Need N
    csi-ReportConfigToAddModList      SEQUENCE (SIZE (1..maxNrofCSI-ReportConfigurations)) OF
CSI-ReportConfig  OPTIONAL, -- Need N
    csi-ReportConfigToReleaseList      SEQUENCE (SIZE (1..maxNrofCSI-ReportConfigurations)) OF CSI-
ReportConfigId
                                                    OPTIONAL, -- Need N
    reportTriggerSize        INTEGER (0..6)                         OPTIONAL, -- Need
M
    aperiodicTriggerStateList      SetupRelease { CSI-AperiodicTriggerStateList }
OPTIONAL, -- Need M
    semiPersistentOnPUSCH-TriggerStateList   SetupRelease { CSI-SemiPersistentOnPUSCH-
TriggerStateList }     OPTIONAL, -- Need M
    ...,
    [[
    reportTriggerSizeDCI-0-2-r16     INTEGER (0..6)                         OPTIONAL --
Need R
    ]]
}
```

In 5G NR, the base station may configure the terminal to derive a CQI according to one of Tables 47 to 50.

[Table 47]

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

[Table 48]

| CQI index | modulation | code rate x 1024 | efficiency |
|---|---|---|---|
| 0 | out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

[Table 49]

| CQI index | modulation | code rate x 1024 | efficiency |
|---|---|---|---|
| 0 | out of range | | |
| 1 | QPSK | 30 | 0.0586 |

(continued)

| CQI index | modulation | code rate x 1024 | efficiency |
|---|---|---|---|
| 2 | QPSK | 50 | 0.0977 |
| 3 | QPSK | 78 | 0.1523 |
| 4 | QPSK | 120 | 0.2344 |
| 5 | QPSK | 193 | 0.3770 |
| 6 | QPSK | 308 | 0.6016 |
| 7 | QPSK | 449 | 0.8770 |
| 8 | QPSK | 602 | 1.1758 |
| 9 | 16QAM | 378 | 1.4766 |
| 10 | 16QAM | 490 | 1.9141 |
| 11 | 16QAM | 616 | 2.4063 |
| 12 | 64QAM | 466 | 2.7305 |
| 13 | 64QAM | 567 | 3.3223 |
| 14 | 64QAM | 666 | 3.9023 |
| 15 | 64QAM | 772 | 4.5234 |

[Table 50]

| CQI index | modulation | code rate x 1024 | efficiency |
|---|---|---|---|
| 0 | out of range | | |
| 1 | QPSK | 78 | 0.1523 |
| 2 | QPSK | 193 | 0.377 |
| 3 | QPSK | 449 | 0.877 |
| 4 | 16QAM | 378 | 1.4766 |
| 5 | 16QAM | 616 | 2.4063 |
| 6 | 64QAM | 567 | 3.3223 |
| 7 | 64QAM | 666 | 3.9023 |
| 8 | 64QAM | 772 | 4.5234 |
| 9 | 64QAM | 873 | 5.1152 |
| 10 | 256QAM | 711 | 5.5547 |
| 11 | 256QAM | 797 | 6.2266 |
| 12 | 256QAM | 885 | 6.9141 |
| 13 | 256QAM | 948 | 7.4063 |
| 14 | 1024QAM | 853 | 8.3301 |
| 15 | 1024QAM | 948 | 9.2578 |

In this case, a combination of a modulation scheme and a transport block size that satisfies conditions below may correspond to one of the CQI indexes in Tables 47 to 50 above:

- Condition 1: The combination is indicated for PDSCH transmission within a CSI reference resource.
- Condition 2: The modulation scheme is indicated by the CQI index.
- Condition 3: When the combination of the transport block size and modulation scheme is applied to the reference resource, an effective channel code rate calculated based thereon is closest to a code rate indicated by the CQI index. In this case, if two or more combinations of modulation scheme and transport block size are calculated to be closest to the code rate indicated by the CQI index, only a combination configured with a transport block of the smallest size among the combinations may be valid.

When a higher layer parameter *timeRestrictionForChannelMeasurements* is set to 'notConfigured' in a report configuration and time domain measurement restriction is not applied to a channel measurement resource (CMR) of the report configuration, the terminal may need to perform channel measurement for calculation of CSI to be reported in an uplink slot n, by considering only non-zero power (NZP) CSI-RS resource(s) located at the same time with or before the CSI reference resource among NZP CSI-RS resources included in the CMR.

When a higher layer parameter *timeRestrictionForChannelMeasurements* is set to 'Configured' in a report configuration and time domain measurement restriction is applied to a CMR of the report configuration, the terminal may need to perform channel measurement for calculation of CSI to be reported in an uplink slot n, by considering only the most recent NZP CSI-RS resource(s) located at the same time with or before the CSI reference resource among NZP CSI-RS resources (occasions) included in the CMR.

When a higher layer parameter *timeRestrictionForInterferenceMeasurements* is set to 'notConfigured' in a report configuration and time domain measurement restriction is not applied to an interference measurement resource (IMR) of the report configuration, the terminal may need to perform interference measurement for calculation of CSI to be reported in an uplink slot n, by considering only resource(s) located at the same time with or before the CSI reference resource among CSI-IM and/or NZP CSI-RS resources included in the IMR.

When a higher layer parameter *timeRestrictionForInterferenceMeasurements* is set to 'Configured' in a report configuration and time domain measurement restriction is applied to an IMR of the report configuration, the terminal may need to perform interference measurement for calculation of CSI to be reported in an uplink slot n, by considering only the most recent occasion located at the same time with or before the CSI reference resource among CSI-IM and/or NZP CSI-RS resources included in the IMR.

A CSI reference resource in a certain serving cell may be defined as follows:

- In the frequency domain, the CSI reference resource may be defined as a downlink PRB group in a band associated with CSI being derived.
- In the time domain, the CSI reference resource for CSI reported in an uplink slot n' may be defined as a downlink slot

$$n - n_{CSI\_ref} - K_{offset} \cdot \frac{2^{\mu_{DL}}}{2^{\mu_{K_{offset}}}}$$ . In this case, $n_{CSI\_ref}$, $K_{offset}$, $2^{\mu DL}$, and $2^{\mu_{K_{offset}}}$ may be set or indicated through higher layer signaling such as RRC and MAC CE, or may be derived by a predetermined rule. For example, the base station may perform RRC configuration or MAC CE indication for $K_{offset}$ to the terminal. As another example, when a single CSI-RS or SSB resource is configured as a CMR for periodic CSI report or semi-persistent CSI report, the terminal may assume $n_{CSI\_ref}$ to be a minimum value indicating a valid downlink slot among integer values greater than or equal to $4 \cdot 2^{\mu DL}$. When multiple CSI-RS or SSB resources are configured as CMRs for periodic CSI reports or semi-persistent CSI reports, the terminal may assume $n_{CSI\_ref}$ to be a minimum value indicating a valid downlink slot among integer values greater than or equal to $5 \cdot 2^{\mu DL}$. As another example, for an aperiodic CSI report that is indicated by DCI to be reported within the same slot as a CSI request, the terminal may assume $n_{CSI\_ref}$ that causes the same slot as the CSI request to be a valid downlink slot. For other aperiodic CSI reports, the terminal may assume $n_{CSI\_ref}$ to be a minimum positive integer satisfying a delay requirement Z' defined separately. When the terminal reports an aperiodic CSI report based on channel or interference measurement using a periodic or semi-persistent CSI-RS/CSI-IM/SSB resource, if the last symbol of the periodic or semi-persistent CSI-RS/CSI-IM/SSB resource is located within the delay requirement Z' from the first OFDM symbol in which the aperiodic CSI report is transmitted (i.e. when Z' symbols or more are not guaranteed from reception of the last OFDM symbol of the CSI-RS/CSI-IM/SSB resource to the first OFDM symbol of the aperiodic CSI report), the terminal may not perform measurement on the CSI-RS/CSI-IM/SSB resource.

A slot that satisfies conditions below within a serving cell may be considered as a valid downlink slot.

- Condition 1: The slot includes at least one downlink (D) or flexible (F) symbol configured by higher layer signaling.
- Condition 2: The slot that is not included within a measurement gap configured for the terminal.

When there is no valid downlink slot for a CSI reference resource of a CSI report configuration within the serving cell, a CSI report for the serving cell may be omitted in the uplink slot n'.

When configured to report a CQI, the terminal may assume items below for a purpose of deriving the CQI and associated RI and PMI within the CSI reference resource.

- Item 1: The first two OFDM symbols are used to transmit control signal(s).
- Item 2: The number of symbols for a PDSCH and DMRS is 12.
- Item 3: The same BWP, subcarrier spacing, and CP length as configured for PDSCH reception.
- Item 4: The same bandwidth as configured for CQI reporting.
- Item 5: There are no REs used for SSB, NZP CSI-RS, and ZP CSI-RS.
- Item 6: Redundancy version (RV) 0.
- Item 7: A ratio between PDSCH EPRE and CSI-RS EPRE follows higher layer configuration (Pc, *powerControlOffset*).
- Item 8: For a DMRS pattern, refer to a parameter *maxLength* and configuration *dmrs-AdditionalPosition* within configuration *DMRS-DownlinkConfig*.
- Item 9: There is no DMRS in PDSCH symbols.
- Item 10: PRB bundling size is assumed to be 2 PRBs.
- Item 11: A relationship of Equation 5 below is satisfied between a PDSCH signal transmitted through PDSCH antenna ports [1000,... , 1000+v-1] for v layers satisfy and a signal transmitted through CSI-RS antenna ports [3000, ... , 3000+P-1].

[Equation 5]

$$\begin{bmatrix} y^{(3000)}(i) \\ \cdots \\ y^{(3000+P-1)}(i) \end{bmatrix} = W(i) \begin{bmatrix} x^{(0)}(i) \\ \cdots \\ x^{(v-1)}(i) \end{bmatrix}$$

Here, $W(i)$ is a precoding matrix indicated by PMI, and P is the number of CSI-RS ports in the CSI-RS resource.

- Item 12: One or more CSI-RS resources configured to the terminal may be divided into one or more (two) resource groups and one or more (N) resource pairs for purposes such as multi-TRP. In this case, M1 resources in the first resource group may each be associated with CSI-RS resource indicators (CRIs), M2 resources in the second resource group may each be associated with other CRIs, N resource pairs each including one resource included in the first resource group and one resource included in the second resource group may be associated another CRIs, respectively, and a mapping relationship between a total of (M1 + M2 + N) CRIs and the CSI-RS resources may be defined/configured. When a CRI assumed for CSI calculation is one of the N CRIs (i.e. when the CRI assumed for CSI calculation is one of the resource pairs), a signal transmitted through antenna ports [3000, ..., 3000+P-1] of a CSI-RS resource included in the first (i.e. j=1) resource group among CSI-RS resources indicated by the assumed CRI, a PDSCH signal transmitted through PDSCH antenna ports [1000, ..., 1000+v1-1] for v1 layers, a signal transmitted through antenna ports [3000, ..., 3000+P-1] of a CSI-RS resource included in the second (i.e. j=2) resource group among the CSI-RS resources indicated by the assumed CRI, and a PDSCH signal transmitted through PDSCH antenna ports [1000+v1, ..., 1000+v1+v2-1] for v2 layers may satisfy Equation 6 below. In this case, the total number of PDSCH layers is v = v1 + v2, the number of CSI-RS ports for each CSI-RS resource may be different, and a ratio between a PDSCH EPRE corresponding to each PDSCH layer and a CSI-RS EPRE for each resource group may be assumed according to a value of (Pc, *powerControlOffset*) set for each CSI-RS resource. Here, $W_j(i)$ is a precoding matrix indicated by the j-th PMI (j∈{1,2}). Signals transmitted from antenna ports corresponding to different resource groups may be assumed as mutual interference when calculating CSI.

[Equation 6]

$$\begin{bmatrix} y_j^{(3000)}(i) \\ \cdots \\ y_j^{(3000+P-1)}(i) \end{bmatrix} = W_j(i) \begin{bmatrix} x^{((j-1)\cdot v_1)}(i) \\ \cdots \\ x^{(v_1+(j-1)\cdot v_2-1)}(i) \end{bmatrix}$$

Each CSI report has a priority value according to rules below (a lower value has a higher priority). When two different CSI reports collide, the two different CSI reports may be combined into one CSI report, or one CSI report among the two different CSI reports may be selected. In these cases, the priorities may be used to adjust CSI content to suit a CSI payload or to select the one CSI report.

A CSI report may be associated with a priority value $\text{Pri}_{iCSI}(y, k, c, s) = 2 \cdot N_{cells} \cdot M_s \cdot y + N_{cells} \cdot M_s \cdot k + M_s \cdot c + s$.

Here, y may be 0 for an aperiodic CSI report to be delivered on a PUSCH, y may be 1 for a semi-persistent CSI report to be delivered on a PUSCH, y may be 2 for a semi-persistent CSI report to be delivered on a PUCCH, and y may be 3 for a periodic CSI report to be delivered on a PUCCH.

$k$ may be 0 for a CSI report carrying L1-RSRP or L1-SINR and $k$ may be 1 for a CSI report not carrying L1-RSRP or L1-SINR.

$c$ may be a serving cell index and $N_{cells}$ may be a value of a higher layer parameter *maxNrofServingCells.*

$s$ may be *reportConfigID* and may a value according to a higher layer parameter *maxNrofCSI-ReportConfigurations.*

When a value of $Pri_{iCSI}(y, k, c, s)$ for a first CSI report is lower than that for a second CSI report, the first CSI report is said to have a priority over the second CSI report.

Two CSI reports are said to conflict if time occupancies of physical channels scheduled to carry the CSI reports overlap in at least one OFDM symbol and the physical channels are transmitted in the same carrier. A case when the terminal is configured to transmit two conflicting CSI reports may be considered.

- When y values differ between the two CSI reports, the following rule may be applied, except when one of y values is 2 and the other is 3 (A case of CSI reports transmitted over PUSCH is described in clause 5.2.3, and a case of CSI reports transmitted over PUCCH is described in clause 5.2.4).
- A CSI report with a higher $Pri_{iCSI}(y, k, c, s)$ value is not transmitted by the terminal.
- Otherwise, the two CSI reports may be multiplexed or one of them is dropped according to priority values, as described in clause 9.2.5.2 of [TS 38.213].

If a semi-persistent CSI report to be carried on a PUSCH overlaps in time with PUSCH data transmission in one or more symbols in the same carrier, and if the earliest symbol of these PUSCH channels starts no earlier than $N_2+d_{2,1}$ symbols after the last symbol of the DCI scheduling the PUSCH where $d_{2,1}$ is the maximum of the $d_{2,1}$ associated with the PUSCH carrying semi-persistent CSI report and the PUSCH with data transmission, the CSI report may not be transmitted by the terminal. Otherwise, if a timeline requirement is not satisfied, this may be treated as an error case.

If the terminal would transmit a first PUSCH that includes semi-persistent CSI reports and a second PUSCH that includes an UL-SCH and the first PUSCH transmission would overlap in time with the second PUSCH transmission, the terminal may not transmit the first PUSCH and transmit the second PUSCH. The terminal may expect that the first and second PUSCH transmissions satisfy the above timing conditions for PUSCH transmissions that overlap in time when at least one of the first or second PUSCH transmissions is in response to a DCI format detection by the terminal.

The terminal may report to the base station how many ($N_{CPU}$) CSI calculations it can perform simultaneously through UE capability reporting. If the terminal needs to start calculation for new N CSI reports while L CSI processing units (CPUs) are already occupied (being used for CSI calculation), the terminal may not perform updates on (N-M) CSI reports having lower priorities according to the above-described prioritization. Here, M may be the largest positive number greater than or equal to 0 and less than or equal to N that satisfies a relationship $\sum_{n=0}^{M-1} O_{CPU}^{(n)} \leq N_{CPU} - L$, and $O_{CPU}^{(n)}$ may mean the number of CPUs used for calculating the n-th CSI.

The number of CPUs required for each CSI report is as follows.

CSI report processing involves multiple CPUs occupied for multiple symbols as follows:

- $O_{CPU}$ = 0 for a CSI report with *CSI-ReportConfig* with higher layer parameter *reportQuantity* set to 'none' and *CSI-RS-ResourceSet* with higher layer parameter *trs-Info* configured
- $O_{CPU}$ = 1 for a CSI report with *CSI-ReportConfig* with higher layer parameter *reportQuantity* set to 'cri-RSRP', 'ssb-Index-RSRP', 'cri-SINR', 'ssb-Index-SINR' or 'none' (and *CSI-RS-ResourceSet* with higher layer parameter *trs-Info* not configured)
- for a CSI report with *CSI-ReportConfig* with higher layer parameter *reportQuantity* set to 'cri-RI-PMI-CQI', 'cri-RI-i1', 'cri-RI-i1-CQI', 'cri-RI-CQI', or 'cri-RI-LI-PMI-CQI',
- if max { $\mu$PDCCH, $\mu$CSI-RS, $\mu$UL} $\leq 3$, and if a CSI report is aperiodically triggered without transmitting a PUSCH with either transport block or HARQ-ACK or both when L = 0 CPUs are occupied, where the CSI corresponds to a single CSI with wideband frequency-granularity and to at most 4 CSI-RS ports in a single resource without CRI report and where codebookType is set to 'typeI-SinglePanel' or where reportQuantity is set to 'cri-RI-CQI', $O_{CPU} = N_{CPU}$,
- [If a *CSI-ReportConfig* is configured with *codebookType* set to 'typeI-SinglePanel' and the corresponding CSI-RS resource set for channel measurement is configured with two resource groups and *N* resource pairs, $O_{CPU} = 2N + M$, where M is defined in clause 5.2.1.4.2.]
- otherwise, $O_{CPU} = K_S$, where $K_S$ is the number of CSI-RS resources in the CSI-RS resource set for channel measurement.

For a CSI report with *CSI-ReportConfig* with higher layer parameter *reportQuantity* not set to 'none', the CPU(s) are occupied for a number of OFDM symbols as follows:

- A periodic or semi-persistent CSI report (excluding an initial semi-persistent CSI report on PUSCH after the PDCCH triggering the report) occupies CPU(s) from the first symbol of the earliest one of each CSI-RS/CSI-IM/SSB resource for channel or interference measurement, respective latest CSI-RS/CSI-IM/SSB occasion no later than the corresponding CSI reference resource, until the last symbol of the configured PUSCH/PUCCH carrying the report.
- An aperiodic CSI report occupies CPU(s) from the first symbol after the PDCCH triggering the CSI report until the last symbol of the scheduled PUSCH carrying the report. When the PDCCH candidates are associated with a search space set configured with *searchSpaceLinking*, for the purpose of determining the CPU occupation duration, the PDCCH candidate that ends later in time among the two linked PDCCH candidates is used.
- An initial semi-persistent CSI report on PUSCH after the PDCCH trigger occupies CPU(s) from the first symbol after the PDCCH until the last symbol of the scheduled PUSCH carrying the report. When the PDCCH candidates are associated with a search space set configured with searchSpaceLinking, for the purpose of determining the CPU occupation duration, the PDCCH candidate that ends later in time among the two linked PDCCH candidates is used.

For a CSI report with *CSI-ReportConfig* with higher layer parameter *reportQuantity* set to 'none' and *CSI-RS-ResourceSet* with higher layer parameter *trs-Info* not configured, the CPU(s) are occupied for a number of OFDM symbols as follows:

- A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for channel measurement for L1-RSRP computation, until $Z_3'$ symbols after the last symbol of the latest one of the CSI-RS/SSB resource for channel measurement for L1-RSRP computation in each transmission occasion.
- An aperiodic CSI report occupies CPU(s) from the first symbol after the PDCCH triggering the CSI report until the last symbol between $Z_3$ symbols after the first symbol after the PDCCH triggering the CSI report and $Z_3'$ symbols after the last symbol of the latest one of each CSI-RS/SSB resource for channel measurement for L1-RSRP computation.

where ($Z_3$, $Z_3'$ ) are defined in the table 5.4-2.

In any slot, the terminal is not expected to have more active CSI-RS ports or active CSI-RS resources in active BWPs than reported as capability. NZP CSI-RS resource is active in a duration of time defined as follows. For aperiodic CSI-RS, starting from the end of the PDCCH containing the request and ending at the end of the scheduled PUSCH containing the report associated with this aperiodic CSI-RS. When the PDCCH candidates are associated with a search space set configured with searchSpaceLinking, for the purpose of determining the NZP CSI-RS resource active duration, the PDCCH candidate that ends later in time among the two linked PDCCH candidates is used. For semi-persistent CSI-RS, starting from the end of when the activation command is applied, and ending at the end of when the deactivation command is applied. For periodic CSI-RS, starting when the periodic CSI-RS is configured by higher layer signalling, and ending when the periodic CSI-RS configuration is released. If a CSI-RS resource is referred N times by one or more CSI report configurations, the CSI-RS resource and the CSI-RS ports within the CSI-RS resource are counted N times. For a CSI-RS resource set for channel measurement configured with two resource groups and N resource pairs, if a CSI-RS resource is referred *X* times by one of the M CSI-RS resources, where M is defined in clause 5.2.1.4.2, and/or one or two resource pairs, the CSI-RS resource and the CSI-RS ports within the CSI-RS resource are counted X times.

As described above, the CSI reported in the uplink slot n may be derived by assuming (or considering) various factors including the following elements as specific values, and in the following description of the present disclosure, the elements that the terminal assumes when generating CSI are named CSI components. The followings are examples of CSI components, and when applied in practice, the CSI components may not be limited thereto and may include more diverse elements provided by the present disclosure.

- Frequency domain and time domain location of CSI reference resource
- Location of valid downlink slots
- CMR/IMR transmission/measurement location (whether minimum delay requirements are satisfied, etc.)
- Priority between CSIs
- Number of CPUs used for each CSI calculation, maximum number of CPUs supported by the terminal, number of CPUs currently occupied, whether CSI reporting is indicated/activated, and whether multi-TRP CSI is calculated
- Downlink power control configuration value (e.g. *powerControlOffset*)
- Discontinuous reception (DRX) configuration, etc.

Radio resources in a mobile communication system can be utilized in various transmission modes to address different scenarios, including integrated access and backhaul (IAB) node operations, multiple transmission and reception point (multi-TRP) operations, and in-band or out-of-band full-duplex communication operations. On the other hand, in the aforementioned mobile communication system, transceivers (or base stations or terminals) can operate with differences in time/frequency/space/power resources for the respective transmission modes, or according to instructions from the base station considering the respective transmission modes, aiming to improve wireless communication quality. This includes utilizing different numbers of antennas, antenna configurations, and transmission powers for the respective transmission modes. In 5G NR or 6G communication, there is an emerging need to dynamically vary various transmission modes for the purpose of extending wireless communication quality/capacity while ensuring robustness and resilience to various communication environments. In this case, the various transmission modes are likely to use different values for the above-described factors included in CSI derivation for the respective modes. These different values may cause a discrepancy between operations such as semi-static CSI measurement/reporting (e.g. periodic CSI-RS or periodic CSI report) and dynamic transmission mode change or activation (e.g. dynamic operation mode indication/activation), and the discrepancy may cause deterioration of CSI reporting performance.

The present disclosure provides methods for measuring and reporting channel state information to efficiently support dynamically varying transmission modes. According to one of methods provided in the present disclosure, the base station and the terminal can perform various operations such as determining validity of a CSI report, determining a priority of the CSI report, or determining the amount of (computation) resources of the terminal required for the CSI report, and improve wireless communication quality.

A subject applying the methods provided in the present disclosure described below will be described as a base station or terminal. However, this is merely for convenience of description, and when applied to beyond 5G or 6G mobile communication technology in the future, the subject is not limited to a base station or terminal, and may be applied in a similar manner to wireless communication between devices. For example, the base station may be replaced by an IAB-DU (of an upper node), repeater-DU, or repeater-remote unit (or RF unit, RU), the terminal may be replaced by a user equipment (UE), mobile equipment (ME), mobile terminal (MT), IAB-MT (of a lower node), or repeater-MT, and the methods may be applied as being expanded to similar methods.

For example, when the present disclosure is applied to an IAB network, a higher layer configuration operation from the base station to the terminal through RRC or MAC CE signaling may refer to a higher layer configuration operation from an IAB-DU (or IAB-node) of a CU or an upper node to an IAB-MT of a lower node (or neighbor IAB-node) through F1AP signaling.

As another example, when the present disclosure is applied to an IAB network, an operation in which the terminal reports to the base station on a PUSCH or PUCCH may refer to an operation in which an IAB-MT (or lower node) (or IAB-MT of an IAB-node) reports to an IAB-DU of a CU or upper node (or an IAB-DU of a neighbor IAB-node) on a PUSCH or PUCCH. Specific examples of various other possible operations are omitted in order not to obscure the gist of the description.

**First embodiment: Operation mode determination method for CSI reporting**

The first exemplary embodiment will describe methods of determining an operation mode to be assumed when deriving/generating/calculating a CSI report for a specific resource period when the base station allocates one or more operation modes to the terminal within the specific resource period.

In exemplary embodiments described below, the base station may be replaced by a CU or an upper node, and the terminal may be replaced by a lower node or an IAB-MT of an IAB-node. In addition, the specific resource period may include one or a combination of time resources, frequency resources, space resources, and code resources. For example, a specific combination such as a time-frequency resource period may be possible. In addition, allocation of the operation mode(s) may be understood as configuration of the operation mode(s), activation of the operation mode(s), indication of the operation mode(s), or the like. For example, configuration of the operation mode(s) may be performed through RRC signaling. As another example, activation of the operation mode(s) may be performed through MAC CE signaling. As another example, indication of the operation mode(s) may be performed through DCI and/or MAC CE. In addition, methods for determining an operation mode may be performed through a combination of RRC, MAC CE, and DCI.

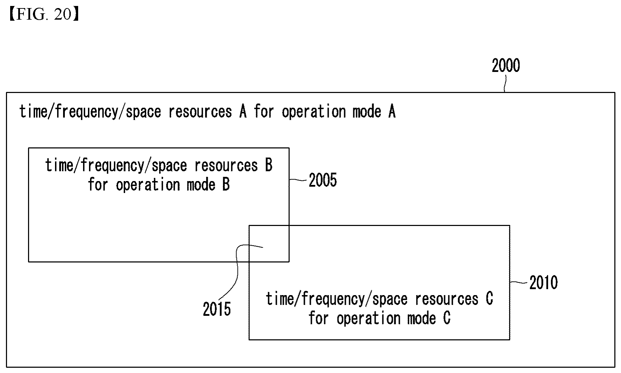

FIG. 20 is a conceptual diagram for describing a method by which a base station allocates one or more operation modes to a terminal within a resource period.

Referring to FIG. 20, the base station may allocate specific resources to an operation mode A (2000). In other words, the base station may allocate specific time/frequency/space/code resources 2000 to the operation mode A. The operation mode A may be a basic mode and may be promised to have the highest priority. Since the operation mode A is the basic mode, it may be applied without depending on any of configuration/activation/indication. In addition, since the operation mode A is the basic mode, it may be a default mode and may fall back from another operation mode. Additionally, resources allocated to the operation mode A may be at least one or a combination of two or more of time/frequency/-space/code resources.

As illustrated in FIG. 20, an operation mode B may be a mode that uses some of the resources of the operation mode A, and an operation mode C may also be a mode that uses some of the resources of the operation mode A. Some of resources of the operation mode B and some of resources of the operation mode C may have overlapping resources, as indicated by reference numeral 2015. The remaining resources of the operation mode B and the remaining resources of the operation mode C, excluding the overlapping resources as shown in reference numeral 2015, are exemplified as a case where they are disjoint.

The base station may allocate the operation mode B as an additional operation mode in addition to the operation mode A depending on capability of the base station. Additionally, the base station may allocate the operation mode C as an additional operation mode in addition to the operation mode A depending on capability of the base station. For example, the base station may allocate only the operation mode A, or may allocate the operation mode A and additionally allocate the operation mode B. As another example, the base station may allocate the operation mode A, and additionally allocate the operation mode C. As another example, the base station may allocate the operation mode A, may additionally allocate the operation mode B, and may also allocate the operation mode C. Except for the operation mode A, which is the basic mode, the operation mode B and the operation mode C may be allocated simultaneously or sequentially.

As described above, when two or three operation modes are allocated, there may be overlapping resources that are available in the two or three operation modes.

For example, when the operation mode A and the operation mode B are allocated, the overlapping resources may be the resources 2005 for the operation mode B. As another example, when the operation mode A and the operation mode C are allocated, the overlapping resources may be resources 2010 for the operation mode C. As another example, when the operation mode A, operation mode B, and operation mode C are all allocated, overlapping resources 2015 may exist in all the three operation modes.

An operation mode applied to a specific resource may be dynamically changed by a MAC CE and/or DCI. The operation modes described in the present disclosure may exist in various forms.

For example, the type of operation mode may be classified according to an applied IAB DU/MT multiplexing mode. Here, the multiplexing mode may include at least one of TDM/FDM/SDM. As another example, the type of operation mode may be classified according to IAB FDM resource configuration (whether or not frequency domain HSNA configuration is applied). As another example, the type of operation mode may be classified according to frequency or time resource configuration for enhanced duplexing. Here, the frequency or time resource configuration may be expressed as XDD, and XDD may include FDD, TDD, subband full-duplex (SBFD), and full-duplex (FD). Here, FD may include in-band full-duplex.

As another example, the type of operation mode may be classified according to whether or not downlink (DL) transmission power adjustment configuration is applied. As another example, the type of operation mode may be classified depending on whether restricted/desired DU/MT beam configuration is applied. As another example, the type of operation mode may be classified depending on whether UL PSD range configuration is applied. As another example, the type of operation mode may be classified according to whether case #1/#6/#7 timing configuration is applied. As another example, the type of operation mode may be classified according to whether it is included in a slot list indicated by one of IAB MAC CEs.

In the above, various types of operation modes are described, and only independent operation modes are described, but a combination of two or more operation modes may be possible.

Meanwhile, the types of operation modes described above and resources corresponding to the operation modes may be provided to the terminal through higher layer signaling.

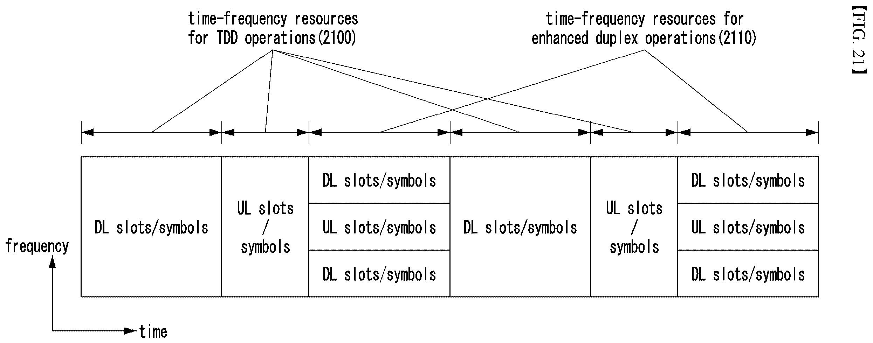

FIG. 21 is a conceptual diagram for describing a method in which a base station allocates resources to a terminal according to an operation mode by using time-frequency resources.

Referring to FIG. 21, a horizontal axis represents time and a vertical axis represents frequency. Although slots and symbols are illustrated together in FIG. 21, for convenience of description, only the slots will be used for description. However, slots may be understood by replacing them with a plurality of symbols. On the time axis of FIG. 21, a first time region in which only DL slots are transmitted may be arranged, a second time region in which only UL slots are transmitted may be arranged, and then a third time region in which slots that are a mixture of downlink and uplink are transmitted may be arranged. In the third time region, the slots that are a mixture of downlink and uplink may be divided into downlink slots and uplink slots by frequency. FIG. 21 illustrates a form in which the first to third time regions are repeated twice. In the following description, for convenience of description, the repeated time regions will be sequentially referred to as a fourth time region, a fifth time region, and a sixth time region starting after the third time region.

The base station may configure a specific time period to operate in a TDD mode 2100. In this case, it may be assumed that the TDD mode is the operation mode A previously described in FIG. 20. The TDD mode 2100, which is the operation mode A, may be allocated resources of the first time region, the second time region, the fourth time region, and the fifth time region.

The third time region and the sixth time region may operate in an enhanced duplex mode 2110. In the following description, the enhanced duplex mode will be referred to as the operation mode B. The enhanced duplex mode 2110 may include various cases such as a flexible duplex mode including XDD (FDD, TDD, and subband full-duplex) and the FD mode.

Since the base station uses the enhanced duplex mode 2110, specific frequency resources (groups) within the same time period (e.g. the third time region or the sixth time region) may be allowed to a specific terminal (group) as downlink slot(s) or symbol(s), and other frequency resources (group) within the same time period may allocated to another terminal (group) as uplink slot(s) or symbol(s). As a specific example, the base station may allocate downlink slots or symbols to a terminal group A in the third time region and may allocate downlink slots or symbols to a terminal group B in the third time region. The terminal group A may include at least one terminal, and the terminal group B may include at least one terminal not included in the terminal group A.

As described above, in order to allocate individual resources corresponding to the operation modes to different terminals in the same resource region, the base station may semi-statically allocate resources to each terminal or terminal group based on higher layer signaling (e.g. F1AP, RRC, or MAC CE, etc.). As another example, the base station may dynamically allocate resources to each terminal or terminal group based on second layer (L2) signaling (e.g. MAC CE) or first layer (L1) signaling (e.g. DCI).

At this time, the respective operation modes may be associated with sets of different CSI components (i.e. elements that the terminal needs to assume when generating CSI). In this case, the base station may need to receive separate CSI reports for the resource period 2100 and the resource period 2110 in order to increase wireless transmission efficiency.

For example, resource allocation characteristics of CSI measurement and report for a periodic CSI report based on periodic CMR/IMR measurement may not match resource allocation characteristics of the operation mode (e.g. dynamic transmission mode resource allocation). As another example, a case in which a resource allocation/change time for CSI measurement and report (e.g. a slot n where CSI measurement/report configuration is made) and a resource allocation/change time for the operation mode (e.g. a slot n+N where operation mode resources are allocated) do not match may occur. In this case, the terminal or base station may need to determine which CSI component (set) the CSI report is associated with.

Meanwhile, type(s) of operation mode(s) described above and resources corresponding to the operation mode(s) may be provided to the terminal through higher layer signaling.

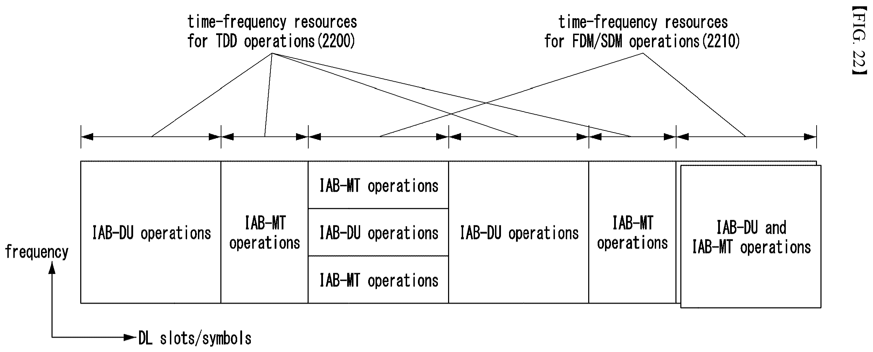

FIG. 22 is a conceptual diagram for describing a method in which a base station allocates resources to a terminal according to an operation mode by using frequency-slots (or symbols).

Referring to FIG. 22, a horizontal axis represents time based on DL slots or symbols, and a vertical axis represents frequency. In the description of FIG. 22, slots will be used for convenience of description. However, as illustrated in FIG. 22, slots may be understood by replacing them with a plurality of symbols.

On the time axis based on slots in FIG. 22, a first slot region for IAB-DU operations may be arranged, a second slot region for IAB-MT operations may be arranged, and then a third slot region in which IAB-DU operations and IAB-MT operations are mixed may be arranged. In the third slot region, resources may be allocated to the IAB-DU operations and the IAB-MT operations separately by frequency. FIG. 22 illustrates a form in which the first to third slot regions are repeated twice. In the following description, for convenience of description, the repeated slot regions will be sequentially referred to as a fourth slot region, a fifth slot region, and a sixth slot region starting after the third slot region.

The base station may perform the IAB-DU operations and the IAB-MT operations in the TDM mode. For example, in the first slot region, the second slot region, the fourth slot region, and the fifth slot region, the IAB-DU operations and the IAB-MT operations may be performed in the TDD mode. Accordingly, the first slot region, the second slot region, the fourth slot region, and the fifth slot region may become time-frequency resources 2200 for TDM operations. In FIG. 22, the TDM operation is assumed to be the operation mode A. The operation mode A may be configured by time-domain HSNA configuration.

On the other hand, the base station may configure the third slot region and the sixth slot region to operation in the non-TDM mode. For example, in the third slot region, the IAB-DU operations and the IAB-MT operations may be FDMed. In addition, in the sixth slot region, the IAB-DU operations and the IAB-MT operations may be space division multiplexed (SDMed). As described above, it is assumed that the operation mode of the third slot region and the sixth slot region is the operation mode B. The operation mode B may be configured by frequency-domain HSNA configuration. Resources for the operation mode B may be time-frequency resources 2210 for FDM/SDM operations.

Based on what has been described above, time-frequency resources for the IAB-DU operations may be allocated in the first slot region and the fourth slot region where the TDM operation is performed, and time-frequency resources 2200 for the IAB-MT operations may be allocated in the second slot region and the sixth slot region. In addition, time-frequency resources 2210 corresponding to FDM or SDM may be allocated for the IAB-DU operations and the IAB-MT operations in the third slot region and the sixth slot region.

Meanwhile, the operation modes may be divided into detailed operation modes according to other associated functions. These will be described as follows.

1) Resources A allocated to the TDM mode may be classified as an operation mode A-1 in association with Pc set by a higher layer. Here, it may mean that a PDSCH EPRE in the resources A is derived by *powerControlOffset* described above.

2) Resources B allocated to the FDM mode may be classified as an operation mode B-1 in association with a provided or desired downlink transmission power adjustment MAC CE B. Here, a PDSCH EPRE in the resources B may be derived by additionally considering a value indicated by the MAC CE B in addition to a CSI-RS/PDSCH power ratio by *powerControlOffset* described above.

3) Resources C allocated to the FDM mode may be classified as an operation mode B-2 in association with a provided or desired downlink transmission power adjustment MAC CE C. Here, a PDSCH EPRE in the resources C may be derived by additionally considering a value indicated by the MAC CE C in addition to a CSI-RS/PDSCH power ratio by *powerControlOffset* described above.

If the resources B allocated to the FDM mode are resources related to the IAB-DU operations, the resources C allocated to the FDM mode may be resources related to the IAB-MT operations. Conversely, if the resources B allocated to the FDM mode are resources related to the IAB-MT operations, the resources C allocated to the FDM mode may be resources related to the IAB-DU operations.

The resources for the operation modes described above may be semi-statically allocated based on higher layer signaling (e.g. F1AP, RRC, or MAC CE, etc.). As another example, the resources of the operation modes described above may be dynamically allocated based on second layer (L2) signaling (e.g. MAC CE) or first layer (L1) signaling (e.g. DCI).

In this case, the respective operation modes may be associated with sets of different CSI components (elements that the terminal needs to assume when generating CSI). In this case, the base station may need to receive separate CSI reports for the respective resource periods 2200 and 2210 in order to increase wireless transmission efficiency.

When resource allocation characteristics of CSI measurement and report do not match resource allocation characteristics of an operation mode, or when a resource allocation/change time of the CSI measurement and report does not match a resource allocation/change time of the operation mode, the terminal (or base station) may need to determine which CSI component (set) the CSI report is associated with. For example, the resource allocation characteristics of the CSI measurement and report may be a periodic CSI report based on periodic CMR/IMR measurement, and the resource allocation characteristic of the operation mode may be dynamic operation mode resource allocation.

In addition, as example of a case where the resource allocation/change time of the CSI measurement and report does not match the resource allocation/change time of the operation mode, the CSI measurement/report may be configured in a slot n, and the resource allocation/change of the operation mode may be configured (e.g. operation mode resources are allocated) in a slot n+N.

As another example, as in the example described above with reference to FIG. 20, there may be a case where two or more different operation modes are simultaneously allocated to a specific resource (e.g. 2015). This specifically means that a specific slot list and RB set (or RB set group) is configured as a time-domain soft resource of 3GPP Rel-16 and/or a frequency-domain soft resource of 3GPP Rel-17. The operation mode for the corresponding time-frequency resource may be dynamically changed by a DCI format 2_5. Even in this case, the terminal (or base station) may need to determine which CSI component (set) the CSI report is associated with.

The operation mode(s) described above may be combined with other operation mode(s). In other words, some of the operation modes described in FIGS. 20 to 22 may be combined to configure a new operation mode.

For example, in FIG, 20, the operation mode A may be defined as a TDM operation mode of IAB-DU/IAB-MT based on time-domain HSNA configuration, and the operation mode B may be defined as a combination of an FDM (or SDM) operation mode of IAB-DU/IAB-MT based on frequency-domain HSNA configuration and a downlink transmit power adjustment operation mode based on a provided downlink Tx power adjustment (DL Tx power adjustment) MAC CE. The examples of FIGS. 21 and 22 may be expanded similarly.

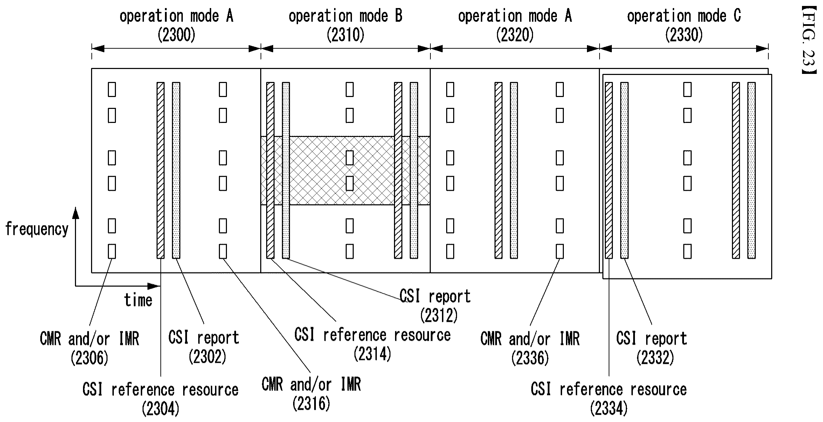

FIG. 23 is a conceptual diagram for describing CSI reports for respective operation modes according to an exemplary embodiment of the present disclosure.

Referring to FIG. 23, a horizontal axis represents time and a vertical axis represents frequency. FIG. 23 illustrates a case where different operation modes are configured in chronological order.

Referring to FIG. 23 in chronological order, a first time region in which an operation mode A 2300 is activated, a second time region in which an operation mode B 2310 is activated, a third time region in which the operation mode A 2320 is activated again, and a fourth time region in which an operation mode C 2330 is activated are illustrated.

In order to change the operation modes as shown in the example of FIG. 23, the base station may configure/activate/indicate one or more operation modes 2300, 2310, 2320, and 2330 to the terminal. In this case, resources in which the respective operation modes 2300, 2310, 2320, and 2330 are configured (or activated or indicated) may be the same or different resources. For example, it can be seen in FIG. 23 that the time resources are different. Further, it can be seen in FIG. 23 that frequency resources therefor are the same.

Describing the resources allocated to the respective operation modes in FIG. 23, during the time configured for the operation mode A, a CMR and/or IMR 2306 is transmitted 2300, a CSI reference resource 2304 may be allocated, and a resource for a CSI report 2302 may allocated. Further, FIG. 13 illustrates a form in which a CMR and/or IMR 2316 is additionally transmitted during the time configured for the operation mode A 2300.

This example illustrates a case where a CSI reference resource 2314 is allocated for the time configured for the operation mode B 2310, and then a CSI report resource 2312 is allocated. Thereafter, a CMR and/or IMR without a reference numeral may be transmitted and a CSI reference resource and CSI report resource without reference numerals may be allocated.

During the second time configured for the operation mode A 2320, a CMR and/or IMR without a reference numeral may be transmitted first, then a CSI reference resource and CSI report resource may be allocated, and a CMR and/or IMR 2336 may be transmitted.

Finally, a CSI reference resource 2334 and CSI report resource 2332 may be allocated during the time configured for the operation mode C 2330, and then a CMR and/or IMR without a reference numeral may be allocated, and a CSI reference resource and CSI report resource may be allocated.

As described above, transmission/monitoring/measurement locations of channel estimation resources (e.g. CMRs and/IMRs 2306, 2316, and 2336) for specific CSI reports 2302, 2312, and 2332 and locations of the CSI reference resources 2304, 2314, and 2334 for the corresponding CSI reports may occupy different resources allocated to different operation modes. In other words, the operation mode associated with the channel estimation resource and the operation mode associated with the CSI reference resource may not match.

Describing this in more detail, when the operation mode A 2300 associated with the CMR and/or IMR 2306 and the operation mode A 2300 associated with the CSI reference resource 2304 match, the CSI report resource 2302 based on the resources 2306 and 2304 does not have ambiguity on CSI components according to the operation mode A 2300.

On the other hand, when the operation mode A 2300 and the operation A 2320 respectively associated with the CMR and/or IMR 2316 and the CMR and/or IMR 2326 do not match to the operation mode B 2310 and the operation mode C 2330 associated with the CSI reference resources 2314 and 2334, it may be ambiguous whether the CSI report resources 2312 and 2332 based on the resources 2316, 2336, 2314, and 2334 is derived by CSI components of which operational mode among the first operation mode A 2300, the second operation mode A 2320, the operation mode B 2310, and the operation mode 2330.

This ambiguity may be problematic particularly when the terminal monitors or receives activation/indication signaling for operation mode change (e.g. operation mode A to operation mode B and/or operation mode A to operation mode C) after starting occupying one or more CPUs for CSI calculation based on results of monitoring the channel estimation resources 2316 and 2336.

To solve the above-described problems, the base station and the terminal may eliminate the ambiguity of the CSI component assumption by determining an operation mode assumed for CSI derivation, limiting a target frequency band for CSI derivation (frequency band of the CSI reference resource), or limiting the channel estimation resources (time period or frequency band of CMR and/or IMR) referenced for CSI derivation, based on at least one of methods below.

Examples of specific methods for this are as follows. The terminal described below may be understood as one of UE, IAB-MT, or repeater-MT.

- Method #1: The terminal may generate CSI by considering an operation mode applied to a CSI reference resource of a specific CSI report. The operation mode applied to the CSI reference resource may be defined as one of the following cases.

    1) Operation mode configured through higher layer signaling (SIB, RRC, or F1AP) in the same (overlapping) slot (or symbol) as the CSI reference resource

    2) Operation mode activated or indicated through higher layer signaling (MAC CE) in the same (or overlapping) slot (or symbol) as the CSI reference resource

    3) Operation mode activated or indicated through higher layer signaling (MAC CE) in the same (overlapping) slot (or symbol) as the CSI reference resource, when the higher layer signaling (MAC CE) is received a specific time (e.g. minimum delay time Z' such as a predetermined number of slots or symbols or a separately configured or indicated number of slots or symbols) before the same slot (or symbol)

    4) Operation mode indicated through L1 signaling (DCI) in the same (overlapping) slot (or symbol) as the CSI reference resource

    5) Operation mode indicated through L1 signaling (DCI) in the same (overlapping) slot (or symbol) as the CSI reference resource, when the L1 signaling (DCI) is received a specific time (e.g. minimum delay time Z' such as a predetermined number of slots or symbols or a separately configured or indicated number of slots or symbols) before the same slot (or symbol)

In the cases 3) and 4) described above, if one of the conditions is not satisfied, it may be promised to assume a default operation mode in the CSI reference resource. An example of a case when one of the conditions in the cases 3) and 4) is not satisfied may be a case where the signaling activating or indicating a specific operation mode is not received a specific time before the slot (or symbol) of the CSI reference resource slot.

The default operation mode may be one of modes below.

a. Operation mode used when receiving cell-specific or group-specific downlink signals (e.g. MIB (PBCH), SIB, CSI-RS or CORESET 0, etc.)
b. Operation mode used when transmitting cell-specific or group-specific uplink signals (e.g. PRACH, SRS, etc.)
c. Operation mode configured through a separate higher layer parameter
d. Operation mode assumed in a CSI report defined in 3GPP Rel-15

- Method #2: The base station may separately configure or indicate the terminal to consider operation mode(s) when deriving (calculating) CSI for a specific CSI report. When a CSI report is associated with multiple operation modes, the terminal may derive CSI by considering an operation mode with the highest priority. Specific examples of priority determination may refer to other exemplary embodiments of the present disclosure. The terminal may be promised to assume a default operation mode when deriving CSI for a CSI report that is not associated with a separate configuration or indication. Since the default operation mode is the same as the modes described in Method #1, redundant description thereon is omitted.
- Method #3: The base station may configure or indicate the terminal to perform CSI reporting including multiple CSI values considering multiple operation modes. For example, when N operation modes to be considered for a specific CSI report are configured or indicated, the terminal may report CSI consisting of N pairs of CSI values (CRI, RI, PMI, CQI, RSRP, etc.). In this case, the N CSI pairs for the N operation modes may be understood as a serving cell including the CSI being expanded to N virtual serving cells. A stacking order of the N CSI pairs for the N operation modes may be determined by priorities of the N operation modes or an order of configurations/indications of the N operation modes.

Here, the stacking order may be a criterion when some CSIs need to be dropped because there is not enough PUCCH or PUSCH payload for the CSI report. As another example, when two different operation modes are configured or indicate for a specific CSI report, the terminal may report a difference between CQIs of first and second operation modes using a (subband) differential CQI. The first operation mode may not be separately configured or indicated but may be implicitly determined according to one of the examples of the default operation mode in Method #1.

- Method #4: When CMRs and/or IMRs associated with a CSI report use different time resources (different symbols, different slots, or different symbols/slots separated by an interval of N or more, etc.) associated with different operation modes, the terminal may omit or ignore the CSI report.

As another example, when CMRs, IMRs, and/or CSI reference resources associated with a CSI report use different time resources (different symbols, different slots, or different symbols/slots separated by an interval of N or more, etc.) associated with different operation modes, the terminal may omit or ignore the CSI report.

Through this, the terminal may omit a CSI report with ambiguity related to the operation modes, and reduce burden on the terminal and an uplink load for CSI reporting.

- Method #5: When CMRs and/or IMRs associated with a CSI report use different frequency resources (different RBs, different RB sets/RB set groups, or different RBs/RB sets/RB set groups separated by an interval of N or more, etc.) associated with different operation modes, the terminal may omit or ignore the CSI report.

As another example, when CMRs, IMRs, and/or CSI reference resources associated with a CSI report use different frequency resources (different RBs, different RB sets/RB set groups, or different RBs/RB sets/RB set groups separated by an interval of N or more, etc.) associated with different operation modes, the terminal may omit or ignore the CSI report.

Through this, the terminal may omit a CSI report with ambiguity related to the operation modes, and reduce burden on the terminal and an uplink load for CSI reporting.

- Method #6: When a CMR and/or an IMR associated with a CSI report use different time resources associated with different operation modes, the terminal may omit or ignore the CSI report. Here, the case where a CMR and an IMR associated with a CSI report uses different time resources associated with different operation modes may be one of cases below.

a. They are included in different IAB (or repeater) time resource configurations

b. The CMR is configured in a slot that is included in a slot list indicated by a provided DL TX power adjustment MAC CE, and the IMR is configured in a slot that is not included in the slot list.

c. The CMR is configured in a slot that is not included in a slot list indicated by a provided DL TX power adjustment MAC CE, and the IMR is configured in a slot that is included in the slot list.

As another example, when a CMR, IMR, and/or CSI reference resource associated with a CSI report use different time resources associated with different operation modes, the terminal may omit or ignore the CSI report. Here, the case where a CMR, IMR, and CSI reference resource associated with a CSI report uses different time resources associated with different operation modes may be one of cases below.

a. They are included in different IAB (or repeater) time resource configurations

b. The CMR and/or IMR is configured in a slot that is included in a slot list indicated by a provided DL TX power adjustment MAC CE, and the CSI reference resource is configured in a slot that is not included in the slot list.

c. The CMR and/or IMR is configured in a slot that is not included in a slot list indicated by a provided DL TX power adjustment MAC CE, and the CSI reference resource is configured in a slot that is included in the slot list.

Through this, the terminal may omit a CSI report with ambiguity related to the operation modes, and reduce burden on the terminal and an uplink load for CSI reporting.

Method #7: When a CMR and/or IMR associated with a CSI report use different frequency resources associated with different operation modes, the terminal may omit or ignore the CSI report. Here, the case where a CMR and IMR associated with a CSI report uses different frequency resources associated with different operation modes may be one of cases below.

a. They are included in different IAB (or repeater) frequency resource configurations

b. The CMR is configured within an RB set/RB set group included in a frequency domain H/S/NA configuration, and the IMR is configured within RB(s) not included in the RB set/RB set group.

c. The CMR is configured within an RB set/RB set group not included in a frequency domain H/S/NA configuration, and the IMR is configured within an RB included in the RB set/RB set group.

- Method #8: When a CMR and/or IMR associated with a CSI report use different time/frequency resources associated with different operation modes, the terminal may perform CSI derivation (calculation) based on the operation mode (e.g. whether DL TX power adjustment is applied) of the CMR. That is, the operation mode of IMR may be overridden by the operation mode of CMR. Similarly, when a CMR and/or IMR associated with a CSI report uses different time/frequency resources associated with different operation modes, the terminal may perform CSI derivation (calculation) based on the operation mode (e.g. whether DL TX power adjustment is applied) of the IMR. That is, the operation mode of CMR may be overridden by the operation mode of IMR. Similarly, when a CMR, IMR, and CSI reference resource associated with a CSI report use different time/frequency resources associated with different operation modes, the terminal may perform CSI derivation (calculation) based on an operation mode (e.g. whether DL TX power adjustment is applied) of a resource (e.g. CSI reference resource) with the highest priority. That is, the operation mode of CMR/IMR may be overridden by the operation mode of CSI reference resource. Through this, the terminal may omit a CSI report with ambiguity related to the operation modes, and reduce burden on the terminal and an uplink load for CSI reporting.

- Method #9: In case that an operation mode associated with a CSI report exists, the terminal may consider only a frequency resource allocated to (or associated with) the operation mode when deriving (calculating) a wideband CQI. In other words, when calculating CQI, the terminal may consider only the frequency resource associated with the operation mode to determine a TBS. Through this, the terminal may omit a CSI report with ambiguity related to the operation modes, and reduce burden on the terminal and an uplink load for CSI reporting.

When there are multiple frequency resource configurations for a certain operation mode at the same time, it may be promised to derive (calculate) CSI for a frequency resource with the narrowest band, that is, a frequency resource with the smallest TBS. The opposite case is also possible. For example, when there are multiple frequency resource configurations for a certain operation mode at the same time, it may be promised to derive (calculate) CSI for a frequency resource with the widest band, that is, a frequency resource with the largest TBS. An example of a case where multiple frequency resource configurations for a certain operation mode exist at the same time may be a case where there are multiple RB sets or RB set groups for FDM H/S resource configurations for eIAB.

Similarly, when there are multiple frequency resource configurations for a certain operation mode at the same time (e.g. when there are multiple RB sets or RB set groups for FDM H/S resource configurations for eIAB), the base station may configure through separate signaling which frequency resource configuration the terminal is to derive (calculate) CSI based on.

- Method #10: When there are multiple operation modes at the same time (according to configurations or indications), the terminal may be promised or configured/indicated to report CSI with the lowest MCS (or modulation scheme, code rate, efficiency, etc.) among multiple CSIs derived for the multiple operation modes. As another example, the terminal may be promised or configured/indicated to report CSI with the highest MCS (or modulation scheme, code rate, efficiency, etc.) among multiple CSIs derived for the multiple operation modes.

In an exemplary embodiment, the CSI may include an indicator for the operation mode assumed when deriving the CSI. Through this, the terminal can resolve ambiguity when deriving (calculating) the CSI and improve the accuracy of CSI reporting.

- Method #11: In case that an operation mode associated with a CSI report exists, when calculating CSI, the terminal may be promised or configured/indicated to exclude a CMR and/or IMR that is not transmitted in a time/frequency resource associated with the operation mode. Through this, the terminal can resolve ambiguity when deriving (calculating) the CSI and improve the accuracy of CSI reporting.

The terminal may be promised or configured/indicated to equally apply one of Method #1 to Method #11 to CSI-RS groups for multi-TRP. For example, when different methods are configured/indicated, they may be unified according to a specific criterion, or they may be guaranteed to be configured/indicated to the same method.
Similarly, the terminal may be promised or configured/indicated to apply different methods to different CSI-RS groups.
Methods #1 to #11 described above may be limited to being applied only when IMR is configured as NZP CSI-RS. This may be because in case of CSI-IM-based IMR, an operation mode applied to interference signals is implicitly reflected based on ZP CSI-RS configuration.
In Methods #1 to #11 described above, a frequency resource (or time resource) region assumed when generating CSI for a CSI report associated with an operation mode may mean one of those described below.

- Resources configured to a DU/RU (e.g. IAB-DU) of a node (e.g. IAB node) including a subject of generating the CSI (e.g. IAB-MT) for the operation mode. For example, the configured resources may be FDM HSNA resources allocated by frequency domain *IAB-DU-Resource-Configuration-H/S/NA-Config* of 3GPP Rel-17 or FDM soft resources indicated as 'available' or 'not available' by a DCI format 2_5.
- Resources excluding a part overlapping with resources configured to a DU/RU (e.g. IAB-DU) of a node including a subject of generating the CSI (e.g. IAB-MT) among resources (e.g. MT-CC) allocated to the subject of generating the CSI (e.g. IAB-MT). For example, the configured resources may be FDM HSNA resources allocated by frequency domain *IAB-DU-Resource-Configuration-H/S/NA-Config* of 3GPP Rel-17 or FDM soft resources indicated as 'available' or 'not available' by a DCI format 2_5.
- Resources that a subject of generating the CSI (e.g. IAB-MT) can utilize in a downlink reception operation (or uplink transmission operation) for the operation mode among resources (e.g. MT-CC) allocated to the subject of generating the CSI.
- Resources configured to a DU/RU (e.g. parent node of IAB-DU) of a parent/upper node (e.g. IAB parent node, donor node, CU) of a node including a subject of generating the CSI for the operation mode. For example, the configured resources may be FDM HSNA resources allocated by frequency domain *IAB-DU-Resource-Configuration-H/S/NA-Config* of 3GPP Rel-17 or FDM soft resources indicated as 'available' or 'not available' by a DCI format 2_5.
- A region allocated through separate and independent configuration, indication, or report. For example, it may be a frequency (time) resource region configured or indicated by the base station, upper node, or adjacent node, or a frequency (time) resource region reported by the terminal to the base station, upper node, or adjacent node explicitly or implicitly through signaling such as DCI, MAC CE, RRC, and/or F1AP. The implicit case may be a case of reporting the frequency (time) resource region used/referenced by the CSI report associated with the operation mode. The implicit case may be a case where the IAB-MT reports an operation mode (e.g. one of TDM (fallback) mode or FDM mode) of a specific frequency (time) resource through MAC CE, and the specific frequency (time) resource is specified as an IAB-MT frequency (time) resource usable in the corresponding operation mode.

When generating CSI for a CSI report associated with a certain operation mode, the terminal may determine a TB size based on the frequency resource (or time resource) region according to one of the cases defined above. For example, this may mean that CSI (CRI, RI, LI, PMI, CQI, etc.) representative of a frequency (or time) resource region according to one of the cases defined above (rather than the entire band represented by the CSI report, in which PDSCH transmission can be performed within a CC or BWP) needs to be generated when generating wideband CSI.

As another example, when generating subband CSI for a CSI report associated with a certain operation mode, the terminal may generate or report CSI (e.g. CRI, RI, LI, PMI, CQI, etc.) for a frequency (or time) resource region according to one of the cases defined above, and may not report (or omit) CSI for other frequency (or time) resource regions, or may report garbage values therefor.

For example, improvements such as those shown in Table 51 below may be considered.

[Table 51]

| |
|---|
| The UE (or the IAB-MT) to calculated the number of available REs in the CSI reference resource based on the bandwidth configured for the corresponding CQI report. It should be noted that the accuracy of CSI report for various multiplexing modes can be affected not only by the DL TX power adjustment but also by validity of the bandwidth configured for the corresponding CQI report. |
| Figure 22 depicts an example of valid frequency resources for CSI derivation according to various multiplexing modes. In Figure 22, it is clear that the bandwidth configured for the corresponding CQI report does not cause any ambiguity (e.g. any configured bandwidth can be applied for both wideband/subband CSI derivations) for CSI reference resources with TDM multiplexing mode (22-00). On the other hands, since the bandwidth configured for the corresponding CQI report can be wider than the bandwidth for IAB-MT reception with FDM multiplexing mode (22-10 for FDM), TBS derived by the bandwidth configured for the corresponding CQI report and TBS derived by the actual available IAB-MT resources for FDM multiplexing mode may not be aligned. Actually, these two different TBS values can be quite different and thus the derived CQI indexes could be different as well. From our understanding, in case of FDM multiplexing mode, the following two types of IAB-DU resources cannot be used for IAB-MT operations:⌷⌷ <br><br>           IAB-DU resources configured as FDM H. <br>           IAB-DU resources configured as FDM S and indicated as available. |
| Therefore, to follow the same spirit for the agreements in Table 5 (i.e. to support accurate CSI feedback for non-TDM multiplexing mode), it should be clarified that IAB-MT should not consider the frequency resources, which are "configured as FDM H" or "configured as FDM S and indicated as available" for the IAB-DU, if the IAB node operates FDM multiplexing mode in the CSI reference resource. |

Based on the above, the specifications may be improved as highlighted in bold in Table 52 below.

[Table 52]

| 1.1.1.1 CSI reference resource definition |
| --- |
| *** Unchanged parts are omitted *** |
| If configured to report CQI index, in the CSI reference resource, the UE shall assume the following for the purpose of deriving the CQI index, and if also configured, for deriving PMI and RI: |
| - The first 2 OFDM symbols are occupied by control signaling. |
| - The number of PDSCH and DM-RS symbols is equal to 12. |
| - The same bandwidth part subcarrier spacing configured as for the PDSCH reception |
| - The bandwidth as configured for the corresponding CQI report. |
| **- The IAB-MT shall account the frequency resources only, which is available for the multiplexing mode applied for the CSI reference resource.** |
| **- When FDM multiplexing mode is applied for the CSI reference resource, the IAB-MT shall account the frequency resources only, which are not overlapped with FDM H or FDM S indicated as available of the IAB-DU.** |
| - The reference resource uses the CP length and subcarrier spacing configured for PDSCH reception |
| - No resource elements used by primary or secondary synchronization signals or PBCH. |
| - Redundancy Version 0. |
| - The ratio of PDSCH EPRE to CSI-RS EPRE is as given in Clause 5.2.2.3.1. |
| **- In addition, the IAB-MT shall account for the provided DL TX power adjustment, if indicated.** |
| - Assume no REs allocated for NZP CSI-RS and ZP CSI-RS. |
| *** Unchanged parts are omitted *** |

In the methods described above, higher layer (F1AP/RRC/MAC CE) configuration or (DCI) indication on (candidate) value(s) of the interval N (symbols/slots/RBs/RB sets/RB set groups, etc.) between time/frequency resources may be similarly considered not only for the downlink direction (e.g. parent node -> child node), but also for the uplink direction (e.g. child node -> parent node) or the horizontal direction (e.g. neighbor node -> neighbor node).

The terminal may perform UE (IAB-MT or repeater-MT) capability reporting indicating one of Methods #1 to #11 described above and including information on the (candidate) value(s) of the time/frequency resource interval N (symbols/slots/RBs/RB sets/RB set groups, etc.).

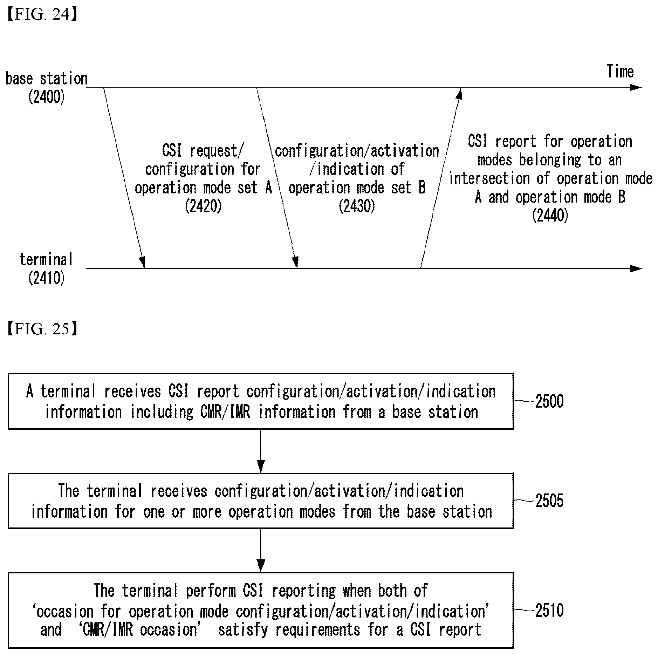

FIG. 24 is a sequence chart illustrating CSI resource configuration and report configuration, CSI request, operation mode configuration/activation/indication, and CSI reporting according to an exemplary embodiment of the present disclosure.

Referring to FIG. 24, in step 2420, a base station 2400 may perform CSI report configuration and resource configuration for an operation mode set A consisting of one or more operation modes to a terminal 2410, and request a CSI report based thereon.

In addition, in step 2430, the base station 2400 may allocate specific resources to an operation mode set B consisting of one or more operation modes, and notify (configure/activate/indicate) this to the terminal 2410.

In step 2440, the terminal 2410 may derive (calculate) only CSI corresponding to operation modes belonging to an intersection of the operation mode set A and the operation mode set B for a certain CSI reference resource, and report it to the base station 2440.

Through this, the terminal 2410 may reduce the CSI derivation (calculation) burden, and the base station 2400 or the network can minimize uplink resource occupancy for CSI reporting.

FIG. 25 is a flowchart of CSI resource configuration and report configuration, operation mode configuration/activation/indication, and CSI reporting depending on whether specific conditions are satisfied, according to an exemplary embodiment of the present disclosure.

Referring to FIG. 25, in step 2500, the terminal may receive CSI report configuration and resource configuration including CMR and/or IMR configuration information from the base station, and may additionally receive activation or indication information for CSI.

In step 2505, the terminal may receive configuration, activation, and indication information for one or more operation mode(s) for specific resources from the base station.

In step 2510, the terminal may perform the corresponding CSI reporting only when an occasion of the operation mode configuration, activation, and indication signaling and an occasion of the CMR and/or IMR all satisfy the conditions of Methods #1 to #11 described above. On the other hand, when the occasion of the operation mode configuration, activation, and indication signaling and the occasion of the CMR and/or IMR all do not satisfy the conditions of Methods #1 to #11 described above, the terminal may omit the corresponding CSI reporting.

Through this, the terminal can reduce the CSI derivation (calculation) burden, and the base station or network can minimize uplink resource occupancy for CSI reporting.

### Second embodiment: CPU occupancy calculation method considering operation modes

The second exemplary embodiment of the present disclosure will describe CPU occupancy management/calculation methods considering various operation modes.

When a CSI report configuration *CSI-ReportConfig* is associated with M (M > 1) operation modes (e.g. IAB-DU/MT simultaneous operation or multiplexing modes), and the terminal includes/performs CSI reporting for N (N>1) operation modes among the M operations modes, the corresponding CSI report may be promised to occupy $O_{CPU}$=N CPUs.

When a CSI report configuration *CSI-ReportConfig* is associated with M (M > 1) operation modes (e.g. IAB-DU/MT simultaneous operation, multiplexing, or duplexing modes) or a specific frequency/time resource, and the terminal includes/performs CSI reporting for N (N>1) operation modes among the M operations modes, the corresponding CSI report may be promised to occupy $O_{CPU}$=N CPUs. Here, the specific frequency/time resource may be, for example, FDM HSNA resource configuration or resource configuration for subband non-overlapping full duplex (SBFD).

When the terminal performs CSI reporting considering multiple operation modes, the base station may configure or indicate the terminal to initialize already occupied CPUs in consideration of the complexity of the terminal through separate higher layer signaling (F1AP, RRC, MAC CE) or L1 signaling (DCI). Here, the initialization may mean, for example, setting a CPU occupancy to '0 (zero)' before newly derived (calculated) CSI.

### Third embodiment: CSI reference resource/valid DL slot determination method considering operation modes

The third exemplary embodiment of the present disclosure will describe CSI reference resource and valid DL slot determination methods considering various operation modes.

In an exemplary embodiment of the present disclosure, the terminal may be guaranteed to derive (calculate) CSI for an operation mode after receiving at least one CMR and/or IMR for each operation mode. For example, the terminal may be guaranteed to receive at least one CMR/IMR and perform CSI reporting associated therewith at a time after applying a specific operation mode. In this case, the time after the specific operation mode may be, for example, a time after applying a provided DL Tx power adjustment MAC CE or receiving a provided DL Tx power adjustment MAC CE. When the above-described condition is not met, the terminal may omit the CSI reporting.

As another example, the terminal may be guaranteed to receive at least one CMR/IMR at a specific time before a CSI reference resource for a CSI report of a specific operation mode and perform CSI reporting. For example, the specific time before the CSI reference resource may be a time before n slots from the CSI reference resource to which a provided DL TX power adjustment is applied. When the above-described condition is not met, the terminal may omit the CSI reporting.

In an exemplary embodiment of the present disclosure, the terminal may be guaranteed not to consider a separate operation mode when DRX is configured (in a DRX period). For example, the terminal may be guaranteed not to perform CSI reporting considering a provided DL TX power adjustment in a DRX period.

In an exemplary embodiment of the present disclosure, when an operation mode applied in a CSI reference resource and an operation mode associated with the corresponding CSI report configuration are different from each other, the terminal may be promised not to consider the corresponding slot as a valid slot. For example, when an IAB-DU/-MT simultaneous operation mode (or multiplexing mode (e.g. TDM/FDM/SDM)) applied to a certain slot is different from a simultaneous operation mode configuration (or multiplexing mode) value associated with a CSI report configuration, the terminal may not consider the corresponding slot as a valid slot.

Frequency resources corresponding to assumptions 1) to 3) below may all have different values.

1) Frequency resource allocated to a PDSCH

2) Frequency resource configured as a CSI reporting band (e.g. wideband CSI, subband CSI)

3) Frequency resource allocated to a specific operation mode (e.g. 3GPP Rel-17 frequency domain HSNA configuration for an RB set or RB set group, frequency resource configuration for XDD and FD, etc.)

- The base station may configure which of these criteria the terminal use to derive CSI. In this case, a frequency resource configured as a CSI reporting candidate band in the assumption 2) may be a list of one or more RB sets or RB set groups, and the base station may configure/select one or more RB sets or RB set groups in the list so that actual CSI is derived for the configured/selected one or more RB sets or RB set groups.
- Various frequency resource configurations/allocations may have different priorities, and when deriving CSI, the terminal may derive the CSI for a frequency resource with the highest priority at the corresponding time (e.g. based on a slot of the CSI reference resource).

For example, for a resource in which cell-specific information such as SIB is transmitted, the assumption 2) may have a higher priority than the assumption 3).

As another example, if an operation mode indicator (e.g. DCI format 2_5 or provided DL Tx transmission power adjustment MAC CE) indicates a specific operation mode, the assumption 3) may have a higher priority than the assumption 2). Here, an example of a case where the operation mode indicator indicates a specific operation mode may be a case where an AI is indicated as 'available' for a frequency domain soft resource, and a PDSCH EPRE adjustment value with a specific value other than 0 is indicated for the resource according to 3GPP Rel-17.

**Fourth exemplary embodiment:**

The fourth exemplary embodiment of the present disclosure will describe methods for selecting CMR and IMR and generating and reporting CSI in consideration of various operation modes.

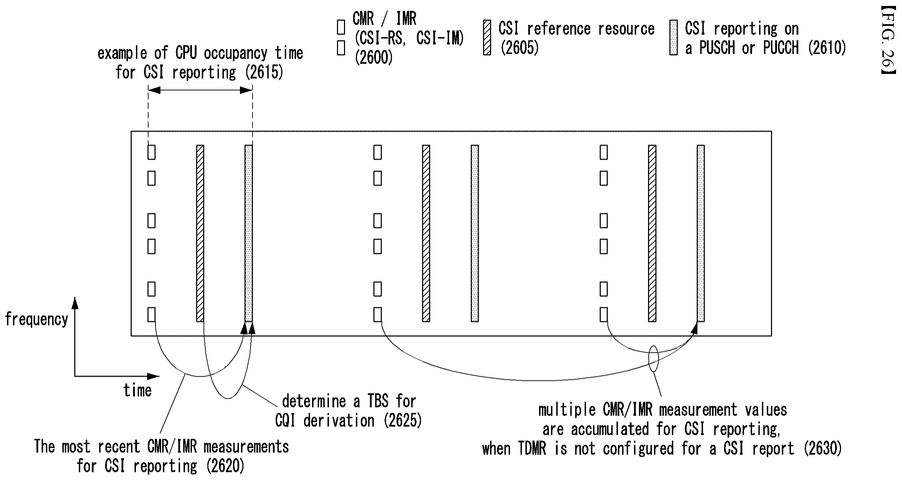

FIG. 26 is a conceptual diagram for describing CSI reporting in a first operation mode according to an exemplary embodiment of the present disclosure.

Referring to FIG. 26, a horizontal axis represents time, and a vertical axis represents frequency. Therefore, a specific resource, such as symbols or slots, may be allocated to the terminal by the base station based on frequency resources and time resources. The specific symbols or slots may be allocated as a resource for CSI measurement or a resource for CSI reporting according to the present disclosure.

The base station may configure/allocated at least one CMR and/or IMR for channel or interference measurement to the terminal, as indicated by reference numerals 2600, 2620, and 2630. In addition, the base station may configure/allocate an uplink resource (PUSCH to PUCCH) for reporting CSI generated based on channel or interference measurement to the terminal, as indicated by a reference numeral 2610. In this case, the terminal may determine CSI reference resource 2605 that serve as a basis for CSI generation according to the method described above. The terminal may determine a transport block size (TBS) based on the number of REs that can be transmitted as data according to one of the rules described above in a slot determined by the CSI reference resource 2625, and use the determined TBS in CSI derivation.

In the example of FIG. 26, a time during which a CSI report occupies one or more CPUs may be defined as a time from the first OFDM symbol occupied by the most recent CMR and/or IMR before the CSI reference resource of the CSI report to the last OFDM symbol occupied by an uplink channel including the CSI report. Here, the uplink channel may be either PUSCH or PUCCH. In addition, the number of CMRs and/or IMRs reflected when generating CSI may be limited to the most recent one CMR or IMR by the time-domain measurement restriction configuration described above 2620. In this case, the time domain measurement restriction configuration may correspond to a higher layer parameter *timeRestrictionForChannelMeasurements* or *timeRestrictionForInterferenceMeasurements.*

As another example, the number of CMRs and/or IMRs reflected when generating CSI may be limited to the most recent one CMR or IMR if there is no previously valid CMR and/or IMR (2620). As another example, the number of CMRs and/or IMRs reflected when generating CSI may include the most recent one CMR and previous CMRs or the most recent one IMR and previous IMRs according to the time domain measurement restriction configuration described above (2630).

For example, when the terminal measures CMR configured based on periodic NZP CSI-RS or semi-persistent NZP CSI-RS and generates CSI to which *timeRestrictionForChannelMeasurements* is not applied, the terminal may use a (weighted) average value of channels measured at two or more valid NZP CSI-RS transmission times.

Similarly, when the terminal measures an IMR configured based on periodic NZP CSI-IM or semi-persistent NZP CSI-IM and generates CSI to which *timeRestrictionForInterferenceMeasurements* is not applied, the terminal may use a (weighted) average value of channels measured at two or more valid NZP CSI-RS transmission times.

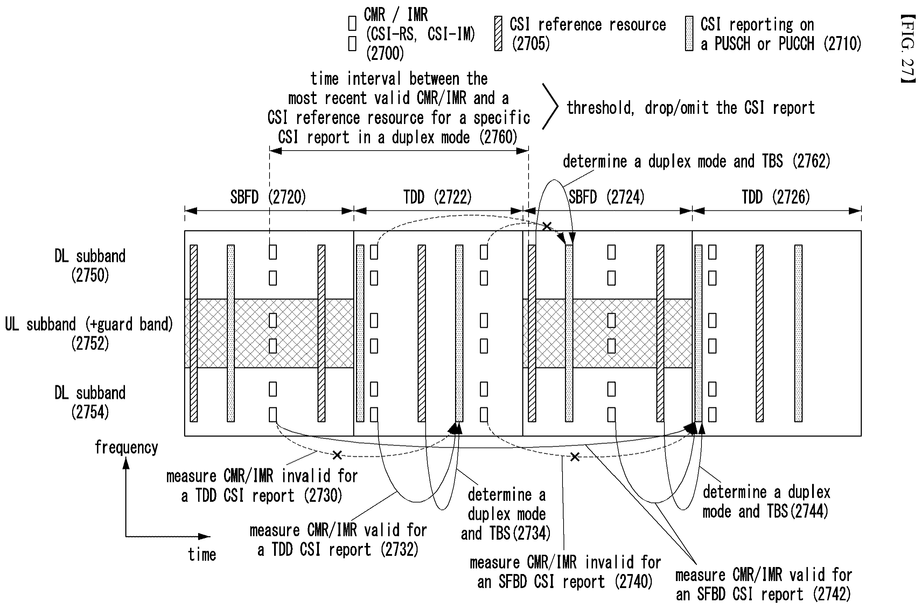

FIG. 27 is a conceptual diagram for describing a case of CSI reporting in an environment where a first operation mode and a second operation mode coexist according to an exemplary embodiment of the present disclosure.

Referring to FIG. 27, a horizontal axis represents time and a vertical axis represents frequency. FIG. 27 illustrates four time periods to describe a case where two operation modes coexist. The four time periods may include a first time period 2720 using the SBFD scheme, a second time period 2722 using the TDD scheme, a third time period 2724 using the SBFD scheme, and a fourth time period 2726 using the TDD scheme. In the following description, the time periods 2720, 2722, 2724, and 2726 will be described using the same names as the corresponding operation modes. For example, since the first and third time period use the SBFD scheme, they will be described separately as 'SBFD 2720' and 'SBFD 2724'. Similarly, since the second and fourth time period use the TDD scheme, they will be described separately as 'TDD 2722' and 'TDD 2726'. Therefore, in the following description, the SBFD 2720 is the first time period and may refer to the time period in which the SBFD scheme is configured as the operation mode.

In each of SBFD 2720, TDD 2722, SBFD 2724, and TDD 2726, a CMR/IMR (CSI-RS, CSI-IM) 2720, CSI reference resource 2705, and CSI report 2710 on a PUSCH or PUSCH may be transmitted.

A frequency band may be divided into a DL subband 2750, UL subband 2752, and DL subband 2754 only in SBFD 2720 and SBFD 2724 among SBFD 2720, TDD 2722, SBFD 2724, and TDD 2726. In this case, the UL subband 2752 may include a guard band as illustrated in the drawing.

Although FIG. 27 illustrates two operation modes, the SBFD scheme and the TDD scheme, as an example, the present disclosure is not limited thereto. For example, in an exemplary embodiment of the present disclosure, the first operation mode may be one of duplex modes such as TDD or FDD, and the second operation mode may be one of the enhanced duplex modes such as SBFD, full-duplex (FD), or IAB DU/MT simultaneous operation mode. In the example of FIG. 27, the first operation mode is TDD (i.e. 2722, 2726), and the second operation mode is SBFD (i.e. 2720, 2724). However, they may be replaced by or changed to the first operation modes and the second operation modes described above. As described above, the second operation mode may include at least one DL subband 2750 and 2754, UL subband 2752, and UL subband 2752, and the UL subband 2752 may include a guard band. As another example, the guard band may be configured/allocated separately.

A CSI reporting operation will be described with reference to FIG. 27.

The base station may configure/allocate at least one CMR/IMR 2700 for channel or interference measurement to the terminal. In addition, the base station may configure/allocate a PUSCH or PSCCH 2710 as an uplink resource for reporting CSI generated based on channel or interference measurement to the terminal. In this case, the terminal may determine a CSI reference resource 2705, which is a basis for CSI generation, according to the method described above. The terminal may determine a TBS based on the number of REs that can be transmitted as data in a slot determined by the CSI reference resource 2705 according to one of the rules described above and use this to derive CSI.

In the example of FIG. 27, it is assumed that an operation mode assumed for a CSI report is determined by an operation mode configured/allocated/indicated at a time overlapping with a CSI reference resource of the CSI report. In actual application, without being limited thereto, and various methods of the first to third exemplary embodiments described above may be applied, and the contents below may also be appropriately changed and applied accordingly.

In the example of FIG. 27, for a CSI report 2734 referring to a CSI reference resource existing within the first operation mode (TDD) period 2722, a TBS may be determined by considering a frequency (time) resource for the first operation mode (2734). In this case, a resource measured in a time period to which the same operation mode (i.e. first operation mode - TDD) is allocated among CMRs and/or IMRs associated with the CSI report may be determined as a valid CMR or IMR (2732). On the other hand, a resource measured in a time period to which a different operation mode (i.e. second operation mode - SBFD) is allocated among CMRs and/or IMRs associated with the CSI report may be determined as an invalid CMR or IMR (2730).

For example, the terminal may be promised/constrained not to reflect measurement values from the invalid CMR and/or IMR when generating CSI. Through this, the accuracy of the corresponding CSI report can be improved.

As another example, the base station may configure the terminal through a higher layer parameter not to reflect the measurement values from the invalid CMR or IMR when generating CSI, or may indicate it to the terminal through physical layer signaling. Through this, the accuracy of the corresponding CSI report can be improved.

As another example, the terminal may report to the base station that measurement values from the invalid CMR or IMR are not reflected when generating CSI. Through this, the base station can predict the accuracy of the corresponding CSI report.

In the examples above, even when the operation mode of CMR or IMR and the operation mode of CSI reference resource are the same (e.g. both exist within the second operation mode (SBFD) period), if a direction assigned to some frequency resources of the CMR and/or IMR and a direction assigned to some frequency resources of the CSI reference resource are different, the terminal (or base station) may determine that the CMR or IMR and CSI reference resource are allocated different operation modes. Here, as an example of the direction assigned to some frequency resources of the CMR and/or IMR, a PRB #1 in an SBFD period occupied by the CMR may be allocated to the DL subband. In addition, as an example of the direction assigned to some frequency resources of the CSI reference resource, a PRB #1 in an SBFD period occupied by the CSI reference resource may be allocated to the UL subband or guard band.

When determining validity of a CMR and/or IMR according to the method described above, if a time interval between a start time of the operation mode period 2724 and the CSI reference resource 2762 is short (e.g. when they belong to the same slot), the most recent valid CMR and/or IMR may exist a previous period 2720 of the same operation mode, and as a result, a time during which CPU(s) are occupied by the corresponding CSI report may become very long (2760). This may significantly reduce the CPU usage efficiency of the terminal, and at the same time, it may mean that the accuracy of the corresponding CSI report may also be low. Therefore, the terminal may omit/drop a CSI report according to one of methods below.

- Method 4A-1: The base station may configure a threshold to the terminal through a higher layer parameter, and the terminal may omit the CSI report if a CPU occupancy time of the CSI report for a specific operation mode is longer than the threshold. Here, the threshold may be configured for each operation mode, taking into account that the accuracy of CSI reporting required for each operation mode may be different. As another example, the threshold may be configured for each CSI report. As another example, the threshold may be configured for each CMR and/or IMR. In this case, the configuration may be performed for a frequency range (e.g. FR1, FR2, FR2-1, FR2-2, etc. presented by 3GPP, BWP, CC, band, or a band combination). In other words, the degree of freedom in system operation may be secured by being limited to a specific frequency resource group. As a result, this can result in increasing the degree of freedom in system operation by configuration for each specific frequency resource group.
- Method 4A-2: The terminal may omit a CSI report if a CPU occupancy time of the CSI report for a specific operation mode is longer than a predetermined threshold. The threshold may be promised for each operation mode or for each CSI report type, considering that the accuracy of CSI reporting required for each operation mode may be different. Here, the CSI report type may mean periodic, semi-persistent, or aperiodic CSI report.

As another example, the threshold may be promised for each type of CMR and/or IMR, considering that the accuracy of CSI reporting required for each operation mode may be different. Here, the type of CMR and/or IMR resource may mean periodic, semi-persistent, aperiodic NZP CSI-RS and/or CSI-IM.

In addition, in the examples above, the frequency range may be FR1, FR2, FR2-1, FR2-2, etc. presented by 3GPP, BWP, CC, band, or band combination. In other words, the degree of freedom in system operation can be secured by being limited to a specific frequency resource group. As a result, this can result in increasing the degree of freedom in system operation by configuration for each specific frequency resource group.

- Method 4A-3: The terminal may report its preferred threshold to the base station, and may determine a threshold to actually apply based on one of the reported threshold or a threshold separately configured by the base station. Thereafter, the terminal may omit a CSI report if a CPU occupancy time of the CSI report for a specific operation mode is longer than the actual threshold. The threshold reported by the terminal may be reported for each operation mode, considering that the accuracy of CSI reporting required for each operation mode may be different. As an example, the threshold reported by the terminal may be reported for each CSI report type, considering that the accuracy of CSI reporting required for each operation mode may be different. Here, the CSI report type may be periodic, semi-persistent, or aperiodic CSI report.

As another example, the threshold reported by the terminal may be reported for each type of CMR and/or IMR, considering that the CSI accuracy required for each operation mode may be different. Here, the type of CMR and/or IMR may be static, semi-persistent, aperiodic NZP CSI-RS and/or CSI-IM.

In addition, in each of the above examples, a frequency range of CSI reporting may be an FR1, FR2, FR2-1, FR2-2, etc. presented by 3GPP, BWP, CC, band, or band combination. In other words, the degree of freedom in system operation can be secured by being limited to a specific frequency resource group. As a result, this can result in increasing the degree of freedom in system operation by configuration for each specific frequency resource group.

In Methods 4A-1 to 4A-3 described above, the condition 'a CPU occupancy time of a CSI report for a specific operation mode is longer than the threshold' is an example for convenience of description, and in actual application, it may be applied as modified to an interval between a CMR and/or IMR associated with a CSI report (e.g. the first symbol of the CMR and/or IMR) and a CSI reference resource of the CSI report, or an interval between a CMR and/or IMR associated with a CSI report (e.g. the first symbol of the CMR and/or IMR) and the most recent CMR or IMR before a CSI reference resource of the CSI report.

As another example in FIG. 27, in case of a CSI report referring to a CSI reference resource 2744 present within the second operation mode period SBFD 2724, the TBS may be determined considering a frequency (time) resource for the second operation mode (2744). In this case, resources measured in a time period to which the same operation mode (i.e. second operation mode - SBFD) is allocated among CMRs and/or IMRs associated with the CSI report may be determined as valid CMRs and/or IMRs (2742). On the other hand, resources measured in a time period allocated to a different operation mode (i.e. first operation mode - TDD) among the CMRs and/or IMRs associated with the CSI report may be determined as invalid CMRs or IMRs (2740).

In the above-described example, even when the operation mode of the CMR and/or IMR and the operation mode of the CSI reference resource are the same (e.g. both of them exist within the second operation mode (SBFD) period), if a direction assigned to some frequency resources of the CMR and/or IMR and a direction assigned to some frequency resources of the CSI reference resource are different, it may be determined that the CMR and/or IMR and the CSI reference resource are allocated different operation modes. For example, the direction assigned to some frequency resources of the CMR and/or IMR may correspond to a case where a PRB #1 within an SBFD period occupied by the CMR is allocated as a DL subband, and the direction assigned to some frequency resources of the CSI reference resource may correspond to a case where a PRB #1 within an SBFD period occupied by the CSI reference resource is allocated as a UL subband or guard band.

In the above-described example, a case where when a CSI reference resource of a CSI report exists within the second operation mode period, some or all of frequency resources of valid CMR and/or IMR 2742 associated with the CSI report are not included in the DL subband 2750 or 2754 allocated to the second operation mode may occur. This may be understood as a case where when a CSI reference resource of a CSI report exists within the second operation mode period, some or all of frequency resources of valid CMR and/or IMR 2742 associated with the CSI report overlap with the UL subband or guard band 2752 allocated to the second operation mode. In this case, the terminal may apply one of methods below to frequency resources among frequency resources of the valid CMR and/or IMR 2742, which are not all included within the DL subband 2750 or 2754 allocated for the second operation mode.

- Method 4B-1: The terminal may be promised/constrained not to generate CSI based on time domain channel measurement for the CMR and/or IMR that satisfies the above conditions. This takes into account that the time domain channel measurement includes channel characteristics for the entire frequency resource occupied by the CMR and/or IMR.
- Method 4B-2: The terminal may be promised to or configured through a higher layer parameter to exclude measurement values of RE, RB, or subband that is not included within the SBFD DL subband among REs, RBs, or subbands (e.g. NZP CSI-RS RB set/group configured in units of 4 RBs) occupied by NZP CSI-RS and/or CSI-I M when generating CSI.
- Method 4B-3: The terminal may be promised to or configured through a higher layer parameter to exclude measurement values of RE, RB, or subband that is included in the SBFD UL subband or guard band among REs, RBs, or subbands (e.g. NZP CSI-RS RB set/group configured in units of 4 RBs) occupied by NZP CSI-RS and/or CSI-I M when generating CSI.
- Method 4B-4: The terminal may be promised to or configured through a higher layer parameter to drop or omit CSI report(s) based on measurement of NZP CSI-RS and/or CSI-IM REs, RBs, or subbands (e.g. NZP CSI-RS RB set/group configured in units of 4 RBs) which are not included within the SBFD DL subband. The CSI report(s) omitted here may be limited to a subband CSI report including the corresponding REs, RBs, or subbands, or may be all CSI reports (e.g. wideband CSI + subband CSI) associated with the corresponding time.
- Method 4B-5: The terminal may be promised to or configured through a higher layer parameter to drop or omit CSI report(s) based on measurement of NZP CSI-RS and/or CSI-IM REs, RBs, or subbands (e.g. NZP CSI-RS RB set/group configured in units of 4 RBs) which are included within the SBFD UL subband or guard band. The CSI report(s) omitted here may be limited to a subband CSI report including the corresponding REs, RBs, or subband, or may be all CSI reports (e.g. wideband CSI + subband CSI) associated with the corresponding time.

For the measurement/reference resources associated with a CSI report in a given duplex operation mode, the terminal may apply at least one of the followings.

Option 1-1 (associated with Option 1): CSI-RS/CSI-IM occasion, which does not have the same duplex mode configured for the associated CSI report, may not be taken into account for the CSI generation of that CSI report.

Option 1-2 (associated with Option 1): CSI-RS/CSI-IM RE/RB/subband, which is overlapped with uplink subband or guard band for SBFD, may not be taken into account for the CSI generation of CSI report configured on the downlink subband for SBFD

Option 2-1 (associated with Option 2): CSI-RS/CSI-IM occasion, which does not have the same duplex mode with that for CSI reference resource of the associated CSI report, may not be taken into account for the CSI generation of that CSI report

Option 2-2 (associated with Option 2): CSI-RS/CSI-IM RE/RB/subband, which is overlapped with uplink subband or guard band for SBFD, may not be taken into account for the CSI generation of CSI reference resource on the downlink subband for SBFD

When actually implementing the base station and/or terminal (e.g. IAB-node, IAB-DU, IAB-MT, repeater, repeater-RU, repeater-MT), the exemplary embodiments described above do not need to be mutually exclusive, and a combination of various exemplary embodiments may be considered. For example, an operation mode for CSI derivation (calculation) may be determined according to the first exemplary embodiment of the present disclosure, and valid slot(s) and/or CSI reference slot(s) may be determined according to the third exemplary embodiment of the present disclosure.

## Fifth embodiment: CPU occupation time calculation method considering SBFD subbands

The fifth exemplary embodiment of the present disclosure provides methods for managing/calculating a CPU occupancy of a terminal when one or more subbands are configured/allocated within the same time resource for a specific operation mode such as SBFD (subband non-overlapping full duplex). Hereinafter, a CPU occupation time calculation method considering SBFD subbands with reference to accompanying drawings.

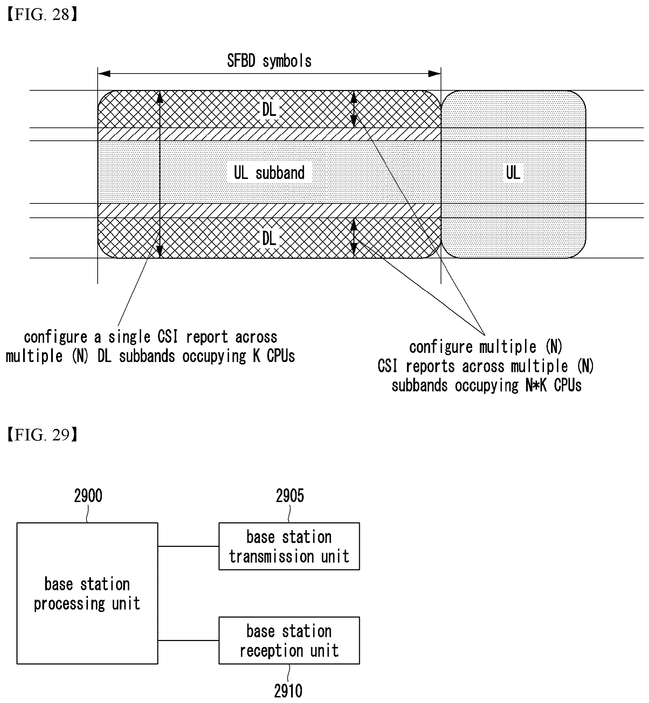

FIG. 28 is a conceptual diagram for describing a subband CSI reporting operation according to an exemplary embodiment of the present disclosure.

Referring to FIG. 28, an example is illustrated in which a base station configures one or more DL subbands to a specific terminal within a certain time resource period for a specific operation mode such as SBFD.

In order to obtain CSI for DL subbands, the base station may configure CSI-RS, CSI-IM, and CSI report including two or more DL subbands to the terminal. This may mean that frequency resource configuration for the CSI-RS, CSI-IM, and CSI report is made across two or more of the allocated DL subbands.

In this case, in an exemplary embodiment, the number of CPUs occupied by the CSI report may be determined as $K$ ($K \geq 1$) according to the CPU occupancy calculation method described above, without being affected by the number N of overlapping DL subbands. As another example, the number of CPUs occupied by the CSI report may be increased to 'N*K' by a constant factor such as doubling, tripling, etc. or increased by one or two, considering not only $K$ ($K \geq 1$) according to the CPU occupancy calculation method described above but also the number N of overlapping DL subbands. In this case, a condition for occupying more CPUs than K may be determined by one of methods below.

1) It may be implicitly determined depending on whether the base station allows the terminal to report different CSI components for each DL subband. Here, the CSI component may be, for example, CQI, PMI, RI, etc.
2) It may be explicitly determined by separate higher layer signaling of the base station.
3) It may be explicitly determined by a separate indicator included in the base station's CSI report indication. Here, the CSI report indication may be, for example, aperiodic CSI reporting.

The base station may configure CSI-RS, CSI-IM, and/or CSI report for each DL subband to the terminal in order to obtain CSI for the DL subbands. This may mean that a frequency resource configuration for CSI-RS, CSI-IM, and/or CSI report is included in only one of the allocated DL subbands. In this case, according to an exemplary embodiment of the present disclosure, the number of CPUs occupied by an individual CSI report may be determined as $K$ ($K \geq 1$) according to the CPU occupancy calculation method described above, without being affected by the number N of overlapping DL subbands. In other words, CPU occupancy for the corresponding operation mode at the corresponding time may be the total number of CPUs occupied by CSI reports for the respective subbands.

If the total number of CPUs required by the terminal is greater than the maximum number of CPUs of the terminal, the terminal may select CSIs to actually report by considering the CSI priority $Pri_{iCSI}(y, k, c, s)$ application method described above, and omit the remaining CSIs. When performing subband CSI reporting, the terminal eliminate ambiguity when selecting (or dropping) CSIs by additionally applying at least one of rules below in addition to the above-described CSI priorities.

Rule 1: CSI of a subband including a frequency resource of a lower index (e.g. PRB, RBG index, etc.) may have a higher priority than CSI of a subband including a frequency resource of a higher index. The opposite case is also possible. For example, CSI of a subband including a frequency resources with a higher index may have a higher priority than CSI of a subband including a frequency resources with a lower index.

Rule 2: In case of CSI reports for two or more subbands for a specific mode (e.g. SBFD, etc.), a priority according to *reportConfigID* is not applied, and CSI including a CQI with a lower (or higher) index among CSIs has a higher priority. Here, not applying the priority according to *reportConfigID* may mean not applying the factor s in Equation 7 below.

[Equation 7]

$$\text{Pri}_{iCSI}(y, k, c, s) = 2 \cdot N_{cells} \cdot M_s \cdot y + N_{cells} \cdot M_s \cdot k + M_s \cdot c + s$$

Rule 3: CSI reports for two or more subbands for the same mode (e.g. SBFD, etc.) may be assumed to have the same priority, and when one of them is dropped, the remaining reports are also dropped.

FIG. 29 is a block diagram illustrating a base station according to an exemplary embodiment of the present disclosure.

Referring to FIG. 29, a base station may include a base station processing unit 2900, a base station transmission unit 2905, and a base station reception unit 2910. The components of FIG. 29 are shown as an exemplary embodiment, and the base station may further include additional component(s) depending on an exemplary embodiment of the present disclosure or intention of a telecommunication service operator.

For example, although not illustrated in FIG. 29, the base station may further include a memory. In addition, the base station may further include wired/wireless interfaces for connection to external devices. In addition, the base station may further include an interface to allow the operator to identify operations of the base station. In addition to the form described above, the base station may include additional component(s) depending on a need of a telecommunication service operator or producer.

The base station processing unit 2900 may perform determination and processing for overall operations of the base station according to the exemplary embodiments of the present disclosure described above. For example, the base station processing unit 2900 may determine an operation mode or control transmission of information related to the determined operation mode to the terminal through higher layer signaling or physical layer signaling. Additionally, if the base station processing unit 2900 has an additional memory, the base station processing unit 2900 may control the information to be stored in the memory. The base station processing unit 2900 may control a reception operation of the base station reception unit 2910 as well as a transmission operation of the base station transmission unit 2905. In particular, the base station processing unit 2900 may configure/indicate CSI reporting and operation mode, and may process CSIs reported by the terminal according to at least one of the methods described with reference to FIGS. 24 to 27.

The base station transmission unit 2905 may transmit data received from the base station processing unit 2900 in downlink under control by the base station processing unit 2900. The base station reception unit 2910 may receive an uplink channel/signal under control by the base station processing unit 2900 and provide it to the base station processing unit 2900.

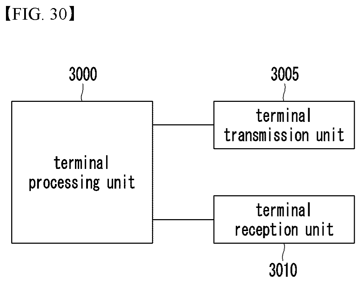

FIG. 30 is a block diagram illustrating a terminal according to an exemplary embodiment of the present disclosure.

Referring to FIG. 30, a terminal may include a terminal processing unit 3000, a terminal transmission unit 3005, and a terminal reception unit 3010. The components of FIG. 30 are shown as an exemplary embodiment, and the terminal may further include additional component(s) according to an exemplary embodiment of the present disclosure or an intention of a telecommunication service operator.

For example, although not illustrated in FIG. 30, the terminal may further include a memory. In addition, the terminal may further include wired/wireless interfaces for connection to external devices. In addition, the terminal may further include an interface to allow a user or the operator to identify operations of the terminal. In addition to the form described above, the terminal may include additional component(s) depending on a need of a telecommunication service operator or producer.

The terminal processing unit 300 may perform determination and processing for overall operations of the terminal according to the exemplary embodiments of the present disclosure described above. For example, the terminal processing unit 3000 may control uplink transmissions and/or downlink receptions according to at least one operation mode among the operation modes described in the present disclosure. In addition, the terminal processing unit 3000 may receive operation mode-related information from the base station through higher layer signaling or physical layer signaling. In addition, if the terminal processing unit 3000 has an additional memory, the terminal processing unit 3000 may control the information to be stored in the memory. The terminal processing unit 3000 may control a reception operation of the terminal reception unit 3010 as well as a transmission operation of the terminal transmission unit 3005. In particular, the terminal processing unit 3000 may generate CSI and report it to the base station based on CSI reporting and operation mode configuration/indication of the base station according to at least one of the methods described with reference to FIGS. 24 to 27.

The terminal transmission unit 3005 may transmit data received from the terminal processing unit 3000 in uplink under control by the terminal processing unit 3000. The terminal reception unit 3010 may receive a downlink channel/-signal under control by the terminal processing unit 3000 and provide it to the terminal processing unit 3000.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a terminal, comprising:

   receiving, from a base station, operation mode configuration information for a first operation mode and a second operation mode;
   receiving, from the base station, resource allocation information for reporting channel state information (CSI) measured based on the operation mode configuration information;
   determining a CSI reference resource based on a preconfigured CSI generation criterion;
   measuring first CSIs received from the base station based on the operation mode configuration information;
   identifying validity of the measured first CSIs; and
   transmitting a CSI report reflecting valid CSI measurement value(s) to the base station based on a result of the identifying,
   wherein the valid CSI corresponds to a case when an operation mode when performing measurement of the first CSIs is equal to an operation mode when reporting CSI based on the CSI reference resource.

2. The method according to claim 1, wherein the first operation mode is one of a subband full duplex (SBFD) mode or a full-duplex (FD) mode, and the second operation mode is one of a time-division duplex (TDD) mode or a frequency-division duplex (FDD).

3. The method according to claim 2, wherein in the first operation mode, the first CSIs are measured in each of one or more subbands.

4. The method according to claim 3, wherein in the transmitting of the CSI report, when only some of the valid CSI measurement value(s) can be reported, valid CSI measurement value(s) to be transmitted are determined based on predetermined priorities.

5. The method according to claim 1, further comprising: receiving, from the base station, first configuration information for configuring at least one of a channel measurement resource (CMR) or an interference measurement resource (IMR),

wherein when the first configuration information indicates the CMR, each of the first CSIs is configured as a non-zero-power (NZP) CSI-reference signal (RS), and when the first configuration information indicates the IMR, each of the first CSIs is configured as a NZP CSI-RS or a zero-power (ZP) CSI-RS.

6. The method according to claim 5, further comprising: excluding invalid CSI measurement value(s) from the CSI report based on the result of the identifying, wherein the invalid CSI measurement value(s) correspond to a case where an operation mode when performing measurement of the CMRs or IMRs is different from an operation mode when transmitting the CSI report based on the CSI reference resource.

7. The method according to claim 5, wherein at least one of the CMRs or IMRs is received periodically, semi-persistently, or aperiodically, and the CSI reports are transmitted to the base station periodically, semi-persistently, or aperiodically.

8. The method according to claim 1, wherein a transport block size (TBS) for the CSI report is determined based on at least one of a subband frequency resource or a subband time resource of an operation mode applied to the CSI reference resource.

9. A method of a base station, comprising:

   transmitting, to a terminal, operation mode configuration information for a first operation mode and a second operation mode;
   transmitting, to the terminal, resource allocation information for receiving a channel state information (CSI) report measured based on the operation mode configuration information;
   transmitting, to the terminal, first CSIs and a CSI reference resource based on the operation mode configuration information; and
   receiving a CSI report from the terminal based on the resource allocation information,
   wherein the first operation mode is one of a subband full duplex (SBFD) mode or a full-duplex (FD) mode, and the second operation mode is one of a time-division duplex (TDD) mode or a frequency-division duplex (FDD).

10. The method according to claim 9, wherein in the first operation mode, the first CSIs are transmitted in each of one or more subbands.

11. The method according to claim 9, further comprising: transmitting, to the terminal, first configuration information for configuring at least one of a channel measurement resource (CMR) or an interference measurement resource (IMR), wherein when the first configuration information indicates the CMR, each of the first CSIs is configured as a non-zero-power (NZP) CSI-reference signal (RS), and when the first configuration information indicates the IMR, each of the first CSIs is configured as a NZP CSI-RS or a zero-power (ZP) CSI-RS.

12. The method according to claim 11, wherein at least one of the CMRs or IMRs is transmitted to the terminal periodically, semi-persistently, or aperiodically, and the CSI reports are received from the terminal periodically, semi-persistently, or aperiodically.

13. A terminal comprising a processor, wherein the processor causes the terminal to perform:

   receiving, from a base station, operation mode configuration information for a first operation mode and a second operation mode;
   receiving, from the base station, resource allocation information for reporting channel state information (CSI) measured based on the operation mode configuration information;
   determining a CSI reference resource based on a preconfigured CSI generation criterion;
   measuring first CSIs received from the base station based on the operation mode configuration information;
   identifying validity of the measured first CSIs; and
   transmitting a CSI report reflecting valid CSI measurement value(s) to the base station based on a result of the identifying,
   wherein the valid CSI corresponds to a case when an operation mode when performing measurement of the first CSIs is equal to an operation mode when reporting CSI based on the CSI reference resource.

14. The terminal according to claim 13, wherein the first operation mode is one of a subband full duplex (SBFD) mode or a full-duplex (FD) mode, and the second operation mode is one of a time-division duplex (TDD) mode or a frequency-division duplex (FDD).

15. The terminal according to claim 14, wherein the processor further causes the terminal to perform: in the first operation mode, measuring the first CSIs in each of one or more subbands.

16. The terminal according to claim 15, wherein the processor further causes the terminal to perform: in the transmitting of the CSI report, when only some of the valid CSI measurement value(s) can be reported, determining valid CSI measurement value(s) to be transmitted based on predetermined priorities.

17. The terminal according to claim 13, wherein the processor further causes the terminal to perform: receiving, from the base station, first configuration information for configuring at least one of a channel measurement resource (CMR) or an interference measurement resource (IMR),
wherein when the first configuration information indicates the CMR, each of the first CSIs is configured as a non-zero-power (NZP) CSI-reference signal (RS), and when the first configuration information indicates the IMR, each of the first CSIs is configured as a NZP CSI-RS or a zero-power (ZP) CSI-RS.

18. The terminal according to claim 17, wherein the processor further causes the terminal to perform: excluding invalid CSI measurement value(s) from the CSI report based on the result of the identifying,
wherein the invalid measurement value(s) correspond to a case where an operation mode when performing measurement of the CMRs or IMRs is different from an operation mode when transmitting the CSI report based on the CSI reference resource.

19. The terminal according to claim 17, wherein the processor further causes the terminal to perform:

receiving at least one of the CMRs or IMRs periodically, semi-persistently, or aperiodically, and
transmitting the CSI reports to the base station periodically, semi-persistently, or aperiodically.

20. The terminal according to claim 13, wherein a transport block size (TBS) for the CSI report is determined based on at least one of a subband frequency resource or a subband time resource of an operation mode applied to the CSI reference resource.

【FIG. 1】

<u>100</u>

L3     radio resource control (RRC) layer    ~110

logical channel   ~115

L2     medium access control (MAC) layer    ~120

transport channel   ~125

L1     physical (PHY) layer    ~130

control/measurement

150

【FIG. 2】

<u>200</u>

frame   ~230

slot ~210

| #0 | $\cdots$ | #($N_{slot}^{subframe, \mu}-1$) | $\cdots$ | #($N_{slot}^{frame, \mu}-1$) |

subframe   ~220

【FIG. 3】

downlink frame #i ~300

uplink frame #i ~310

T_TA ~320

【FIG. 4】

【FIG. 5】

500

SS burst set periodicity (20ms) — 510

SS burst set (half frame) — 515

SS burst — 520

530

SSB #1

SSB #2

540

1 slot

SSB #3 — 550

SSB #4 — 560

239

4 RBs

PBCH

192

182

20 RBs    12 RBs    127 subcarriers    PSS    PBCH    SSS    PBCH

56

47

4 RBs

PBCH

0

subcarrier

OFDM symbol

【FIG. 6】

600

615                                                              610

UE                                                               gNB

S620
Msg1 : preamble

S630
Msg2 : RACH response

S640
Msg3: PUSCH

S650
Msg4: contention resolution

S660
HARQ ACK

【FIG. 7】

frequency

RO #0          RO #1          RO #2                RO #(N-1)

SSB #0         SSB #1         SSB #2       · · ·       SSB
                                                      #(N-1)

time

【FIG. 8】

【FIG. 9】

[FIG. 10]

| CORESET pool ID | serving cell ID | | | | | BWP ID | | |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

. . .

| $T_{(N-2) \times 8+7}$ | $T_{(N-2) \times 8+6}$ | $T_{(N-2) \times 8+5}$ | $T_{(N-2) \times 8+4}$ | $T_{(N-2) \times 8+3}$ | $T_{(N-2) \times 8+2}$ | $T_{(N-2) \times 8+1}$ | $T_{(N-2) \times 8}$ | Oct N |

【FIG. 11】

【FIG. 12】

1215 — | DL symbol | DL-dedicated slot(1200)

1220 — | UL symbol | UL-dedicated slot(1205)

| DL symbol | guard period | UL symbol | mixed slot(1210)

1225      1230      1235

【FIG. 13】

【FIG. 14】

【FIG. 15】

```
                         start

     IAB node receives, from upper IAB node,
    higher layer IAB-MT resource configuration      S1500
       information and higher layer IAB-DU
         resource configuration information

     IAB node receives, from upper IAB node,
     physical layer IAB-MT resource indicator       S1510
    and physical layer IAB-DU resource indicator

         IAB node determines whether to
            use IAB-DU resources                     S1520

                          end
```

【FIG. 16】

【FIG. 17a】

user plane protocol stack

【FIG. 17b】

<u>1750</u>

control plane protocol stack

【FIG. 18a】

<u>1800</u>

user plane protocol stack for CA

【FIG. 18b】

<u>1850</u>

user plane protocol stack for DC

【FIG. 19a】

Case 1: MT Tx / DU Tx (1905)

【FIG. 19b】

Case 2: MT Tx / DU Tx (1905)

reception power → MT    DU ← reception power

interference    interference

1920

【FIG. 19c】

Case 3: MT Tx / DU Rx (1910)

transmission power ← MT    DU ← reception power

interference

【FIG. 19d】

Case 4: MT Rx / DU Tx (1920)

reception power → MT    DU → transmission power

interference

【FIG. 20】

2000

time/frequency/space resources A for operation mode A

time/frequency/space resources B
for operation mode B

— 2005

— 2010

2015

time/frequency/space resources C
for operation mode C

【FIG. 21】

time-frequency resources for TDD operations(2100)

time-frequency resources for enhanced duplex operations(2110)

DL slots/symbols

UL slots / symbols

DL slots/symbols
UL slots/symbols
DL slots/symbols

DL slots/symbols

UL slots / symbols

DL slots/symbols
UL slots/symbols
DL slots/symbols

time

frequency

[FIG. 22]

EP 4 664 783 A1

time-frequency resources
for TDD operations(2200)

time-frequency resources
for FDM/SDM operations(2210)

frequency

IAB-DU operations | IAB-MT operations | IAB-MT operations / IAB-DU operations / IAB-MT operations | IAB-DU operations | IAB-MT operations | IAB-DU and IAB-MT operations

DL slots/symbols

【FIG. 23】

【FIG. 24】

base station
(2400)

Time

CSI request/
configuration for
operation mode set A
(2420)

configuration/activation
/indication of
operation mode set B
(2430)

CSI report for operation
modes belonging to an
intersection of operation mode
A and operation mode B
(2440)

terminal
(2410)

【FIG. 25】

| |
|---|
| A terminal receives CSI report configuration/activation/indication information including CMR/IMR information from a base station |

2500

| |
|---|
| The terminal receives configuration/activation/indication information for one or more operation modes from the base station |

2505

| |
|---|
| The terminal perform CSI reporting when both of 'occasion for operation mode configuration/activation/indication' and 'CMR/IMR occasion' satisfy requirements for a CSI report |

2510

【FIG. 26】

[FIG. 27]

CMR / IMR
(CSI-RS, CSI-IM)
(2700)

CSI reference resource
(2705)

CSI reporting on
a PUSCH or PUCCH (2710)

time interval between the
most recent valid CMR/IMR and a
CSI reference resource for a specific
CSI report in a duplex mode (2760)

threshold, drop/omit the CSI report

determine a duplex mode and TBS (2762)

SBFD (2720)    TDD (2722)    SBFD (2724)    TDD (2726)

DL subband
(2750)

UL subband (+guard band)
(2752)

DL subband
(2754)

frequency

time

measure CMR/IMR invalid for
a TDD CSI report (2730)

measure CMR/IMR valid for
a TDD CSI report (2732)

determine a
duplex mode
and TBS(2734)

measure CMR/IMR invalid for
an SFBD CSI report (2740)

determine a duplex
mode and TBS(2744)

measure CMR/IMR valid for
an SFBD CSI report (2742)

【FIG. 28】

SFBD symbols

DL

UL subband

DL

UL

configure a single CSI report across
multiple (N) DL subbands occupying K CPUs

configure multiple (N)
CSI reports across multiple (N)
subbands occupying N*K CPUs

【FIG. 29】

2900

2905

base station
processing unit

base station
transmission unit

base station
reception unit

2910

【FIG. 30】

3000                                    3005

```
┌─────────────────┐        ┌──────────────────┐
│                 │        │     terminal     │
│    terminal     │────────│ transmission unit│
│ processing unit │        └──────────────────┘
│                 │
│                 │        ┌──────────────────┐
│                 │        │     terminal     │
│                 │────────│  reception unit  │
└─────────────────┘        └──────────────────┘
```
                                        3010

## INTERNATIONAL SEARCH REPORT

| International application No. |
| --- |
| **PCT/KR2024/001885** |

| **A.** | **CLASSIFICATION OF SUBJECT MATTER** |
| --- | --- |

**H04B 7/06**(2006.01)i; **H04W 24/08**(2009.01)i; **H04W 72/231**(2023.01)i; **H04W 72/232**(2023.01)i; **H04B 17/345**(2015.01)i; **H04B 1/401**(2015.01)i; **H04W 24/10**(2009.01)i; **H04W 72/04**(2009.01)i

According to International Patent Classification (IPC) or to both national classification and IPC

| **B.** | **FIELDS SEARCHED** |
| --- | --- |

Minimum documentation searched (classification system followed by classification symbols)

H04B 7/06(2006.01); H04B 17/345(2015.01); H04L 5/14(2006.01); H04W 24/10(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SBFD, FD, TDD, FDD, subband, CSI, CSI-RS, validity, same mode, CMR, IMR

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | QUALCOMM INCORPORATED. Feasibility and techniques for Subband non-overlapping full duplex. R1-2212115, 3GPP TSG RAN WG1, Meeting #111. Toulouse, France. 05 November 2022. See sections 2.6.2, 3.1.2 and 3.3. | 1-20 |
| A | US 2022-0330067 A1 (QUALCOMM INCORPORATED) 13 October 2022 (2022-10-13) See paragraphs [0127]-[0135]; and claim 1. | 1-20 |
| A | CEWIT. Discussion on subband non-overlapping full duplex. R1-2212424, 3GPP TSG RAN WG1 Meeting #111. Toulouse, France. 07 November 2022. See sections 2-7. | 1-20 |
| A | TCL. Potential Enhancement on dynamic/flexible TDD. R1-2208404, 3GPP TSG RAN WG1 #110bis-e meeting. 30 September 2022. See sections 2-4. | 1-20 |
| A | US 2021-0400654 A1 (QUALCOMM INCORPORATED) 23 December 2021 (2021-12-23) See paragraphs [0134]-[0137]; and claim 1. | 1-20 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 June 2024** | **05 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001885**

| Patent document cited in search report | | | Publication date (day/month/year) | Patent family member(s) | | | Publication date (day/month/year) |
|---|---|---|---|---|---|---|---|
| US | 2022-0330067 | A1 | 13 October 2022 | US | 11917444 | B2 | 27 February 2024 |
| US | 2021-0400654 | A1 | 23 December 2021 | CN | 115918014 | A | 04 April 2023 |
| | | | | EP | 4169198 | A1 | 26 April 2023 |
| | | | | US | 11723028 | B2 | 08 August 2023 |
| | | | | WO | 2021-257241 | A1 | 23 December 2021 |

Form PCT/ISA/210 (patent family annex) (July 2022)

**REFERENCES CITED IN THE DESCRIPTION**

**Patent documents cited in the description**

• RE 420